Europäisches Patentamt

(19) European Patent Office

Office européen des brevets

(11) Numéro de publication : **0 459 877 A1**

(12) **DEMANDE DE BREVET EUROPEEN**

(21) Numéro de dépôt : **91401336.2**

(22) Date de dépôt : **23.05.91**

(51) Int. Cl.⁵ : **G06F 13/42, G06F 3/06**

(30) Priorité : **28.05.90 FR 9006592**
**28.05.90 FR 9006593**

(43) Date de publication de la demande :
**04.12.91 Bulletin 91/49**

(84) Etats contractants désignés :
**AT BE CH DE DK ES FR GB GR IT LI LU NL SE**

(71) Demandeur : **COPERNIQUE, SOCIETE ANONYME**
**6 Mail de l'Europe**
**F-78170 La Celle Saint Cloud (FR)**

(72) Inventeur : **Bon, André**
**1, rue Emmanuel Chabrier,**
**F-78330 Fontenay le Fleuri (FR)**
Inventeur : **Chichignoud, Pierre**
**17, rue du Maréchal de Lattre de Tassigny**
**F-95180, Menucourt (FR)**
Inventeur : **Clavelou, Alain**
**25 rue du Dr. Zamenhof,**
**F-92500 Rueil Malmaison (FR)**
Inventeur : **Lachieze, Didier**
**29, rue de Moscou**
**F-75008 Paris (FR)**
Inventeur : **Takhemit, Mohand**
**114, Résidence Elysées II,**
**F-78170 La Celle Saint Cloud (FR)**

(74) Mandataire : **Derambure, Christian et al**
**BUGNION ASSOCIES 55, rue Boissonade**
**F-75014 Paris (FR)**

(54) **Dispositif informatique de transfert de données en mode rafale.**

(57) L'invention concerne un dispositif informatique de transfert de données comprenant un espace parallèle de bus (9) et des cartes électroniques (DEM, DAx, DHx, DPM, DMM/DMC) connectées à ce bus (9), dans lequel au moins chaque carte électronique (DAx, DHx, DPM, DMM/DMC) fonctionnelle qui n'est pas une carte électronique (DEM) uniquement composée de mémoires électroniques comporte des moyens susceptibles de piloter un transfert de données en mode rafale sur l'espace parallèle du bus (9). Ces moyens susceptibles de piloter un transfert de données ont pour fonction : a) de formater chaque transfert de données en au moins un bloc de données, au moins un secteur de données de dimensions constantes et prédéterminées ; b) de vérifier l'intégrité des données de chaque secteur ; c) de piloter chaque transfert de données intégralement à partir d'une carte électronique qui effectue le chaînage des données.

Jouve, 18, rue Saint-Denis, 75001 PARIS

FIG.1

L'invention concerne un dispositif informatique de transfert de données du type comprenant un bus et des cartes électroniques connectées à ce bus et échangeant des données sur un espace parallèle de données du bus.

Un tel dispositif se rencontre dans diverses architectures de systèmes informatiques, par exemple dans un contrôleur d'unités de mémoire de masse reliant au moins un calculateur hôte externe à au moins une unité de mémoire de masse, ou encore un calculateur ou autre.

On connaît déjà de nombreux types de tels dispositifs informatiques de transfert de données et de nombreux types de bus, de cartes électroniques reliées à ce bus et de modes de transfert sur un bus (mode "message", mode "simple mot à mot", mode "pipeline", ...).

On connaît déjà un tel dispositif contrôleur (brevet français FR-2 486 291 au nom de la demanderesse) qui comporte une mémoire tampon électronique à accès rapide et de grande capacité pour contenir en permanence un sous-ensemble des données enregistrées dans les unités de mémoire de masse réalisant ainsi une mémoire cache. Le dispositif connu peut être couplé à plus d'un calculateur externe et à plus d'une unité de mémoire de masse.

Ce dispositif connu est constitué d'un premier bus central bidirectionnel, d'un microprocesseur de commande des transferts, d'une mémoire cache constituée d'un circuit de gestion de mémoire à processeur relié par un second bus à une mémoire électronique "passive" et à une mémoire "active", de moyens de couplage aux calculateurs hôtes externes comprenant des mémoires file d'attente FIFO de faible capacité pour chaque sens de transmission, et de moyens de couplage aux unités de mémoire masse comprenant un circuit formateur, une mémoire FIFO pour chaque sens de transmission et deux circuits adaptateurs pour l'élaboration des signaux de commande des disques.

Les progrès importants de l'informatique imposent maintenant des débits de transferts de données extrêmement importants notamment supérieurs à 1Mo/s. On voit maintenant classiquement des unités de mémoire de masse pouvant travailler à 3Mo/s, et dont les bus de connexion autorisent des débits de 5 ou 10Mo/s ou plus. En particulier, on connaît déjà du brevet US-A-4 570 220 un bus comprenant plusieurs espaces de transfert distincts. Ce bus est maintenant un standart dénommé Multibus II. Il comporte en particulier un circuit intégré de transfert de messages dénommé MPC et un circuit logique central CSM. En pratique les transferts sur ce bus peuvent être effectués jusqu'à 32 Mo/s. Cette vitesse limite est déterminée par la vitesse maximale de transfert des messages qui impose celle des transferts de données.

Parallèlement, à de tels débits, il est nécessaire de pouvoir procurer une protection absolue des données transférées et d'en vérifier la conformité. A ce titre, les utilisateurs exigent une fiabilité totale, même en cas de panne, sur le contenu des données mémorisées dans les unités de mémoire de masse. Or il peut arriver dans les dispositifs connus, notamment tels que celui mentionné ci-dessus, que des erreurs se produisent au transfert et que de telles erreurs ne soient pas détectées.

L'invention vise donc à améliorer les performances d'un tel dispositif de transfert de données tant en vitesse, débit, sûreté des données et caractéristiques des transferts sur le bus, tout en utilisant un bus standard de type connu à espace parallèle de données dont la vitesse de transfert est améliorée.

Plus particulièrement, l'invention a pour objet de proposer un tel dispositif dans lequel :

– les données émises sur le bus peuvent être reçues par plusieurs cartes électroniques simultanément lors d'un seul transfert, par exemple par une carte électronique de mémoires dynamiques formant une mémoire cache du dispositif et par au moins une carte électronique de couplage d'au moins un élément périphérique externe (calculateur, unité de mémoire de masse, ...) au dispositif,

– les données émises sur le bus à la suite les unes des autres peuvent provenir alternativement de plusieurs sources, par exemple d'une carte électronique de mémoires dynamiques formant une mémoire cache du dispositif et d'un élément périphérique externe, notamment une unité de mémoire de masse couplée au dispositif, le chaînage des données émises étant effectué automatiquement sans nécessiter de programmation ni l'exécution de logiciel spécifique,

– L'intégrité des données transférées par l'espace parallèle du bus étant vérifiée de façon sûre à la réception par des vérifications supplémentaires aux vérifications de parités généralement utilisées.

Plus généralement, l'invention a pour objet de proposer un dispositif de transfert des données comprenant un bus de type standard à espace parallèle de données, par exemple un bus synchronne à 32bits de données tel que le bus iPSB de la norme MULTIBUS 11 d'INTEL, et sur lequel les transferts de données sont optimisés et peuvent aller jusqu'à 40 Mégaoctets par seconde (correspondant à la vitesse maximale possible sur l'espace parallèle de données du bus) grâce à un nouveau mode de transfert de données dénommé dans toute la suite mode "rafale". L'invention a donc pour objet de ne pas limiter la vitesse de transfert des données en fonction de la vitesse maximale possible des tranferts de messages.

En particulier, l'invention a pour objet de proposer un tel dispositif qui procure une meilleure sûreté de fonctionnement, notamment une protection absolue des données transférées et une vérification de leur intégrité lors des transferts, par exemple qui soit capable de reconstruire une zone de mémoire cache si l'algorithme de gestion de la mémoire cache est perdu.

Par ailleurs et plus particulièrement, l'invention vise aussi à perfectionner un dispositif contrôleur d'unités de mémoire de masse, et a pour objet :

    – de permettre sa conception et sa réalisation selon une architecture simple, modulaire, avec des composants disponibles sur le marché (bus, processeurs...) ou avec des composants spécifiques en nombre minimum, le nombre de types différents de composants spécifiques étant aussi minimum, et ce tout en conservant, voire en perfectionnant et en complétant, les différentes fonctions connues des dispositifs antérieurs (mémoire cache, pluralité de calculateurs hôtes et d'unités de mémoire de masse, multiplexage des transferts sur le bus central, sauvegarde par effet miroir...),

    – de proposer un tel dispositif contrôleur que l'on puisse configurer rapidement et sans modifications importantes, notamment au niveau du bus central, pour y adapter différents types de calculateurs et/ou d'unités de mémoire de masse nécessitant différentes interfaces, et plus généralement qui offre de meilleures possibilités d'évolution,

    – de proposer un tel dispositif contrôleur qui puisse être maintenu de façon aisée et efficace,

    – d'augmenter les performances en vitesse des transferts de données pour utiliser les unités de mémoire de masse à leur vitesse maximale, notamment en permettant des débits au niveau du bus central supérieurs à 30 Mo/s, par exemple de l'ordre de 40 Mo/s,

    – de fournir de nouvelles fonctions et d'augmenter la puissance de calcul.

Pour ce faire, l'invention propose un dispositif informatique de transfert de données comprenant un bus et des cartes électroniques connectées à ce bus et échangeant des données sur un espace parallèle de ce bus , caractérisé en ce que au moins chaque carte électronique fonctionnelle qui n'est pas une carte électronique uniquement composée de mémoires électroniques comporte des moyens susceptibles de piloter un transfert de données en mode rafale sur l'espace parallèle du bus, et en ce que ces moyens susceptibles de piloter un transfert de données ont pour fonction :

    a) de formater chaque transfert de données en au moins un bloc de données de dimension constante et prédéterminée, comprenant au moins un secteur de données de dimension constante et prédéterminée, chaque secteur de données étant transféré intégralement sans interruption ni division sur le bus au débit maximum admissible par le bus

    b) de vérifier l'intégrité des données de chaque secteur en rajoutant et en contrôlant des données de vérification d'intégrité à chaque secteur

    c) de piloter chaque transfert de données intégralement à partir d'une carte électronique qui effectue le chaînage des données, plusieurs cartes électroniques connectées au bus pouvant recevoir passivement et simultanément les secteurs de données du bloc transférés sur le bus à partir d'au moins une carte électronique.

Ainsi, grâce aux moyens susceptibles de piloter un transfert de données, les données sont transférées au niveau de l'espace parallèle de données du bus à la vitesse maximale admissible sur cet espace parallèle de données, sans que la vitesse de transfert effective des données soit limitée par la vitesse maximale admissible pour les messages. De plus, non seulement on vérifie les parités sur l'espace parallèle de données comme cela est d'usage, mais également, les moyens susceptibles de piloter un transfert de données permettent, au niveau de chaque carte électronique fonctionnelle, de vérifier l'intégrité des données de chaque secteur transféré à la réception. Enfin, une des cartes électroniques fonctionnelles pilotant intégralement le transfert de données, les autres cartes électroniques connectées à l'espace parallèle de données du bus peuvent recevoir passivement les secteurs émis sur le bus sans nécessité d'échange de messages ou de signaux de contrôle. On réalise ainsi un transfert multidestinations à vitesse maximale.

Dans le dispositif informatique selon l'invention, les moyens susceptibles de piloter un transfert de données comprennent un circuit intégré DBC de transfert des données accédant directement à l'espace parallèle de données du bus et dédié au formatage de chaque bloc de données en au moins un secteur et un processeur principal qui les distingue du circuit intégré DBC de transfert des données et qui formate chaque transfert en au moins un bloc. Ainsi, le processeur principal divise chaque transfert de données en blocs, et le circuit intégré DBC de transfert des données divise chaque bloc en secteurs.

Selon l'invention, le dispositif informatique est caractérisé en ce que les moyens susceptibles de piloter un transfert de données comprennent le processeur principal, le circuit intégré de transfert des données et une mémoire tampon associée au circuit intégré de transfert des données, en ce que le processeur principal contrôle le circuit intégré de transfert des données entre chaque bloc de données, en ce que le dispositif comporte des moyens pour charger en mémoire tampon une liste d'adresses et de signaux de contrôle identifiant la nature du transfert et chaque secteur du bloc par une adresse, et en ce que le circuit intégré de transfert des données pilote le transfert de chaque bloc de données sans intervention du processeur principal, secteur par secteur par lecture successive des adresses et signaux de contrôle dans la mémoire tampon, de telle sorte que plusieurs cartes électroniques connectées au bus peuvent recevoir passivement les secteurs de données du bloc transférés sur le bus à partir d'une carte électronique fonctionnelle ou d'une carte électronique de mémoire cache. La mémoire tampon associée au circuit intégré de transfert des données de chaque carte électronique fonctionnelle est utilisée pour stocker :

- les secteurs d'un bloc à transférer,
- la liste d'adresses et de signaux de contrôle identifiant la nature du transfert et chaque secteur du bloc par une adresse. La liste d'adresse et de signaux de contrôle est générée par une carte électronique fonctionnelle de gestion, et est transmise, avant le transfert de chaque bloc dans la mémoire tampon via le circuit intégré de transfert des données de la carte électronique fonctionnelle qui pilote le transfert sous le contrôle de son processeur principal , et en ce que la carte électronique fonctionnelle qui pilote le transfert varie selon la nature du transfert et est déterminée avant le transfert par la carte électronique fonctionnelle de gestion.

Selon l'invention, chaque carte électronique qui effectue des transferts (en émission ou en réception) de données sur le bus est soit une carte électronique de mémoire dynamique directement reliée au bus et formant une mémoire cache à accès direct, soit une carte électronique fonctionnelle comprenant un circuit intégré de transfert des données qui émet ou reçoit toutes les données échangées entre la carte électronique fonctionnelle et le bus en les formatant et, selon l'invention, chaque transfert de données sur le bus est écrit ou lu sur une mémoire cache associée au bus.

La carte électronique fonctionnelle qui pilote le transfert est celle qui émet les données sur le bus ou, si les données sont émises à partir d'une carte électronique de mémoire dynamique formant une mémoire cache à accès direct, une carte électronique fonctionnelle qui reçoit les données s'il en existe une, ou une carte électronique fonctionnelle quelconque dans les autres cas. Selon l'invention, l'adresse identifiant chaque secteur dans la liste d'adresses de signaux de contrôle transmises à la mémoire tampon de la carte qui pilote le transfert, est une adresse mémoire cache localisant le secteur dans une mémoire cache associée au bus. Les deux bits de poids faible de cette adresse mémoire cache lorsqu'elle est chargée en mémoire tampon identifient la nature du transfert et notamment un transfert du type écriture ou lecture sans incréments ou écriture masquée ou lecture avec incréments.

Ainsi, les moyens susceptibles de piloter le transfert de données présent sur chaque carte électronique fonctionnelle, et notamment plus précisemment le circuit intégré DBC de transfert des données de la carte électronique fonctionnelle qui pilote le transfert, gèrent intégralement le transfert sur l'espace parallèle de données du bus. Dès lors, plusieurs cartes électroniques connectées au bus peuvent simplement passivement recevoir des données sans nécessiter pour autant des échanges de messages ou de signaux de contrôle, et ce contrairement à l'art antérieur où un échange de données sur le bus nécessite un échange de messages ou (handshake) permettant la reconnaissance de l'émetteur et du récepteur.

Par ailleurs, les moyens susceptibles de piloter un transfert de données, et notamment le circuit intégré DBC de transfert de données de la carte électronique qui pilote le transfert, formatent chaque secteur de données en deux cycles de transfert : un cycle entrée/sortie comprenant un mot identificateur de transfert (IDT) qui reste constant pour tous les secteurs d'un même bloc et qui permet l'identification de la carte électronique qui émet les données et de la (des) carte(s) électronique(s) qui recoit(vent) les données; et un cycle espace mémoire comprenant les données du secteur à transférer. Et le dispositif selon l'invention comporte des moyens (CSM) pour rendre les deux cycles de transfert indivisibles et effectuer intégralement ces deux cycles sans interruption ni division à la suite l'un de l'autre sur le bus. Ces moyens pour rendre les deux cycles indivisibles sont avantageusement constitués de moyens logiques centralisés sur une carte électronique fonctionnelle.

Selon l'invention, chaque circuit intégré DBC de transfert des données comporte un canal émission et un canal réception indépendants l'un de l'autre, et un registre pour le mot identificateur de transfert IDT dans chacun de ces canaux émission ou réception. Egalement, le cycle entrée/sortie comporte une adresse utilisée pendant le cycle entrée/sortie.

Le dialogue particulier réalisé au niveau du bus dans un dispositif informatique selon l'invention permet également le transfert multidestinations, et assure de pouvoir utiliser l'espace parallèle de données du bus à son débit maximum admissible avec une sureté de fonctionnement parfaite.

Selon l'invention, les moyens susceptibles de piloter un transfert de données, plus précisement le circuit intégré DBC de transfert des données d'une carte électronique fonctionnelle qui émet des données sur le bus, rajoutent à la fin de chaque secteur un mot de vérification CHECKSUM qui est le résultat d'un algorithme de calculs effectués par ces moyens (c'est à dire par ce circuit intégré DBC) lors de l'émission du secteur sur le bus. Selon l'invention, ce mot de vérification CHECKSUM est placé à la fin du cycle espace mémoire après les données. Et le circuit intégré DBC de transfert des données d'une carte électronique fonctionnelle recevant un secteur calcule le mot de vérification CHECKSUM lors de la réception du secteur et, en fin de réception, le compare à celui émis en fin de secteur à l'émission, et le retire du secteur. Cette comparaison permet ainsi de contrôler l'intégrité des données en plus de la vérification habituelle de parité qui est également réalisée.

De même, les moyens susceptibles de piloter un transfert de données, et plus précisemment le circuit intégré DBC de transfert des données d'une carte électronique fonctionnelle qui émet des données rajoutent à chaque secteur un en-tête comportant le numéro du secteur à transférer. Cet en-tête est émis à la suite d'une adresse mémoire cache localisant le secteur dans une mémoire dynamique cache reliée au bus. L'en-tête comporte également un mot d'état du secteur comportant des informations de contrôle relatives au transfert du secteur (date et heure du transfert,...). Et le circuit intégré DBC de transfert des données d'une carte électronique fonctionnelle recevant un secteur compare lors de la réception, le numéro du secteur émis à l'émission avec celui qui est présent dans ou calculé par un processeur de cette carte électronique fonctionnelle recevant le secteur, et supprime l'en-tête du secteur. Ainsi, cette vérification permet également de s'assurer de l'intégrité des données et de la correspondance des données mémorisées avec le numéro du secteur identifié.

Selon l'invention, l'en-tête est placé au début du cycle espace mémoire avant les données. Et les secteurs mémorisés en mémoire cache incluent l'en-tête et le mot de vérification CHECKSUM.

L'invention concerne également l'application des caractéristiques précédentes à un dispositif contrôleur d'unités de mémoire de masse pouvant être connecté à au moins un calculateur hôte et à une pluralité d'unités de mémoires de masse ou à au moins un ensemble d'unités de mémoires de masse de façon à gérer les transferts de données à haut débit -notamment supérieur à un méga-octet par seconde- nécessaires à l'exploitation des données mémorisées sur les unités de mémoire de masse par chaque calculateur hôte externe. Un tel dispositif contrôleur est intercalé généralement entre plusieurs unités de mémoire de masse et plusieurs calculateurs hôtes externes qui partagent les ressources constituées par les unités de mémoire de masse.

L'invention concerne donc également un dispositif contrôleur d'unités de mémoire de masse comprenant des cartes électroniques fonctionnelles qui sont des cartes électroniques de couplage d' éléments périphériques, à savoir des cartes électroniques de couplage de calculateurs hôtes externes et des cartes électroniques de couplage d'unités de mémoire de masse ou d'ensembles d'unités de mémoire de masse, ces cartes électroniques de couplage étant connectées au bus et permettant la connexion des éléments périphériques au dispositif contrôleur, caractérisé en ce que chaque carte électronique de couplage d'un élément périphérique est constituée d'une carte mère directement connectée au bus et gérant les transferts sur le bus, et d'une carte fille définie en fonction des taches spécifiques propres à la carte électronique de couplage et qui est connectée à la carte mère, en ce que les cartes mères de toutes les cartes électroniques de couplage sont toutes identiques, et en ce que chaque carte mère comporte le processeur principal qui formate chaque transfert de données en au moins un bloc et gère le fonctionnement des différents composants de la carte électronique de couplage, le circuit intégré de transfert des données, et la mémoire tampon associée au circuit intégré de transfert de données.

Le dispositif contrôleur selon l'invention est caractérisé en ce qu'il est constitué d'un bus central unique auquel au moins une carte électronique de mémoire cache et des cartes électroniques fonctionnelles sont directement connectées, chaque carte électronique fonctionnellle étant constituée d'une carte mère commune à toutes les cartes électroniques fonctionnelles et d'une carte fille qui est propre à chacune d'entre elles, et en ce que les cartes mères de toutes les cartes électroniques fonctionnelles effectuant des transferts de données sur le bus sont toutes identiques. Selon l'invention, chaque carte électronique de mémoire cache est directement connectée au bus et ne comporte pas, contrairement aux cartes électroniques fonctionnelles de processeur. Bien évidemment, chaque carte électronique de mémoire cache comportera néanmoins sa logique de contrôle et d'accès aux mémoires électroniques. Chaque carte mère comporte au moins un processeur principal de la carte électronique fonctionnelle. Ainsi, chaque carte électronique fonctionnelle comporte une carte mère commune à toutes les cartes électroniques fonctionnelles, et un processeur principal commun pour toutes les cartes électroniques fonctionnelles. Les cartes mères des cartes électroniques d'un dispositif selon l'invention sont directement connectées au bus. De même, les cartes électroniques de mémoire cache sont directement connectées au bus. Chaque carte mère comporte un processeur principal, des mémoires associées au processeur principal, des circuits intégrés, et une mémoire tampon de stockage des données en transit ou d'adresses. Au moins chaque carte électronique de couplage -notamment chaque carte électronique fonctionnelle- comporte un circuit intégré de transfert de données DBC gérant les transferts de données avec le bus central par blocs et secteur par secteur en mode "rafale" sous la commande du processeur principal.

L'invention propose donc un dispositif contrôleur caractérisé en ce qu'il est constitué d'un bus central unique, d'une mémoire cache et de cartes électroniques fonctionnelles à processeur connectées au bus central unique, et en ce que les différents processeurs des cartes électroniques fonctionnelles dialoguent les uns avec les autres par échanges de signaux en mode "message" sur le bus central, tandis que les données sont transférées en mode "rafale" secteur par secteur sur le bus central. Chaque carte électronique fonctionnelle comporte pour ce faire un circuit intégré dédié au transfert des données et un autre circuit intégré de transfert des messages dédié à la gestion du mode "message". Le circuit intégré de transfert des données permet de réaliser des transferts avec plusieurs destinations et avec un chaînage des données en mémoire cache, et un mutiplexage des transferts sur le bus central. Par exemple une écriture ou une lecture peut être effectuée sur ou à partir de plusieurs cartes électroniques fonctionnelles et sur ou à partir de la mémoire cache simultanément par un seul transfert au niveau du bus central. Le circuit intégré de transfert des données permet aussi d'augmenter la vitesse de transfert jusqu'à la vitesse maximale admissible sur l'espace de données du bus sans la limiter à la vitesse maximale de transfert des messages. Et le circuit intégré de transfert des données permet d'effectuer une vérification de l'intégrité des données transférées

Le dialogue en mode "message" ne nécessite aucune mémoire partagée pour la communication. Le circuit intégré de transfert des messages, relié au processeur principal de carte électronique, forme les messages qui contiennent l'adresse de la source, l'adresse de la destination, le type de message et les données. Le bus central comporte un espace parallèle de messages, notamment à 32 bits, propre au dialogue en mode "message".

Le découpage logique d'une opération d'entrée/sortie de mouvement de données ou la gestion des périphériques concernés permet de découper chaque opération en plusieurs transferts. Les mémoires tampons des cartes de couplage sont de dimension fixe. Chaque transfert est donc organisé en blocs correspondant à une fraction de la dimension de ces mémoires tampons. Chaque bloc de données est organisé en secteurs ou "burst" de dimension prédéterminée, et les données sont transmises sur un espace parallèle de données du bus central. La dimension d'un bloc correspondant à celle d'un ensemble de données transférées sur le bus sans intervention d'un processeur principal. La dimension d'un secteur correspond à celle d'un ensemble de données indivisibles lors d'un transfert de bus. Le circuit intégré de transfert des données effectue le découpage des données en secteurs et formate les secteurs avant leur transfert en émission, et effectue les opérations inverses en réception.

Ainsi, selon l'invention, au moins chaque carte électronique de couplage -notamment chaque carte électronique fonctionnelle- comporte un circuit intégré de transfert des messages nécessaires aux communications entre les processeurs principaux des différentes cartes électroniques fonctionnelles. Le bus central comporte un espace parallèle de données accédé par chaque circuit intégré de transfert des données et un espace parallèle de messages distinct de l'espace parallèle de données, et qui est accédé par chaque circuit intégré de transfert des messages.

Le circuit intégré de transfert des données est un circuit intégré spécifique précaractérisé du type ASIC en technologie VLSI.

Le dispositif contrôleur selon l'invention comporte au moins une carte électronique d'administration comprenant au moins un processeur principal d'administration de ce dispositif contrôleur, et qui a pour fonction notamment de réaliser les opérations de démarrage et d'arrêt du dispositif contrôleur, d'effectuer les opérations nécessaires en cas d'anomalies, de détecter les anomalies et de permettre la définition de la configuration du dispositif contrôleur. Selon l'invention, le dispositif contrôleur comporte au moins une carte électronique fonctionnelle de gestion comprenant au moins un processeur principal de gestion du dispositif contrôleur, et qui a notamment pour fonction de superviser les transferts de données sur le bus et/ou de gérer l'organisation d'une mémoire cache. Selon l'invention, la gestion du bus est réalisée par la carte électronique fonctionnelle de gestion et par les moyens logiques de gestion centralisée du bus qui sont supportés soit par la carte électronique de gestion elle-même, soit par une autre carte.

Selon l'invention, la carte électronique d'administration et la carte électronique de gestion peuvent être confondues en une seule et même carte électronique d'administration/gestion dont le processeur principal effectue les différentes fonctions d'administration et de gestion.

Le dispositif contrôleur selon l'invention comporte au moins une carte électronique comprenant au moins un processeur principal de traitement effectuant des traitements sur des données -notamment sur des données stockées dans les unités de mémoire de masse ou dans la mémoire cache- pour le compte d'au moins un calculateur hôte externe.

Le processeur d'administration de la carte électronique d'administration adresse régulièrement une requête à tous les processeurs pour demander leur état et considère en faute et élimine de la configuration tout processeur qui ne répond pas à la requête dans un temps donné.

Selon l'invention, le bus central est un bus standard synchrone acceptant des données sous 32 bits à haut débit, et dont l'interface est gérée par un circuit intégré VLSI standard d'interface MPC supporté par chaque carte mère. Ce circuit constitue le circuit intégré de transfert des messages sur le bus central.

Au moins chaque électronique de couplage -notamment chaque carte électronique fonctionnelle- comporte aussi un circuit intégré ayant pour fonctions :

  - la gestion des adresses et chemins d'adresses de cette carte,

– la gestion de l'initialisation et les microdiagnostics du processeur principal,

– la gestion et la vérification des adresses émise et la signalisation d'erreurs éventuelles.

Selon l'invention, au moins chaque électronique de couplage -notamment chaque carte électronique fonctionnelle- comporte au moins un circuit intégré de gestion de données ayant pour fonctions :

– la gestion des bus de données internes de la carte,

– la protection des chemins de données par parité octet.

Selon l'invention, chaque carte mère comporte un connecteur P2 à un élément périphérique (calculateur hôte externe, unités de mémoire de masse carte d'adaptation, ...) utilisé pour réaliser la connexion avec un tel élément périphérique lorsque la carte électronique fonctionnelle correspondante sert à réaliser la liaison avec cet élément périphérique. Selon l'invention, chaque carte fille est connectée à une carte mère par deux connecteurs :

– un connecteur P3 comprenant les différents bus d'adresses, de données et signaux de contrôle permettant le dialogue avec la carte mère,

– un connecteur P4 véhiculant les signaux de la carte fille destinés à être échangés avec un élément périphérique, ces signaux étant échangés avec l'élément périphérique par l'intermédiaire du connecteur P2 de la carte mère.

Chaque carte mère comporte tous les moyens de connexion de la carte électronique fonctionnelle à processeur correspondante avec le bus central ou avec les éléments extérieurs, la carte fille étant exempte de connecteurs autres que ceux nécessaires à sa connexion avec la carte mère. Chaque carte fille est alimentée en énergie électrique par sa carte mère via ses connecteurs. L'invention concerne aussi un dispositif comportant en combinaison, plusieurs ou toutes les caractéristiques précédentes.

L'invention concerne aussi un dispositif comportant en combinaison, plusieurs ou toutes les caractéristiques précédentes.

D'autres caractéristiques et avantages de l'invention apparaitront à la lecture de la description suivante d'un mode de réalisation d'un dispositif selon l'invention représenté sur les figures annexées qui est, à titre d'exemple non limitatif, un dispositif contrôleur d'unités de mémoire de masse. Dans les figures annexées :

– La figure 1 est une vue synoptique de la structure générale d'un dispositif selon l'invention

– La figure 2 est une vue synoptique illustrant les échanges effectués sur le bus central d'un dispositif selon l'invention

– La figure 3 est une vue synoptique illustrant la structure générale d'une carte mère d'un dispositif selon l'invention

– La figure 4 est une vue synoptique illustrant la structure plus détaillée que la figure 3 d'une carte mère d'un dispositif selon l'invention.

– La figure 5 représente l'aspect général d'une carte électronique fonctionnelle à processeur comprenant une carte mère et une carte fille, d'un dispositif selon l'invention.

– La figure 6 est une vue schématique du format d'un secteur de données transféré sur le bus central d'un dispositif selon l'invention.

– La figure 7 est une vue synoptique de l'interface de liaison d'un circuit DBC de transfert des données d'une carte mère avec les autres composants de la carte mère d'un dispositif selon l'invention.

– La figure 8 est une vue synoptique de détail de la figure 7 de l'interface de liaison des circuits intégrés de transfert des données et de transfert des messages avec le bus central d'un dispositif selon l'invention.

– La figure 9 est un diagramme illustrant les fonctions principales réalisées par le circuit DBC de transfert des données d'une carte mère d'un dispositif selon l'invention.

– La figure 10 est un schéma illustrant les signaux utiles d'un circuit DBC de transfert des données d'une carte mère d'un dispositif selon l'invention.

– La figure 11 est un diagramme illustrant les registres en lecture d'un circuit DBC de transfert des données d'une carte mère d'un dispositif selon l'invention.

– La figure 12 est un diagramme illustrant les registres en écriture d'un circuit DBC de transfert des données d'une carte mère d'un dispositif selon l'invention.

– La figure 13 est une vue synoptique illustrant une opération d'écriture en mémoire cache d'un dispositif selon l'invention.

– La figure 14 est une vue synoptique illustrant une opération de lecture en mémoire cache d'un dispositif selon l'invention.

– La figure 15 est un diagramme temporel illustrant le séquencement du transfert d'un secteur de données sur le bus central d'un dispositif selon l'invention.

– La figure 16 est un diagramme illustrant l'enchaînement des cycles opératoires du côté de la mémoire tampon d'un circuit DBC de transfert des données d'une carte mère d'un dispositif selon l'invention.

– La figure 17 est une vue synoptique illustrant les liaisons des circuits DBM de gestion des données avec les autres composants d'une carte mère d'un dispositif selon l'invention.

– La figure 18 est un diagramme illustrant les fonctions principales réalisées par et la structure générale des circuits DBM de la figure 17.

– La figure 19 est une vue synoptique illustrant l'interface de liaison du circuit DBM des figures 17 et 18 avec le circuit DBC de transfert des données d'un dispositif selon l'invention.

– La figure 20 est une vue synoptique illustrant la liaison d'un circuit ABM de gestion des adresses avec les autres composant d'une carte mère d'un dispositif selon l'invention.

– La figure 21 est un diagramme illustrant les fonctions principales réalisées par et la structure générale du circuit ABM de gestion des adresses d'une carte mère d'un dispositif selon l'invention.

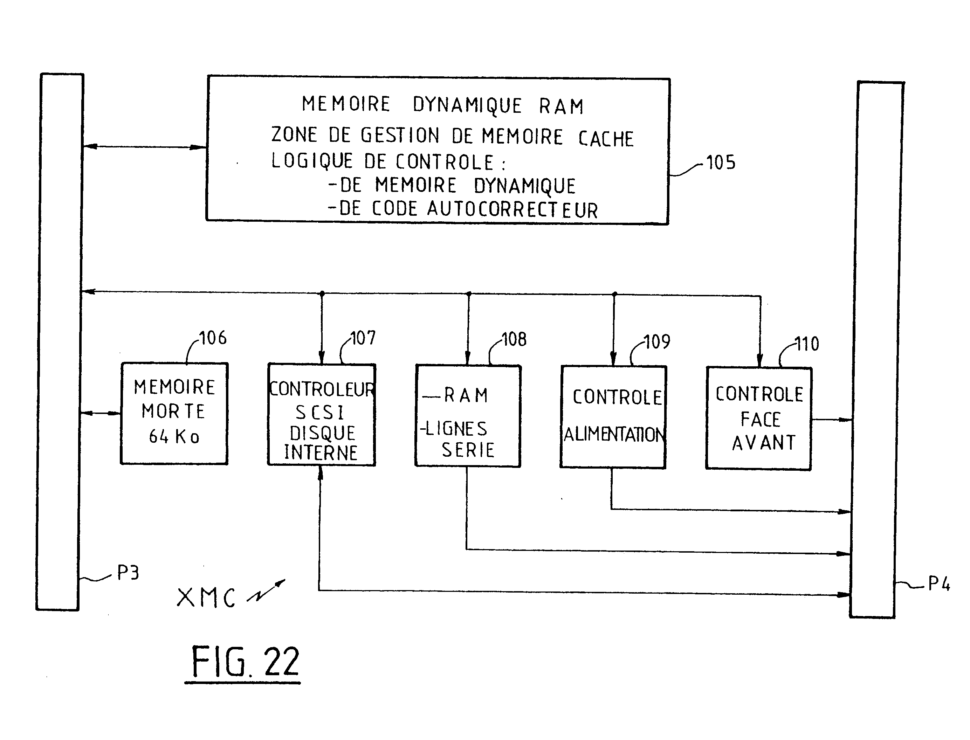

– Les figures 22 à 28 sont des diagrammes fonctionnels illustrant les fonctions principales réalisées par des cartes filles pour réaliser des cartes électroniques fonctionnelles respectivement DMM/DMC de gestion et d'administration ; DHC de couplage avec l'interface d'un DIRAM 32 (marque enregistrée) ; DHS ou DAS de couplage avec une interface de calculateur ou d'unité de mémoire de masse de type connu sous le nom SCSI ("Small Computer System Interface") ; DPM de traitement ; DAI de couplage avec une interface ou d'unités de mémoire de masse de type connu sous le nom IPI3 ("Intelligent Peripheral Interface") ; DAP de couplage avec une interface ou d'unités de mémoire de masse de type connu sous le nom IPI2 ; DHI de couplage avec une interface de calculateur de type connu sous le nom IPI.

– La figure 29 est un diagramme fonctionnel illustrant les fonctions principales d'une carte électronique de mémoire cache DEM d'un dispositif selon l'invention.

Les figures représentent un dispositif 1 contrôleur d'unités 2, 3, 4 de mémoire de masse. Un tel dispositif contrôleur 1 est destiné à être intercalé entre au moins un calculateur hôte 5 externe et une pluralité d'unités de mémoires de masse 2, 4 ou au moins un ensemble 3 d'unités de mémoire de masse de façon à gérer les transferts de données à haut débit notamment entre chaque calculateur hôte externe 5 et chaque unité de mémoire de masse ou lors de l'accès à une mémoire cache de ce dispositif 1. Ces unités de mémoire de masse peuvent être de différentes natures : disques magnétiques, dérouleurs de bandes magnétiques, disques optiques, ...

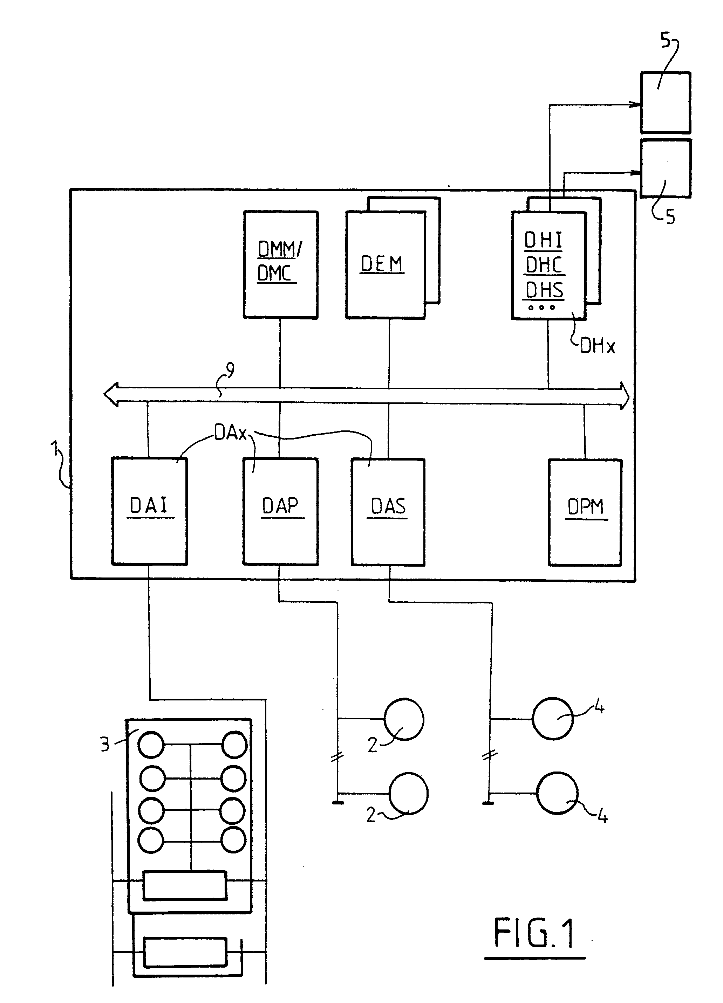

Sur la figure 1, on a représenté des unités de mémoire de masse 2 et 3 du type IPI ("Intelligent Peripheral Interface"). De telles unités de mémoire de masse et leur interface IPI sont déjà connues en elles-mêmes. Il peut s'agir d'unités de disque 2 du type IPI2 connectées sur un même câble relié à une carte de couplage DAP du contrôleur 1, ou d'une armoire 3 d'unités de mémoire du type IPI3 reliée à un câble connecté à une carte de couplage DAI au dispositif contrôleur 1. Des interfaces IPI2 et IPI3 sont également connues en elles-mêmes. Il peut s'agir également d'unités de disque 4 du type SCSI ("Small Computer System Interface") reliées à un câble connecté à une carte de couplage DAS du dispositif contrôleur 1. De telles unités de disque SCSI et leur interface sont également connues en elles-mêmes.

D'autres types d'unités de mémoire de masse et/ou d'interfaces peuvent être utilisés.

Selon l'invention, le dispositif contrôleur 1 d'unités de mémoire de masse 2, 3, 4 comprend des cartes électroniques de couplage d'au moins un élément périphérique 2, 3, 4, 5 (calculateur hôte externe 5 et unités de mémoire de masse 2, 3, 4), ces cartes électroniques de couplage étant connectées à un bus 9 et permettant la connexion dudit élément périphérique au dispositif contrôleur 1, et est caractérisé en ce que chaque carte électronique de couplage comporte au moins un processeur principal 10 qui gère le fonctionnement des différents composants de la carte électronique de couplage et permet le dialogue des différentes cartes électroniques de couplage sur le bus 9 dans un environnement multiprocesseur. Le processeur principal 10 permet de décentraliser toutes les fonctions de gestion du couplage de l'élément périphérique et du transfert avec le bus central 9, au lieu que ces différentes fonctions soient effectuées par un même processeur principal comme dans l'état de la technique. Le processeur principal 10 a aussi pour fonction de contrler le formatage des données en blocs et d'assurer le dialogue entre les cartes pour permettre les transferts des données formatées en mode "rafale" comme cela est décrit ultérieurement. Le dispositif contrôleur 1 selon l'invention est constitué d'un bus central unique 9 et de cartes électroniques toutes connectées soit directement à ce bus central unique 9, soit à une autre carte électronique.

Chaque carte électronique connectée au bus central unique 9 qui doit effectuer les transferts de données avec ce bus central unique 9 est soit une carte électronique dite carte électronique fonctionnelle exécutant des tâches qui lui sont propres et comportant au moins un processeur principal 10, soit une carte électronique DEM composée de mémoires électroniques dynamiques directement connectée au bus central unique 9.

Les cartes électroniques de couplage d'au moins un calculateur hôte externe 5 sont référencées de façon générique par la référence DHx sur les figures. Ainsi, la référence DHx est générique des références DHI, DHC, DHS qui correspondent à différents types de cartes électroniques de couplage de calculateur hôte 5. De même, les cartes électroniques de couplage d'unités de mémoire de masse 2, 3, 4 sont référencées de façon générique par la référence DAx sur les figures. La référence DAx est générique des références DAI, DAP, DAS qui représentent différents types de couplage d'unités de mémoire de masse.

Le dispositif contrôleur 1 selon l'invention est constitué un bus central unique 9 et de cartes électro-

niques DEM, DMM/DMC, DHI, DHC, DHS, DAI, DAP, DAS, DPM, toutes directement connectées à ce bus 9.

Selon l'invention, chaque carte électronique est constituée soit d'une mémoire cache électronique DEM, soit d'une carte électronique fonctionnelle DMM/DMC, DHI, DHS, DHC, DAI, DAP, DAS, DPM exécutant des tâches qui lui sont propres, et au moins chaque carte électronique de couplage DAx, DHx, - notamment toute carte électronique fonctionnelle- est constituée d'une carte mère DMX à processeur gérant les transferts sur le bus central 9, et d'une carte fille XMC, XHC, XDS, XEM, XMI, XSI qui est définie en fonction des taches spécifiques propres à la carte correspondante, et qui est connectée à la carte mère DMX. Selon l'invention, les cartes mères DMX d'au moins toutes les cartes fonctionnelles effectuant des transferts de données sur le bus central 9 sont toutes identiques. Ainsi, une même carte mère DMX commune à toutes ces cartes électroniques fonctionnelles à processeur effectuant des transferts de données sur le bus central 9 permet de réaliser par simple adjonction d'une carte fille spécifique, ces différentes cartes électroniques fonctionnelles nécessaires.

Il s'avère en pratique que les cartes filles XMC, XHC, XDS, XEM, XMI, XSI peuvent être réalisées de façon très simple.

Dans le mode de réalisation représenté sur les figures et selon l'invention, toutes les cartes mères DMX sont identiques, c'est-à-dire qu'une même carte mère DMX commune pour toutes les cartes fonctionnelles est utilisée dans le dispositif contrôleur I selon l'invention.

Ainsi, le dispositif contrôleur 1 selon l'invention est constitué d'un bus central 9 auquel sont connectées au moins une carte de mémoire cache DEM et des cartes électroniques fonctionnelles à processeur DMM/DMC, DHI, DHC, DHS, DAI, DAP, DAS, DPM, chaque carte fonctionnelle étant constituée d'une carte mère DMX commune à toutes les cartes fonctionnelles, et d'une carte fille XMC, XHC, XDS, XEM, XMI, XSI qui est propre à chacune d'entre elles.

Les mémoires RAM de la mémoire cache DEM sont reliées au bus 9 sans l'intermédiaire de circuits intégrés de formatage tels que MPC ou DBC. Les cartes DEM ne comportent pas de moyens (10, 13, DBC) pour formater les données. Elles ne comportent ni processeur principal 10, ni mémoire tampon 13, ni circuits intégrés DBC, MPC, ABM, DBM (via leurs circuits logiques de contrôle habituels).

Les cartes mères DMX des cartes fonctionnelles sont directement connectées au bus central 9. De même, les cartes de mémoire cache DEM sont constituées de cartes mémoires passives dynamiques RAM directement connectées au bus central 9.

Le dispositif contrôleur 1 selon l'invention comprend un bus central 9 unique, mais chacun des cartes électroniques fonctionnelles, notamment chacune des cartes mères DMX de ces cartes électroniques fonctionnelles à processeur comporte ses propres bus internes de données, d'adresses...

Le dispositif contrôleur 1 selon l'invention permet de réaliser essentiellement quatre groupes de fonctions.

Le premier groupe de fonctions dénommées "fonctions hôtes", consiste à permettre le fonctionnement d'éléments hôtes en réalisant pour eux des opérations d'entrée/sortie ou des opérations de traitement de données. Les éléments hôtes sont constitués des calculateurs hôtes externes 5, mais également de cartes électroniques fonctionnelles DPM de traitement internes au dispositif contrôleur 1. Vis-à-vis des calculateurs hôtes externes 5, le dispositif contrôleur 1 inclut des cartes électroniques fonctionnelles de couplage à processeur DHx qui ont pour fonction de présenter vis-à-vis du bus central 9 une interface stable par rapport aux autres cartes du dispositif contrôleur 1, et de masquer les spécificités des calculateurs 5 qui leur sont raccordés en faisant la correspondance entre l'interface présentée par le bus central et l'interface spécifique du calculateur 5 utilisé. Chaque carte électronique DPM de traitement constitue un calculateur interne effectuant des traitements sur des données stockées dans les unités de mémoire de masse 2, 3, 4 couplées au dispositif contrôleur 1 pour le compte des calculateurs hôtes externes 5 couplés au dispositif 1. Ces cartes de traitement DPM peuvent prendre en charge une tâche élémentaire d'application, programmable par l'utilisateur, afin de décharger le calculateur hôte externe 5. Il peut s'agir par exemple de recherches documentaires, de recherches associatives, ... L'insertion de telles cartes de traitement DPM à l'intérieur d'un dispositif contrôleur 1 selon l'invention permet le partage d'une même carte de traitement DPM par plusieurs calculateurs hôtes externes 5, et donc un économie de moyens au niveau de ces calculateurs.

Le deuxième groupe de fonctions réalisées par le dispositif contrôleur 1 selon l'invention est la fonction de mémorisation des données. Cette mémorisation des données est effectuée d'une part sur les différentes unités de mémoire de masse 2, 3, 4 couplées au dispositif contrôleur 1, et d'autre part dans la mémoire cache DEM interne au dispositif contrôleur 1. Vis-à-vis des unités de mémoire de masse 2, 3, 4, le dispositif contrôleur 1 inclut les cartes électroniques de couplage à processeur DAx qui ont pour fonction de présenter vis-à-vis du bus central 9 une interface stable par rapport aux autres cartes du dispositif contrôleur 1, et de masquer les spécificités des unités de mémoire de masse 2, 3, 4 qui leur sont raccordées, en faisant la correspondance entre l'interface présentée par le bus central 9 et l'interface spécifique des unités de mémoire de masse utilisées 2, 3, 4.

Le troisième groupe de fonctions consiste en des fonctions de gestion de la mémoire cache DEM et des transferts au niveau du bus central 9.

Le quatrième groupe de fonctions réalisées par le dispositif contrôleur 1 selon l'invention est constitué de fonctions d'administration incluant la définition de la configuration générale du dispositif 1, sa mise en service ou son arrêt, sa surveillance et la réalisation des opérations nécessaires en cas d'anomalies.

Sur la figure 1, les différentes cartes fonctionnelles représentées permettent la réalisation de ces différentes fonctions. Chacune de ces cartes fonctionnelles à processeur représentée sur la figure 1 (c'est-à-dire toutes les cartes fonctionnelles sauf la carte de mémoire cache DEM) est donc en pratique contitué d'une carte mère DMX et d'une carte fille correspondante. Les différentes cartes fonctionnelles à processeur représentées sont les suivants :

- DMM/DMC : carte fonctionnelle à processeur de gestion dont la fonction est de gérer l'organisation de la mémoire cache et de superviser les transferts de données, et carte fonctionnelle à processeur d'administration qui sert à l'ordonnancement général des opérations de démarrage et d'arrêt, qui effectue les actions nécessaires en cas d'anomalie, et qui permet de définir la configuration. En pratique, ces deux cartes fonctionnelles ont été regroupées en une seule, c'est-à-dire réalisées avec une seule carte mère DMX et une seule carte fille XMC représentée à la figure 22 et décrite plus en détail ultérieurement.

- DHI : carte fonctionnelle à processeur de couplage d'un calculateur hôte externe 5 selon l'interface IPI3.

- DHC : carte fonctionnelle à processeur de couplage d'un calculateur hôte externe selon l'interface spécifique au dispositif contrôleur DIRAM 32 (marque déposée).

- DHS : carte fonctionnelle à processeur de couplage d'un calculateur hôte externe 5 selon l'interface SCSI.

- DAI : carte fonctionnelle à processeur de couplage d'unités de disque 3 selon l'interface IPI3.

- DAP : carte fonctionnelle à processeur de couplage d'unités de disque 2 selon l'interface IPI2.

- DAS : carte fonctionnelle à processeur de couplage d'unités de disque 4 selon l'interface SCSI.

- DPM : carte fonctionnelle à processeur de traitement.

Cette liste n'est bien évidemment pas exhaustive et c'est une particularité du dispositif contrôleur 1 selon l'invention de pouvoir offrir des possibilités de configuration et de raccordement d'éléments périphériques externes quasiment sans limite.

Selon l'invention, chaque carte mère DMX d'une carte fonctionnelle comporte un processeur principal 10, des mémoires 11 de données et 12 d'instructions associées au processeur principal 10, des circuits intégrés ABM, DBM, DBC, MPC, et une mémoire tampon 13 de stockage des données en transit ou d'adresses. Egalement, la carte mère DMX comporte un microcontrôleur 14 qui permet notamment de gérer la configuration du processeur principal de chaque carte mère DMX, et le démarrage et les microdiagnostics des différents composants de cette carte mère DMX.

Ainsi, l'invention propose un dispositif contrôleur 1 caractérisé en ce qu'il est constitué d'un bus central 9, d'une mémoire cache DEM, et de cartes fonctionnelles à processeur DMM/DMC, DHI, DHC, DHS, DAI, DAP, DAS, DPM connectées au bus central 9, et en ce que les différents processeurs 10 des cartes fonctionnelles dialoguent les unes avec les autres par échanges de signaux en mode "message" sur le bus central 9, tandis que les données sont transférées en mode "rafale" secteur par secteur sur le bus central 9. Le mode message d'échanges de signaux est un mode de communication dont les caractéristiques générales sont connues en elles-mêmes.

Le dispositif selon l'invention est caractérisé en ce que au moins chaque carte électronique DAx, DHx, DPM, DMM/DMC, fonctionnelle qui n'est pas une carte électronique DEM uniquement composée de mémoires électroniques comporte des moyens 10, 13, DBC susceptibles de piloter un transfert de données en mode rafale sur l'espace parallèle du bus 9, et en ce que ces moyens 10, 13, DBC susceptibles de piloter un transfert de données ont pour fonction :

a) de formater chaque transfert de données en au moins un bloc de données de dimension constante et prédéterminée, comprenant au moins un secteur de données de dimension constante et prédéterminée, chaque secteur de données étant transféré intégralement sans interruption ni division sur le bus 9 au débit maximum admissible par le bus

b) de vérifier l'intégrité des données de chaque secteur en rajoutant et en contrôlant des données de vérification d'intégrité à chaque secteur

c) de piloter chaque transfert de données intégralement à partir d'une carte électronique qui effectue le chaînage des données, plusieurs cartes électroniques connectées au bus pouvant recevoir passivement et simultanément les secteurs de données du bloc transférés sur le bus 9 à partir d'au moins une carte électronique.

Ces moyens 10, 13, DBC comprennent un circuit intégré DBC de transfert des données dédié au formatage de chaque bloc de données en au moins un secteur et un processeur principal 10 qui est distinct du circuit intégré DBC de transfert des données et qui formate chaque transfert en au moins un bloc. Plus précisément, selon l'invention, les moyens 10, 13, DBC d'une carte électronique fonctionnelle qui pilote le transfert incluent un processeur principal 10, un circuit intégré DBC de transfert des données et une mémoire tampon 13 associée au circuit intégré DBC

de transfert des données. Le processeur principal 10 contrôle le circuit intégré DBC de transfert des données entre chaque bloc de données. Ce dispositif selon l'invention comporte des moyens DMM pour charger en mémoire tampon 13 une liste d'adresses et de signaux de contrôle identifiant la nature du transfert et chaque secteur du bloc par une adresse, et le circuit intégré DBC de transfert des données pilote le transfert de chaque bloc de données sans intervention du processeur principal, secteur par secteur par lecture successive des adresses et signaux de contrôle dans la mémoire tampon 13.

La taille de chaque secteur et la taille de chaque bloc est une constante d'un dispositif selon l'invention, mais ces valeurs sont paramétrables à l'avance. La taille d'un secteur est classiquement de 512 octets et la taille d'un bloc peut varier entre 2 et 8 kilos-octets.

La liste d'adresses et de signaux de contrôle, dénommée "mapping", est générée par une carte électronique fonctionnelle DMM de gestion et transmise avant le transfert de chaque bloc dans la mémoire tampon 13 via le circuit intégré DBC de la carte électronique fonctionnelle qui pilote le transfert sous le contrôle de son processeur principal 10. La carte électronique fonctionnelle qui pilote le transfert varie selon la nature du transfert et est déterminée avant le transfert par une carte électronique fonctionnelle DMM de gestion. Dans le dispositif selon l'invention, le choix de la carte électronique qui pilote le transfert est effectué par le processeur principal 10 de gestion de la carte électronique DMM de gestion, qui est programmé à cet effet. Selon l'invention le programme de ce processeur de gestion est tel que la carte électronique fonctionnelle qui pilote le transfert est celle qui émet les données sur le bus 9 ou, si les données sont émises à partir d'une carte électronique de mémoire dynamique DEM formant une mémoire cache à accès direct, une carte électronique fonctionnelle qui reçoit les données s'il en existe une, ou une carte électronique fonctionnelle quelconque dans les autres cas. L'adresse identifiant chaque secteur est une adresse localisant le secteur dans une mémoire cache DEM associée au bus 9. Selon l'invention, chaque transfert de données sur le bus 9 est écrit ou lu sur une mémoire cache DEM associée au bus 9. Chaque carte électronique qui effectue des transferts (en émission ou en réception) de données sur le bus 9 est soit une carte électronique de mémoire dynamique DEM directement reliée au bus 9 et formant une mémoire cache à accès direct, soit une carte électronique fonctionnelle DAx, DHx, DpM, DMM/DMC comprenant un circuit intégré DBC de transfert des données qui émet ou reçoit toutes les données échangées entre la carte électronique et le bus en les formatant. Chaque carte électronique fonctionnelle comporte un processeur principal 10 et un circuit intégré MPC de transfert des messages nécessaires aux communications entre les processeurs principaux 10 des différentes cartes électronique fonctionnelles, le circuit intégré MPC de transfert des messages étant distinct du circuit intégré DBC de transfert des données.

Le dispositif selon l'invention est caractérisé en ce que chaque carte électronique fonctionnelle comporte une mémoire tampon 13 associée au circuit intégré DBC de transfert des données, et en ce que cette mémoire tampon 13 est utilisée pour stocker : les secteurs d'un bloc à transférer, et la liste d'adresses et de signaux de contrôle identifiant la nature du transfert et chaque secteur du bloc par une adresse.

Selon l'invention, les moyens 10, 13, DBC formatent chaque secteur de données en deux cycles de transfert : un cycle entrée/sortie 79 comprenant un mot identificateur de transfert IDT qui reste constant pour tous les secteurs d'un même bloc et qui permet l'identification de la carte électronique qui émet les données et de la(des) carte(s) électronique(s) qui reçoi(ven)t les données ; et un cycle espace mémoire 80 comprenant les données du secteur à transférer. Le dispositif selon l'invention comporte des moyens CSM pour rendre les deux cycles de transfert indivisibles et effectuer intégralement sans interruption ni division à la suite l'un de l'autre sur le bus 9. Le cycle entrée/sortie comporte une adresse de cycle entrée/sortie 90. Le circuit intégré DBC de transfert des données place un en-tête 75 au début du cycle espace mémoire 80 avant les données 81. Le circuit intégré DBC de transfert de données place un mot de vérification CHECKSUM 76 à la fin du cycle espace mémoire 80 après les données 81.

Selon l'invention, au moins chaque carte de couplage, -notamment chaque carte fonctionnelle à processeur-, c'est-à-dire chaque carte mère DMX d'une telle carte, comporte un circuit intégré DBC de transfert des données gérant les transferts de données avec le bus central 9 par blocs en mode "rafale" c'est-à-dire secteur par secteur. Egalement, chaque carte fonctionnelle à processeur, c'est-à-dire chaque carte mère DMX, comporte un circuit intégré MPC de transfert des messages nécessaires aux communications entre les processeurs 10 principaux des différentes cartes fonctionnelles à processeur. Ainsi, chaque carte fonctionnelle à processeur comporte un circuit intégré DBC dédié aux transferts des données et un autre circuit intégré, distinct du précédent, MPC de transfert des messages dédié à la gestion du mode message. Le circuit intégré DBC de transfert des données permet de réaliser un multiplexage des transferts sur le bus central 9. Par exemple, une écriture ou une lecture peut être effectuée sur plusieurs cartes fonctionnelles et sur ou à partir de la mémoire cache DEM simultanément par un seul transfert au niveau du bus central 9. Egalement, on peut écrire les données simultanément sur deux cartes électroniques DEM synchronisées de mémoire cache, par exemple lorsque ces données ne sont pas mémorisées sur les unités de mémoire de masse. On augmente ainsi beaucoup la vitesse d'écriture en assurant la protection des données.

Selon l'invention, le bus central 9 comporte un espace parallèle de données accédé au niveau de chaque carte mère DMX par le circuit intégré DBC de transfert des données, et un espace parallèle de messages, distinct de l'espace parallèle de données, et qui est accédé au niveau des cartes mères DMX par le circuit intégré MPC de transfert des messages. En pratique, cette séparation physique et logique des opérations d'échanges de messages entre les processeurs et de transferts des données sur le bus central 9 permet de réaliser au niveau du circuit intégré DBC de transfert des données le multiplexage de ces transferts, un chaînage spécifique plus sûr des données mémorisées dans la mémoire cache DEM, et un formatage des secteurs transférés sur le bus central 9 de façon à réaliser une protection absolue des données transférées et une vérification de leur conformité lors de chaque transfert, et ce en utilisant un bus central 9 d'un type classique connu en lui-même qui ne permet pas à lui seul la réalisation de telles fonctions. Ainsi, sur le mode de réalisation préférentiel représenté sur les figures, le bus central 9 utilisé est le bus iPSB du MULTIBUS II commercialisé par INTEL. Il s'agit d'un bus standard dont le fonctionnement est illustré par le brevet US-A-4570220. Le bus iPSB est un bus 32 bits de données synchrone avec protocole de communication du type "hand-shake", multiprocesseur avec arbitrage, de bande passante de 40 Mo/s en mode "rafale" avec protection par parité sur les adresses, données et signaux de contrôles, interruption par messages, protocole de passage de messages, et fonctions centralisées logique dans un circuit CSM ("Central Service Module") connu en lui-même. Les différentes fonctions logiques du CSM tel qu'il est défini dans la norme MULTIBUS II peuvent être réparties sur les différentes cartes électroniques fonctionnelles à processeur et/ou au moins pour partie regroupées sur une carte indépendante rajoutée en plus des cartes électroniques à processeur et de la mémoire cache. Le bus iPSB 9 est un bus sur lequel adresses et données sont multiplexées et comporte quatre espaces d'adressage : un espace de données, un espace de messages, un espace entrée/sortie, et un espace de configuration dénommé "interconnect". Le circuit intégré DBC de transfert des données selon l'invention diffuse les blocs de données secteur par secteur sur l'espace de données du bus iPSB 9. Le circuit intégré MPC de transfert des messages selon l'invention est le circuit d'interface MPC ("Message Passing Coprocesseur") connu en lui-même et gère l'espace de messages du bus iPSB du MULTIBUS II.

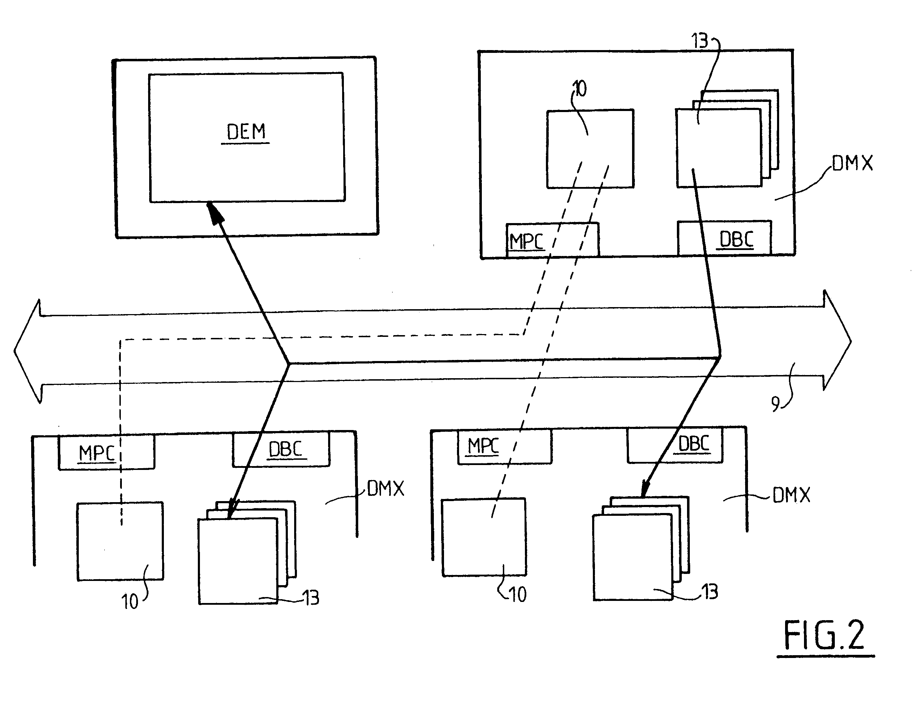

La figure 2 illustre la façon dont le dialogue entre les processeurs en mode "message" et le transfert des données en mode "rafale" sont séparés dans un dispositif contrôleur 1 selon l'invention. Sur cette figure, les pointillés représentent les échanges de signaux en mode "message" entre les différents processeurs, et les traits pleins représentent les transferts de données. On a représenté une carte réalisant une carte de mémoire cache DEM, et trois cartes mères DMX incorporant chacune leur circuit intégré MPC de transfert des messages, leur circuit intégré DBC de transfert des données, leur processeur principal 10, et leur mémoire tampon 13. Les échanges de signaux en mode "message" réalisés sur le bus iPSB 9 du MULTIBUS II peuvent s'effectuer à 32 Mo/s. Les transferts de données sur le bus iPSB 9 du MULTIBUS II en mode "rafale" peuvent être effectués à 40 Mo/s grâce à l'utilisation du circuit intégré DBC de transfert des données spécifique.

Selon l'invention, chaque carte électronique fonctionnelle comporte une mémoire tampon 13 associée au circuit intégré DBC de transfert des données et, pour un transfert de données sur le bus 9, la carte électronique DMM de gestion génère, pour chaque bloc de secteurs, une liste d'adresses et de signaux de contrôle ou "mapping" identifiant la nature du transfert et concernant les différents secteurs à transférer sur le bus 9, cette liste étant transmise à l'une des cartes électroniques fonctionnelles qui pilote le transfert des données, et dont le circuit intégré DBC de transfert des données lit successivement dans sa mémoire tampon 13, la liste d'adresses et de signaux de contrôle sans intervention du processeur principal 10, plusieurs cartes électroniques connectées au bus pouvant recevoir passivement les secteurs de données du bloc transférés sur le bus 9 à partir d'une carte électronique fonctionnelle ou d'une carte électronique de mémoire cache DEM. La carte électronique fonctionnelle qui pilote le transfert des données et reçoit la liste d'adresses et de signaux de contrôle identifiant le transfert est celle qui émet des données sur le bus 9 lors d'un transfert de données incluant une émission de données sur le bus 9 à partir d'une telle carte.

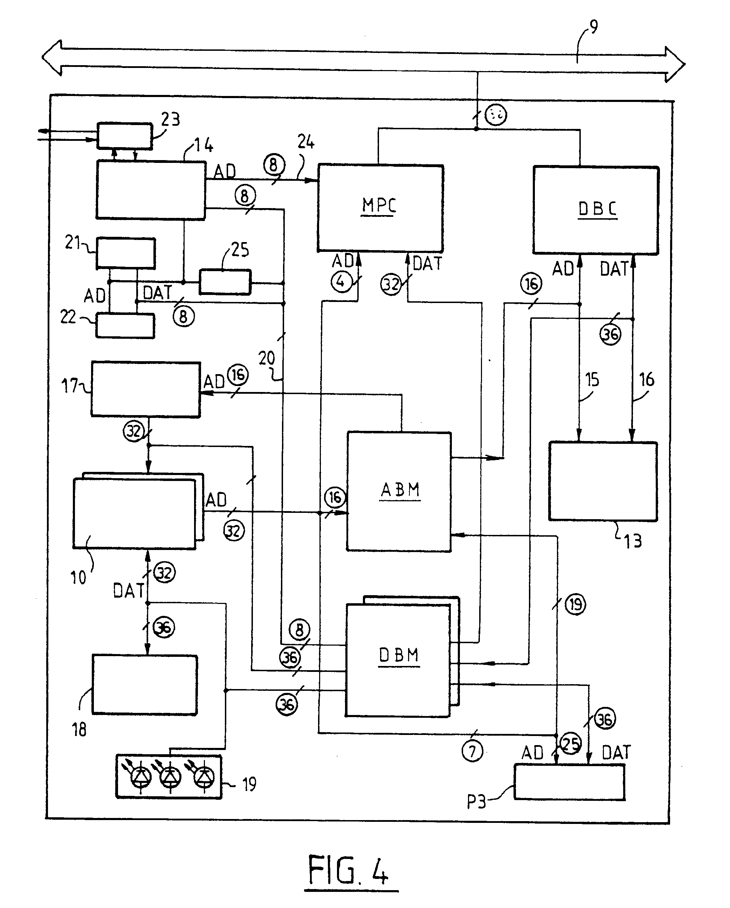

La figure 4 illustre de façon plus détaillé la structure d'une carte mère DMX selon l'invention. Celle-ci comporte un circuit intégré MPC de transfert de messages, de type connu, constitué par le circuit d'interface MPC connu du bus iPSB (norme MULTIBUS II d'INTEL) constituant le bus central 9. Ce circuit intégré MPC de transfert de messages est relié au connecteur P1 qui relie la carte mère DMX au bus central 9. En parallèle à ce connecteur P1, est relié le circuit intégré DBC de transfert des données. Ce circuit intégré DBC est lui-même relié à une mémoire tampon 13 de stockage des données en transit ou d'adresses par un bus d'adresses 15 et un bus de données 16. Cette mémoire tampon 13 permet un contrôle du flux minimum des données circulant entre le bus central 9 et les bus externes des calculateurs hôtes externes 5 ou des unités de mémoire de masse 2, 3, 4.

Une carte mère DMX du dispositif 1 selon l'invention comporte aussi un circuit intégré ABM de gestion d'adresses et un circuit intégré DBM de gestion de données. Ces deux circuits intégrés permettent de gérer les adresses et les données au niveau interne de la carte fonctionnelle à processeur considérée. Ainsi, le circuit intégré ABM de gestion d'adresses a pour fonctions :

- la gestion des adresses et des chemins d'adresses sur les bus d'adresses internes à la carte mère DMX,

- la gestion de l'initialisation et des microdiagnostics du processeur principal 10 de la carte mère DMX,

- la gestion et la vérification des adresses émises sur les bus d'adresses et la signalisation d'erreur éventuelle.

Le circuit intégré DBM de gestion des données a pour fonctions :

- la gestion des bus de données internes de la carte mère DMX,

- la protection des chemins de données par parité octet.

Le processeur principal 10 est muni également de deux mémoires RAM, à savoir une mémoire 11 d'instructions et une mémoire 12 de données. Ces mémoires 11, 12 sont des mémoires RAM statiques accédées par le microprocesseur central 10. La mémoire 11 d'instructions peut être organisée en deux bancs de mémoires RAM statiques entrelacés de manière à permettre l'accès à deux mots consécutifs sans cycle d'attente.

La mémoire d'instructions 11 supporte le mode de communication connu sous le nom de mode "BURST" du processeur principal 10, géré intégralement par le circuit intégré ABM de gestion d'adresses, ce qui lui permet d'opérer avec un cycle d'attente sur le premier accès, et sans cycle d'attente sur les cycles suivants en mode "BURST". Pour ce faire, le circuit intégré ABM de gestion d'adresses possède différentes options qui lui permettent de travailler avec une mémoire d'instructions en simple ou double banc, avec un nombre programmable de cycles d'attente. Dans le circuit ABM de gestion d'adresses, chaque banc de mémoire possède un compteur à 8 bits chargé sur le premier cycle du transfert du secteur.

La mémoire d'instructions 11 est connectée sur le bus d'instructions du processeur principal 10 et est vue dans l'espace d'instructions de ce processeur principal 10. Elle est également vue dans l'espace de données de ce processeur principal 10 pour permettre l'initialisation du code d'exploitation au démarrage de la carte mère DMX, lors du chargement des micrologiciels par le processeur d'administration. Les accès à la mémoire d'instructions 11 par le bus de données se font en mode simple.

La mémoire d'instructions 11 du processeur principal 10 est aussi accédée par le microcontrôleur 14 pour permettre le chargement des microdiagnostics. Pour ce faire, le microcontrôleur 14 possède un chemin de son bus de données (8 bits) vers la mémoire d'instructions 11. Ce chemin est intégré dans le circuit intégré DBM de gestion de données. Ainsi, le microcontrôleur 14 est relié au circuit intégré DBM de gestion des données par un bus 20 à 8 bits . Il n'y a pas de chemin d'adresses pour les accès du microcontrôleur 14 à la mémoire d'instructions 11 du processeur principal 10, l'adressage étant géré par les compteurs du circuit intégré ABM de gestion d'adresses. Le chargement du code d'instructions du processeur principal 10 s'effectue à partir de l'adresse 0, suite à une réinitialisation de la carte mère DMX. La mémoire d'instructions 11 du processeur principal 10 est également accessible en lecture par le microcontrôleur 14, ce qui permet à celui-ci d'effectuer les microdiagnostics de cette mémoire d'instructions avant le chargement des instructions.

Le processeur principal 10 peut être constitué d'un microprocesseur AMD 29000 connu en lui-même dont les caractéristiques principales sont les suivantes :

- microprocesseur à 32 bits et architecture RISC ("Reduced Instructions Set Computer")

- 192 registres internes d'usage général

- 115 instructions

- vitesse de 25 Mhz avvec une puissance de l'ordre de 17 Mips

- MMU ("Memory Management Unit") interne

- mémoire cache de branchement

- horloge interne

- bus de données et bus d'instructions séparés

- architecture dite "pipeline" à 4 niveaux (recherche d'instructions, décodage, exécution et réécriture en registre)

- transfert possible en modes connus sous le nom de "burst" et "pipeline"

- possibilité d'usage en multiprocesseur

- coprocesseur arithmétique du type AMD 29027

- contrôle des sorties et surveillance par un autre processeur.

La mémoire de données 12 du processeur principal 10 stocke les données nécessaires au microprogramme, et est utilisée pour la pile du processeur principal 10. Cette mémoire de données 12 est connectée directement sur le bus d'adresses et de données du processeur principal 10, seuls les accès en 32 bits étant supportés par cette connexion en lecture et écriture. Les accès en octets ou en mots sont effectués par logiciels grâce aux instructions "EXTRACT" et "INSERT" du processeur principal 10.

Le microcontrôleur 14 permet de gérer l'espace "interconnect" du bus iPSB du MULTIBUS II constituant le bus central 9. Ce microcontrôleur 14 peut être du type INTEL 8032. Une mémoire REPROM 21 lui est associée et comprend les registres non modifiables de l'espace "interconnect", ainsi que la partie de microprogramme du processeur principal 10 qui lui est chargée au démarrage de la carte mère DMX (microdiagnostic et démarrage). Cette mémoire REPROM 21 est vue dans l'espace de données du microcontrôleur 14. Elle contient également le microprogramme du microcontrôleur 14 et est donc également vue dans l'espace programme de ce microcontrôleur. Une mémoire EEPROM 22 contenant la partie modifiable des registres de l'espace "interconnect" est également associée au microcontrôleur 14. Cette mémoire 22 est vue dans l'espace de donnnées du microcontrôleur 14.

Le microcontrôleur 14 est également relié à un boîtier 23 de lignes asynchrones connecté sur le port série de ce microcontrôleur 14 pour permettre le dialogue de l'utilisateur avec ce microcontrôleur 14 ou avec le processeur principal 10.

Le microprogramme du microcontrôleur 14 est entièrement résidant dans la mémoire REPROM 21. La mémoire RAM utilisée par le microcontrôleur 14 est entièrement intégrée à ce microcontrôleur 14. Le chargement du microprogramme du processeur principal 10 est effectué lors de l'initialisation de la carte mère DMX au démarrage. Le microcontrôleur 14 charge à partir de la mémoire REPROM 21 les microdiagnostics du processeur principal 10, ainsi qu'une partie de microprogramme permettant à ce processeur principal 10 de dialoguer avec le processeur d'administration de carte fonctionnelle DMC d'administration pour charger le programme d'exploitation. Le microcontrôleur 14 possède pour cela un chemin de données vers la mémoire d'instructions 11 du processeur principal 10 : l'écriture s'effectue octet par octet dans des registres de verrouillage 25 connus sous le nom de "latch" 8 bits. Ces registres "latch" 25 peuvent être intégrés dans le circuit intégré DBM de gestion des données.

Le processeur principal 10 peut être doublé le cas échéant, l'un des deux processeurs étant un esclave surveillant l'autre. Une horloge externe synchronise alors les deux processeurs.

Le microcontrôleur 14 est relié par un bus à 24 à 8 bits au circuit intégré MPC de transfert des messages.

Les connexions de bus d'adresses et de données entre les différents composants de la carte mère DMX sont illustrées par la figure 4. Sur cette figure, les nombres encerclés indiquent le nombre de points des bus. L'abréviation ADR indique qu'il s'agit d'un bus d'adresses alors que l'abréviation DAT indique qu'il s'agit d'un bus de données. Les connecteurs P3 et P4 relient la carte mère DMX à sa carte fille. Selon l'invention, chaque carte mère DMX comporte un connecteur d'interface externe P2 à un élément périphérique (calculateur hôte externe 5, unités de mémoire de masse 2, 3, 4, carte d'adaptation 6, 7, 8, ..) utilisé pour réaliser la connexion avec un tel élément périphérique lorsque la carte fonctionnelle à processeur correspondante est une carte de couplage DAx ou DHx et sert à réaliser la liaison entre le dispositif 1 selon l'invention et cet élément périphérique. Et, selon l'invention, chaque chaque carte fille est connectée à une carte mère DMX par deux connecteurs P3 et P4 :
- un connecteur P3 comprenant les différents bus d'adresses, de données et les signaux de contrôle permettant le dialogue avec la carte mère DMX,
- un connecteur P4 véhiculant les signaux de la carte fille destinés à être échangés avec un élément périphérique (calculateur ou unité de mémoire de masse), ces signaux étant échangés avec cet élément périphérique par l'intermédiaire du connecteur P2 de la carte mère DMX. Ainsi, chaque carte mère DMX comporte tous les moyens de connexion d'une carte fonctionnelle à processeur correspondant avec le bus central 9 ou avec des éléments extérieurs (carte fille ou élément périphérique), la carte fille étant exempt elle-même de connecteurs autres que ceux nécessaires à sa connexion avec la carte mère DMX. En particulier, chaque carte fille est alimentée en énergie électrique par sa carte mère DMX via son connecteur P3.

La carte mère DMX comporte aussi des voyants lumineux de contrôle 19.

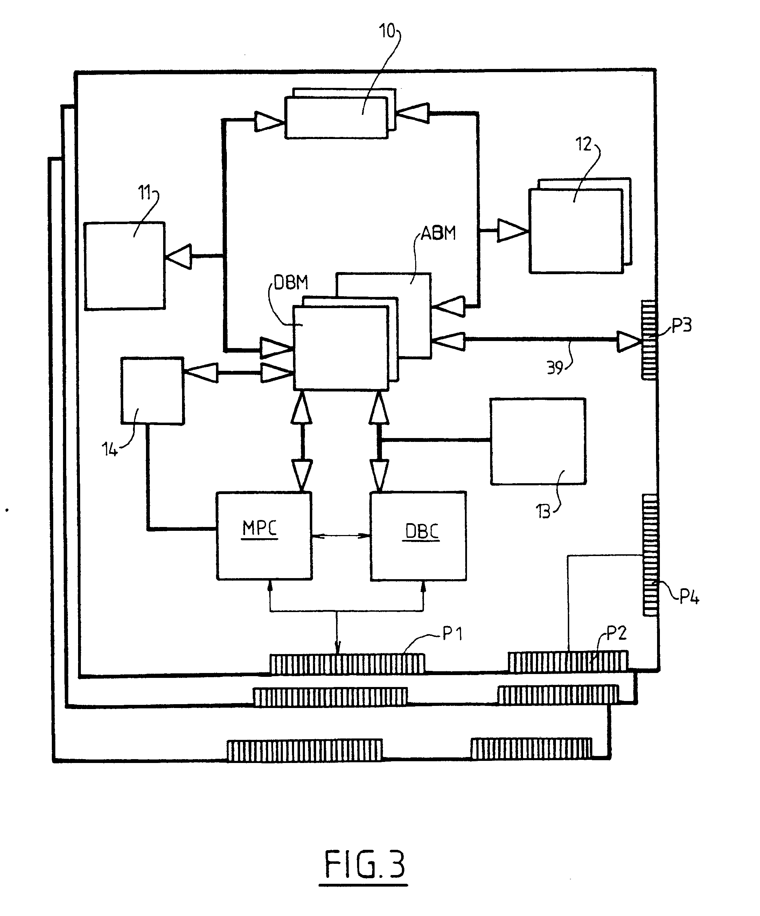

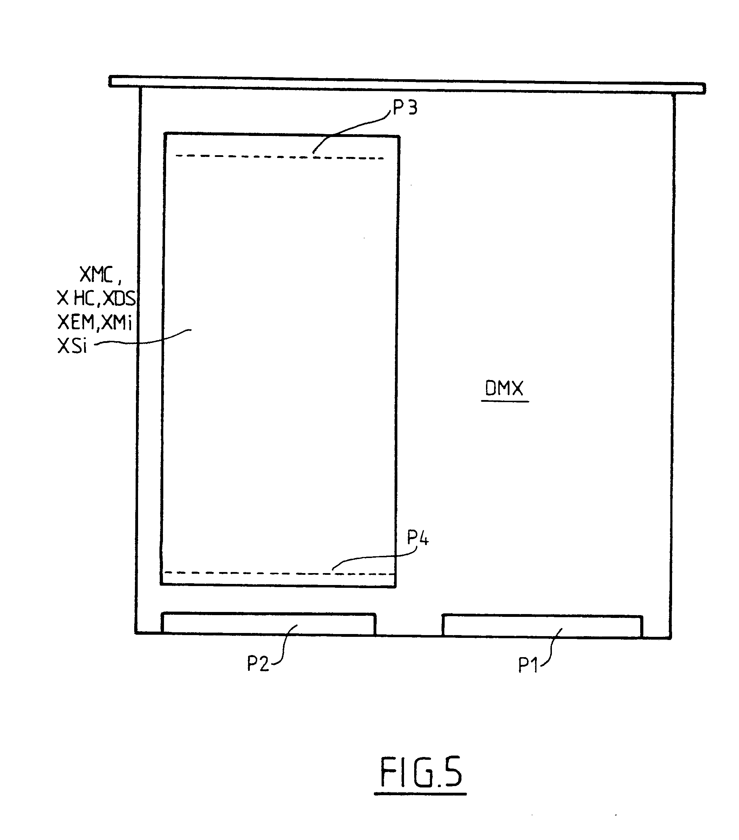

Sur la figure 5, l'aspect matériel de la carte mère DMX avec une carte fille XMC ou XHC ou XDS ou XEM ou XMI ou XSI est représenté. La carte mère DMX comporte quatre connecteurs : P1 : avec le bus central 9, P2 : avec un élément périphérique, P3 et P4 : avec sa carte fille. Le connecteur P4 est directement relié au connecteur P2 (figure 3).

Du point de vue fonctionnel, la carte mère DMX est organisée autour de quatre bus : le bus du processeur principal 10, le bus local des circuits intégrés DBC, ABM, DBM et de la mémoire tampon 13, le bus du circuit intégré MPC, et le bus 39 de la carte fille. Le bus du processeur principal 10 correspond à trois bus de 32 bits à savoir le bus d'adresses, le bus de données, et le bus d'instructions de ce processeur principal 10. Sur ce bus sont connectées les ressources propres au processeur principal 10, à savoir la mémoire d'instructions 11, la mémoire de données 12, le circuit intégré ABM de gestion d'adresses, les deux circuits DBM de gestion de données, et les autres ressources du processeur principal 10 (voyant lumineux, registres, ...). Chaque carte mère DMX comporte deux circuits intégrés DBM de gestion des données, un pour la gestion de chaque groupe de 16 bits de données des 32 bits. Un seul circuit intégré DBM peut être utilisé si les technologies d'intégration de circuit le permettent.

Sur le bus local, sont connectés la mémoire tampon 13 et les circuits intégrés DBC, ABM et DBM.

Le bus 39 de la carte fille comprend un bus d'adresses de 25 bits. Les 7 bits de poids fort sont issus directement du bus d'adresses du processeur principal 10, les autres bits étant reliés aux autres bus d'adresses de la carte mère DMX via le circuit intégré ABM de gestion d'adresses. Le bus de données est relié aux autres bus via les circuits intégrés DBM de gestion de données. Le bus 39 de la carte fille correspond pour la carte mère DMX à l'interface avec les éléments périphériques (calculateurs ou mémoires de masse) raccordés à la carte fille si la carte est une carte de couplage. En effet, selon l'invention, la carte mère DMX d'une carte de couplage DAx, DHx est reliée à l'élément périphérique 2, 3, 4, 5 via sa carte fille par les connecteurs P3 et P4 et via le connecteur P2 relié au connecteur P4 directement.

Les connecteurs P1 et P2 sont des connecteurs à 96 points, et les deux connecteurs P3 et P4 de la carte fille sont des connecteurs à 160 points.

Selon l'invention, les circuits intégrés DBC, ABM et DBM sont des circuits intégrés spécifiques précaractérisés du type ASIC ("Apply Specific Integrated Circuit") en technologie VLSI ("Very Large Scale Integration").

Le circuit intégré DBC de transfert de données gère le mode "rafale" de transfert des données sous le contrôle du processeur principal 10. Chaque entrée/sortie est scindée en transferts de données, selon l'application de l'entrée/sortie. Chaque transfert de données sur le bus 9 est scindé en blocs. Chaque bloc est transféré intégralement par le circuit intégré DBC de transfert de données sans intervention du processeur principal 10. Pour ce faire, le circuit intégré DBC de transfert de données qui pilote le transfert scinde chaque bloc en secteurs, chaque secteur étant transféré intégralement et sans division au niveau du bus 9. La dimension de la mémoire tampon 13 est choisie selon celle prédéfinie que l'on attribue aux blocs.

La taille des blocs qui est choisie lors de la configuration est une constante du dispositif 1, et influence sur la charge de travail des processeurs 10, mais aussi sur la vitesse à laquelle ces processeurs 10 peuvent traiter les données transférées. On peut choisir par exemple entre 1 kilo-octets et 8 kilo-octets.

La taille des secteurs est aussi une constante du dispositif et peut être choisie lors de la configuration. Plus elle est grande, plus la vitesse de transfert se rapproche de la vitesse nominale du bus 9 (40 Mo/s pour le bus iPSB). Mais elle doit être limitée selon le nombre d'émetteurs sur le bus 9 pour éviter les temps d'attente. La notion de secteur dans toute la présente demande correspond à la définition précédente et est différente de celle qui est connue dans le domaine de l'organisation des données mémorisées sur les unités de mémoire de masse. La taille d'un secteur est classiquement choisie égale à 512 octets.

Les moyens 10, 13, DBC pour formater les données, notamment le circuit intégré DBC de transfert des données rajoutent en émission à la fin de chaque secteur transféré un mot de vérification CHECKSUM 76 qui est le résultat d'un algorithme effectué par le circuit intégré DBC de transfert des données lors du transfert sur le bus central 9. Egalement, le circuit intégré DBC de transfert des données d'une carte mère DMX recevant un secteur calcule le mot de vérification CHECKSUM 76 lors de la réception du secteur et en fin de réception, le compare à celui qui avait été émis en fin de secteur à l'émission par le circuit intégré DBC de transfert des données de la carte mère DMX qui a émis le secteur. Le circuit intégré DBC de réception retire ensuite le CHECKSUM 76 après avoir vérifié qu'il est correct. Selon l'invention, le CHECKSUM 76 est le complément à 1 du résultat de la somme sur 32 bits des données émises sur le bus iPSB 9 du MULTIBUS II en réinjectant la "carry" (retenue) sur les poids faibles.

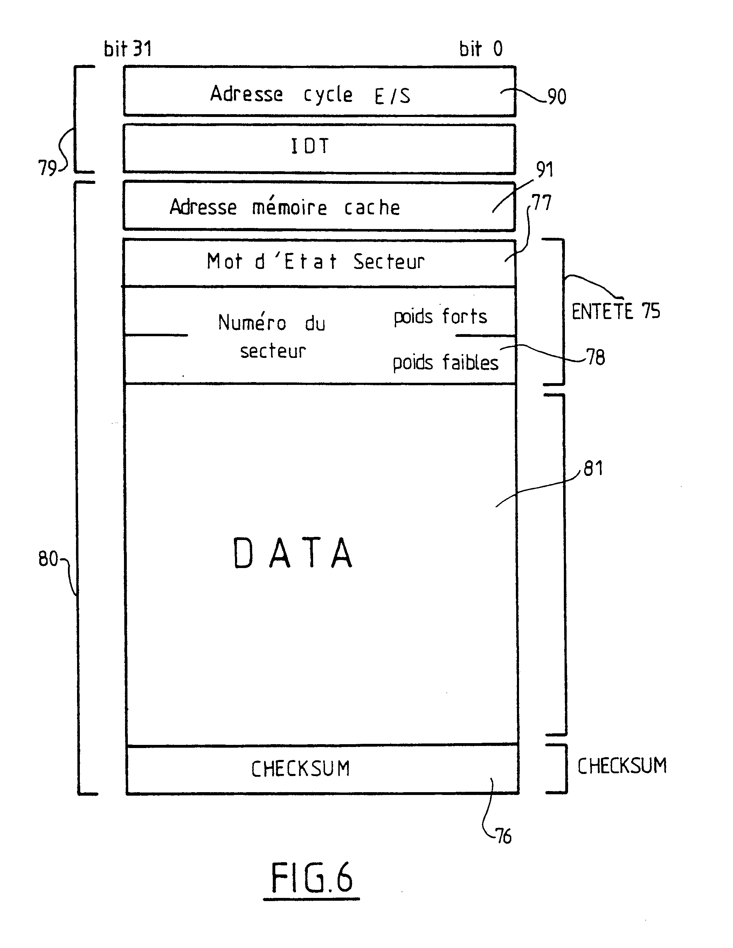

Selon l'invention, les moyens 10, 13, DBC pour formater les données, notamment le circuit intégré DBC de transfert de données rajoutent en émission à chaque secteur transféré un en-tête 75 comportant le numéro du secteur à transférer notamment. Plus précisément, l'en-tête 75 est émis à la suite d'une adresse mémoire cache 91 localisant le secteur en mémoire cache DEM et l'en-tête 75 est composé de trois mots de 32 bits (figure 6) : un mot d'état du secteur 77 comportant des informations relatives au transfert généré par le circuit intégré DBC émetteur (date et heure du transfert,...), et deux mots 78 comportant le numéro du secteur généré par le circuit DBC émetteur et contrôlé par le circuit DBC récepteur. Le numéro du secteur 78 de l'en-tête 75 s'incrémente à chaque secteur transmis.

Le circuit intégré DBC de transfert des données d'une carte mère DMX recevant un secteur compare lors de la réception le numéro du secteur émis à l'émission avec celui qui est présent dans ou calculé par le processeur principal 10 de la carte mère DMX recevant le secteur, et supprime l'en-tête 75 du secteur.

Par l'adjonction et le contrôle de cet en-tête 75 et du CHECKSUM 76, le circuit intégré DBC de transfert des données d'un dispositif selon l'invention permet d'augmenter considérablement la protection sur les données transférées de façon simple et ce sans nuire aux performances de transfert du dispositif 1.

Selon l'invention, le dispositif 1 comporte au moins une carte électronique de mémoire cache DEM dont l'organisation est gérée par la carte électronique DMM de gestion qui génère la liste des adresses "mapping" en mémoire cache DEM des différents secteurs transférés par un circuit intégré DBC de transfert des données de la carte mère DMX de la carte électronique fonctionnelle à processeur qui pilote le transfert dans la mémoire tampon 13 de cette carte mère DMX. Les secteurs mémorisés dans la mémoire cache DEM incluent leur en-tête 75 et leur mot de vérification CHECKSUM 76.

Par ailleurs, avant un transfert de données, le processeur 10 qui pilote le transfert émet un mot identificateur de transfert IDT reçu par tous les processeurs principaux 10 des cartes mères DMX destinés à recevoir le transfert, et ce mot identificateur de transfert IDT est transmis avant chaque secteur de données par un cycle entrée/sortie 79 déclenché par la carte mère DMX émettrice avant le cycle espace mémoire 80 comprenant l'en-tête 75, les données à transférer 81 et le CHECKSUM 76. Pour ce faire, le circuit intégré DBC de transfert des données comporte un registre pour le mot identificateur de transfert IDT dans chacun de ses canaux émission 83 ou réception 82. Le circuit intégré DBC de transfert de données comporte un registre contenant le CHECKSUM 76 du dernier secteur reçu dans son canal réception 82. Le circuit intégré DBC de transfert de données comporte dans chacun de ses canaux émission 83 ou réception 82 des registres contenant l'en-tête 75 émis ou reçu. Egalement, le canal réception 82 du circuit intégré DBC de transfert des données comporte des registres contenant le numéro de secteur calculé et incrémenté entre chaque secteur, ce numéro de secteur étant comparé au numéro du secteur reçu.

Le circuit intégré DBC de transfert de données est un circuit coprocesseur DMA ("Direct Memory Acces") associé au circuit intégré MPC du bus iPSB du MULTIBUS II. Il comporte un canal en réception 82 et un canal en émission 83 et permet l'écriture et la lecture dans la mémoire cache DEM. Egalement, le circuit intégré DBC permet le multiplexage des transfert, c'est-à-dire des transferts à plusieurs destinataires, plusieurs circuits intégrés DBC et/ou plusieurs cartes de mémoire cache DEM recevant les données circulant sur le bus central 9 avec un chaînage des données transférées et un multiplexage du bus central 9. Le circuit intégré DBC de transfert des données permet le transfert des données en mode DMA entre la mémoire tampon 13 et l'interface du bus 39 de la carte fille correspondante (connecteur P3). Le circuit intégré DBC de transfert des données permet également les transfert en mode DMA entre le circuit intégré MPC et la mémoire tampon 13 pour les messages négociés. Il permet en outre de protéger les données en insérant des bits de parité par octet sur les données du bus local et sur les signaux d'adresses et de données du bus central 9, et des bits de parité par quartet sur les signaux de contrôle du bus central 9 ; en contrôlant le bus local d'adresses et le signal R/W de lecture/écriture en comparant la valeur de chaque signal avant et après un amplificateur d'émission interne au circuit intégré DBC ; en émettant et en contrôlant l'en-tête 75 et le CHECKSUM 76 comme indiqué précédemment. Toutes les données transférées par le circuit intégré DBC sont composées de mots de 32 bits.

Le transfert des données effectué par le circuit intégré DBC a lieu en deux étapes : une première étape transfère les données entre le bus iPSB et la mémoire tampon 13. Lors de cette première étape, les données subissent les opérations de contrôle effectuées par le circuit intégré DBC. La deuxième étape s'effectue entre la mémoire tampon 13 et l'interface du bus 39 de la carte fille. Le circuit intégré DBC fonctionne alors uniquement en tant que générateur d'adresses.

Tous les cycles effectués sur le bus local ou sur le bus central 9 sont au format de 32 bits. Les adresses mémoires du bus local ou du bus central 9 qui sont des adresses au format d'octets sont donc cadrées sur des mots de 32 bits.

Le circuit intégré DBC génère et vérifie sur le bus de données local un bit de parité par octet pour les signaux de données. Sur le bus d'adresses local, la valeur des bits d'adresses sur le bus interne du circuit intégré DBC est comparée avec la valeur des signaux présents sur les broches du circuit intégré DBC. Ceci permet de détecter toutes différences entre la valeur des adresses sur le bus local et la valeur interne au circuit intégré DBC. Le signal R/W de lecture/écriture sur le bus local est contrôlé de la même manière que les signaux d'adresses. Le circuit intégré DBC génère et vérifie un bit de parité par octet pour les signaux d'adresses et de données et un bit de parité par quartet pour les signaux de contrôle sur le bus iPSB 9.

Le CHECKSUM 76 d'un secteur est calculé sur l'ensemble des données transférées pendant le cycle espace mémoire 80. C'est-à-dire que l'algorithme de calcul du CHECKSUM 76 intègre les valeurs du mot d'état de secteur, de l'adresse du secteur, du numéro du secteur, et des données.

Lors des transferts entre le bus local et le bus central 9, les parités traversent le circuit intégré DBC de la même manière que les données, et elles sont contrôlées en parallèle à l'intérieur du circuit intégré DBC. Cela permet d'émettre des données avec des parités erronées pour des besoins de tests.

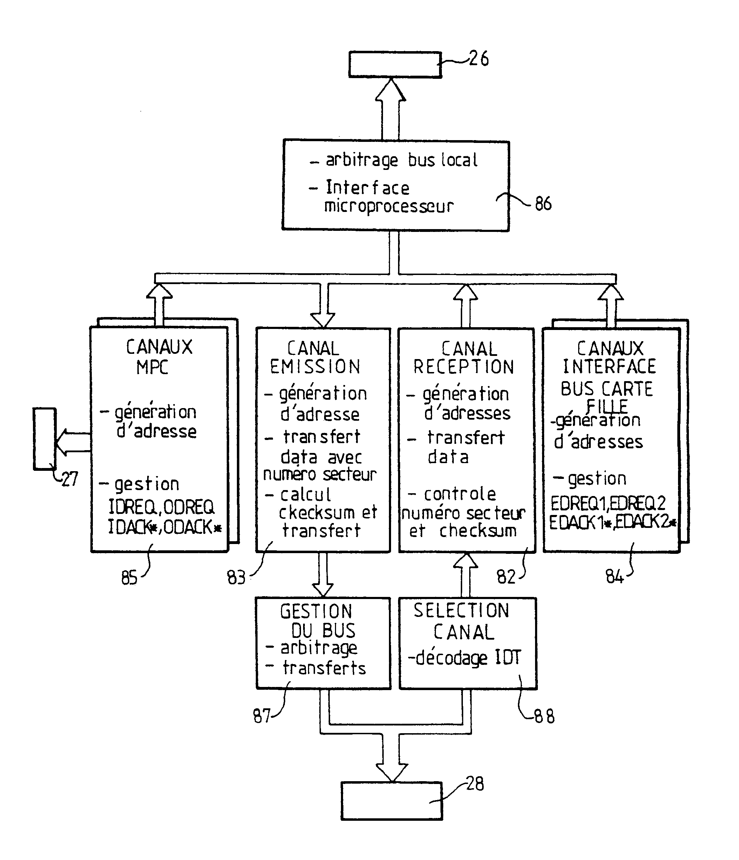

La figure 9 illustre les principales fonctions réalisées par le circuit intégré DBC. Le circuit intégré DBC est relié à trois interfaces 26, 27, 28 : l'interface 26 du bus local, l'interface 27 DMA du circuit intégré MPC de transfert des messages, et l'interface 28 du bus central 9, c'est-à-dire du bus iPSB du MULTIBUS II. Le circuit intégré DBC comporte un canal émission 83 permettant de transférer des données entre l'interface 26 du bus local et l'interface 28 du bus central 9, un canal réception 82 permettant de transférer des données entre l'interface 28 du bus central 9 et l'interface 26 du bus local, des canaux 84 d'interface du bus 39 de la carte fille générant des adresses et gérant des signaux sur l'interface 26 du bus local à destination de la carte fille et des canaux 85 MPC notamment un canal MPC entrée et un canal MPC sortie destinés au circuit intégré MPC pour la génération d'adresses et la gestion de signaux. Entre les canaux 82, 83, 84, 85 du circuit intégré DBC et l'interface 26 du bus local, ce circuit intégré effectue 86 l'arbitrage de l'accès au bus local et l'adaptation à l'interface du processeur principal 10. Entre le canal émission 83 et l'interface 28 du bus central 9, le circuit intégré DBC effectue 87 la gestion de l'accès au bus central 9 (arbitrage et transfert). Entre le canal réception 82 et l'interface 28 du bus central 9 le circuit intégré DBC effectue 88 la sélection du canal réception 82 par décodage de l'identificateur de transfert IDT.

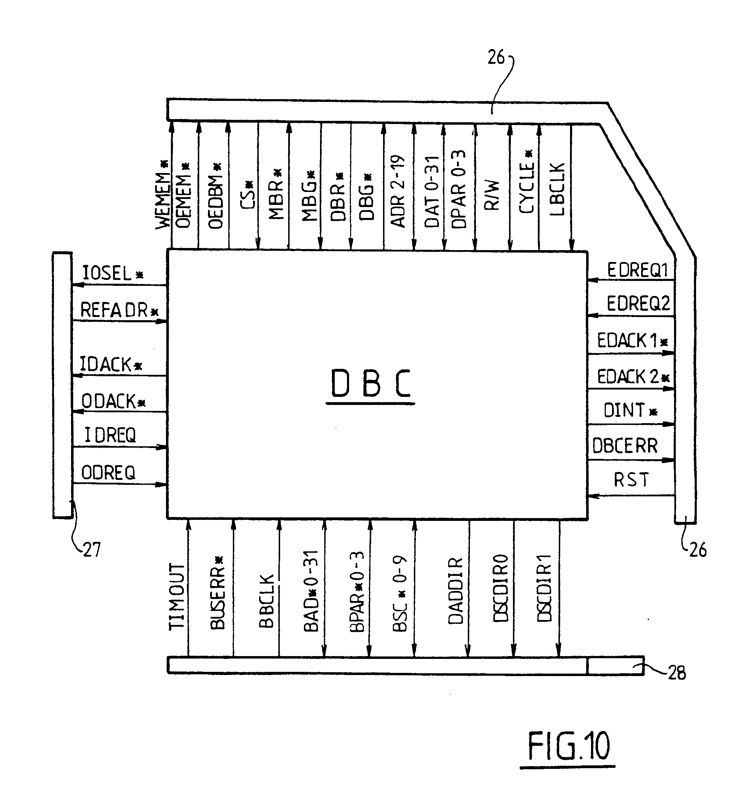

La figure 10 illustre de façon schématique les différents signaux gérés par le circuit intégré DBC. Les signaux suivis d'une astérisque sur les figures et dans toute la présente demande sont des signaux actifs au niveau bas.

Ces signaux sont les suivants :

. avec l'interface 28 du bus central iPSB :

– BAD* 0-31 : signal entrée/sortie
Adresses et données multiplexées sur 32 bits connectées au bus iPSB par des tampons.

– BPAR* 0-3 : signal entrée/sortie
Signaux de parité octet du bus BAD* connectés au bus iPSB par des tampons.

– BSC* 0-9 : signal entrée/sortie
Signaux de contrôle système du bus iPSB avec parité connectés au bus iPSB par des tampons.

– DADDIR : signal en sortie
Signal de commande des tampons de transmission des adresses et des données et des parités.

– DSCDIRO : signal en sortie
Signal de commande des tampons de transmission BSC* 9,3..0.

– DSCDIRI : signal en sortie
Signal de commande des tampons de transmission BSC* 8..4

– TIMOUT : signal en entrée
Signal de dépassement de temps émis par le CSM connecté au bus iPSB.

– BUSERR* : signal en entrée
Signal d'erreur de bus indiquant une détection d'erreur de parité sur le bus iPSB.

– BBCLK : signal en entrée
Horloge de bus émise par le CSM ("Central Service Module") connectée au bus iPSB à travers un registre tampon.

. avec l'interface 26 du bus local :

– ADR 2-19 : signal en entrée/sortie
Signaux d'adresses en mémoire tampon 13.

– DAT 0-31 : signal en entrée /sortie Données sur le bus local sur 32 bits.

– DPAR 0-3 : signal en entrée/sortie Parité sur les données DAT 0-31.

– OEDBM* : signal en sortie
Autorisation de sortie des signaux données et parités du bus local du circuit intégré DBM de gestion de données.

– OEMEM* : signal en sortie
Autorisation de sortie des circuits mémoire tampon du bus local.

– WEMEM* : signal en sortie
Autorisation d'écriture des circuits mémoire tampon du bus local.

– R/W : signal en entrée/sortie Nature du cycle : lecture/écriture.

– CYCLE* : signal en sortie
Signal indiquant un cycle en cours avec la mémoire tampon 13.

– CS* : signal en entrée
Permettant d'accéder aux registres du circuit intégré DBC.

– MBR* : signal en sortie
Demande du bus MPC.

– MBG* : signal en entrée
Acquittement de la demande du bus MPC.

– DBR* : signal en entrée
Demande du bus DBC.

– DBG* : signal en sortie
Acquittement de la demande du bus DBC.

– EDREQO : signal en entrée
Demande de transfert de données du canal 0 de l'interface du bus 39 de la carte fille.

– EDREQ1 : signal en entrée
Demande de transfert de données du canal 1 de l'interface du bus 39 de la carte fille.

– EDACKO* : signal en sortie
Acquittement de la demande de transfert des données du canal 0 de l'interface du bus 39 de la carte fille.

– EDACK1* : signal en sortie
Acquittement de la demande de transfert des données du canal 1 de l'interface du bus 39 de la carte fille.

– DINT* : signal en sortie
Interruption générée par le circuit intégré DBC pour signaler la fin d'un transfert ou la détection d'une erreur.

– DBCERR : signal en sortie
Erreur de parité sur les données du bus local ou erreur sur les adresses du bus local.

– RST : signal en entrée
Réinitialisation du circuit intégré DBC.

– LBCLK : signal en entrée
Horloge du bus local synchrone de l'horloge du processeur principal 10.

. avec l'interface 27 du circuit intégré MPC de transfert des messages :

– IOSEL* : signal en sortie
Demande de cycle entrée/sortie sur le bus iPSB au circuit intégré MPC

– REFADR* : signal en entrée
Validation de l'adresse du cycle entrée/sortie par le circuit intégré MPC.

– IDREQ : signal en entrée

Demande de transfert DMA entre le circuit intégré MPC et la mémoire tampon 13 (réception de données).

– ODREQ : signal en entrée

Demande de transfert DMA entre la mémoire tampon 13 et le circuit intégré MPC (émission de données).

– IDACK* : signal en sortie

Réponse du circuit intégré DBC au signal IDREQ.

– ODACK* : signal en sortie

Réponse du circuit intégré DBC au signal ODREQ.

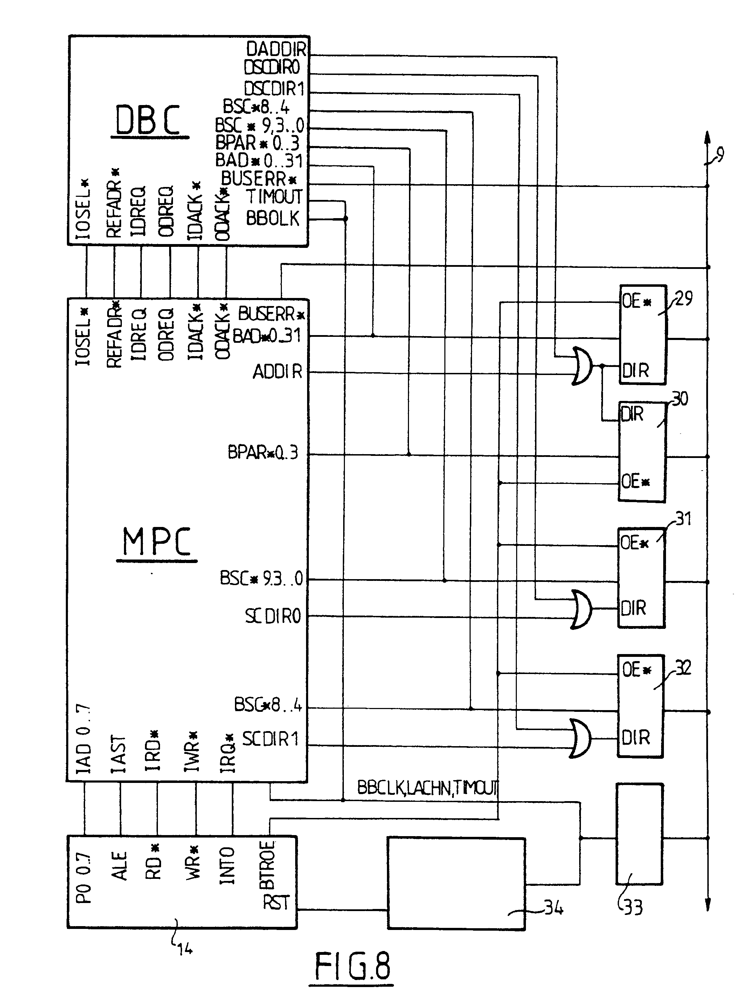

La figure 8 illustre l'interface logique du circuit intégré DBC et du circuit intégré MPC avec le bus central 9 par l'intermédiaire de registres tampons 29, 30, 31 et 32 bidirectionnels. La direction des tampons est commandée par le OU logique respectif des signaux ADDIR, SCDIR0, SCDIR1 du circuit intégré MPC et DADDIR, DSCDIR0 et DSCDIR1 du circuit intégré DBC. L'autorisation de sortie des tampons est commandée par le microcontrôleur 14, ce qui permet d'isoler une carte du bus central 9 lors des microdiagnostics, en cas de panne ou pour des besoins de tests. Les signaux annexes de gestion sont transférés par l'intermédiaire d'un tampon 33. La logique de commande de la réinitialisation 34 reliée au microcontrôleur 14 communique avec le bus central 9 via le tampon 33.

Les différents signaux du circuit intégré MPC, du microcontrôleur 14 qui est un INTEL 8032 et des différents tampons 29, 30, 31, 32 qui peuvent être par exemple des 74F245 sont connus de l'homme du métier en eux-mêmes et non pas à être détaillés.

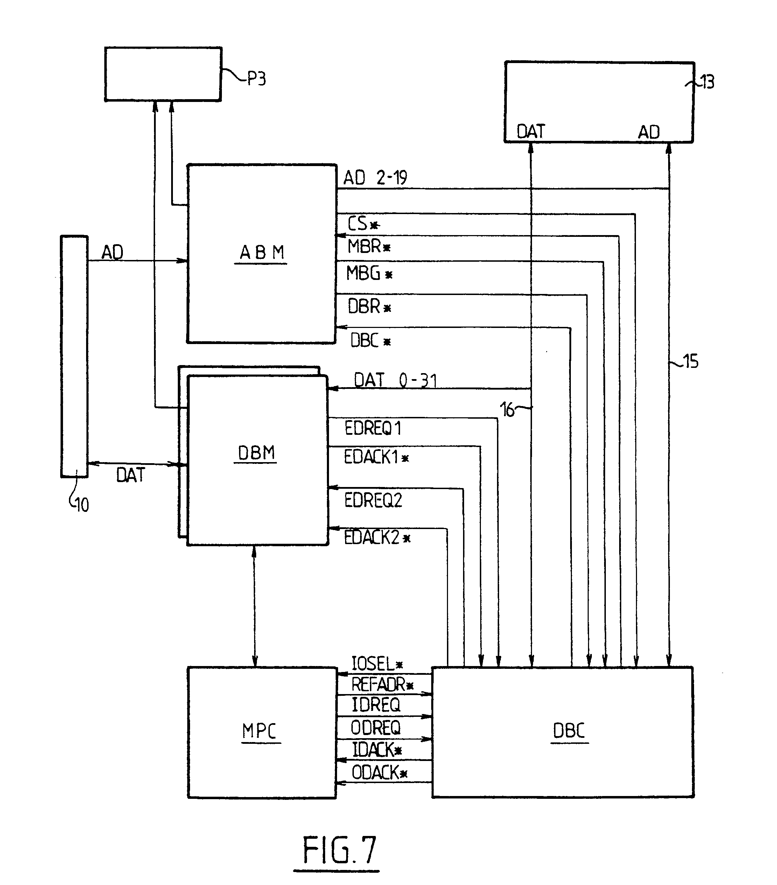

L'interface logique 26 du circuit intégré DBC de transfert des données avec le bus local est illustrée à la figure 7 avec les mêmes conventions que précédemment. L'interface 26 avec le bus local est une interface synchrone autour d'une horloge externe de fréquence de l'ordre de 25 Mhz. Cette horloge est synchrone avec celle du processeur principal 10 de la carte mère DMX. L'interface 26 de bus local est gérée pour la plupart des cycles effectués par le circuit intégré DBC de transfert des données qui génère les signaux d'adresses et de contrôles. Lorsque le processeur principal 10 veut accéder au bus local (c'est-à-dire au circuit intégré DBC ou à la mémoire tampon 13) il l'obtient à partir du circuit intégré DBC de transfert des données par un cycle de requête-acquittement. Le processeur principal 10 garde le contrôle du bus local jusqu'à ce que le signal de requête soit désactivé. Les transferts en lecture ou en écriture entre le circuit intégré DBC et la mémoire tampon 13, ainsi qu'entre la mémoire tampon 13 et l'interface du bus 39 de la carte fille s'effectuent en deux cycles. Les transferts entre le circuit intégré MPC de transfert des messages et la mémoire tampon 13 s'effectuent en deux cycles, et deux tels transferts sont toujours séparés par au moins un cycle d'attente en n'adressant pas le circuit intégré MPC pour respecter ses contraintes de synchronisation. Les cycles sur le bus local sont qualifiés par les signaux CYCLE*, CS*, IOSEL*, R/W. Le signal CYCLE* indique un cycle dans lequel intervient la mémoire tampon 13. Le signal CS* indique un cycle d'accès aux registres du circuit intégré DBC. Le signal IOSEL* indique un cycle de demande de cycle entrée/sortie au circuit intégré MPC de transfert des messages. Le signal R/W indique la nature du cycle (lecture ou écriture).

Les différents cycles sur le bus local sont : lecture mémoire 13 par le circuit intégré DBC ; écriture mémoire 13 par le circuit intégré DBC ; transfert mémoire 13 vers le circuit intégré MPC ; transfert du circuit intégré MPC vers la mémoire 13 ; transfert de la mémoire 13 vers l'interface du bus 39 de la carte fille ; transfert de l'interface externe P2 vers la mémoire 13 ; demande de cycle d'entrée/sortie ; lecture de la mémoire 13 par le processeur principal 10 ; écriture de la mémoire 13 par le processeur principal 10 ; lecture de registres du circuit intégré DBC ; écriture de registres du circuit intégré DBC.

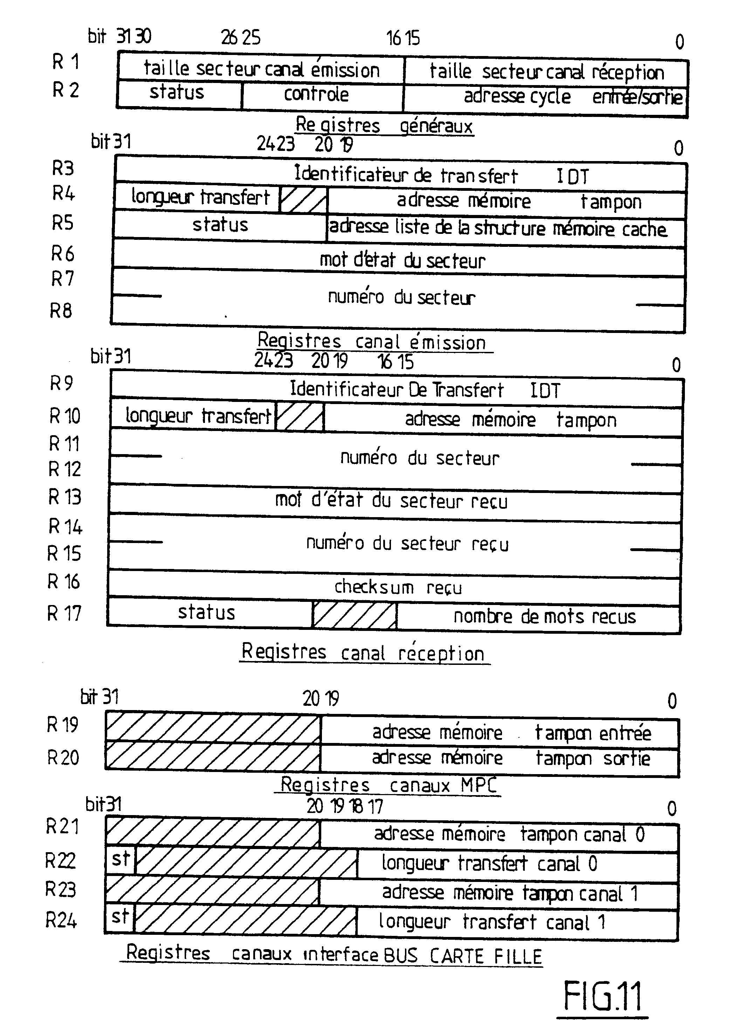

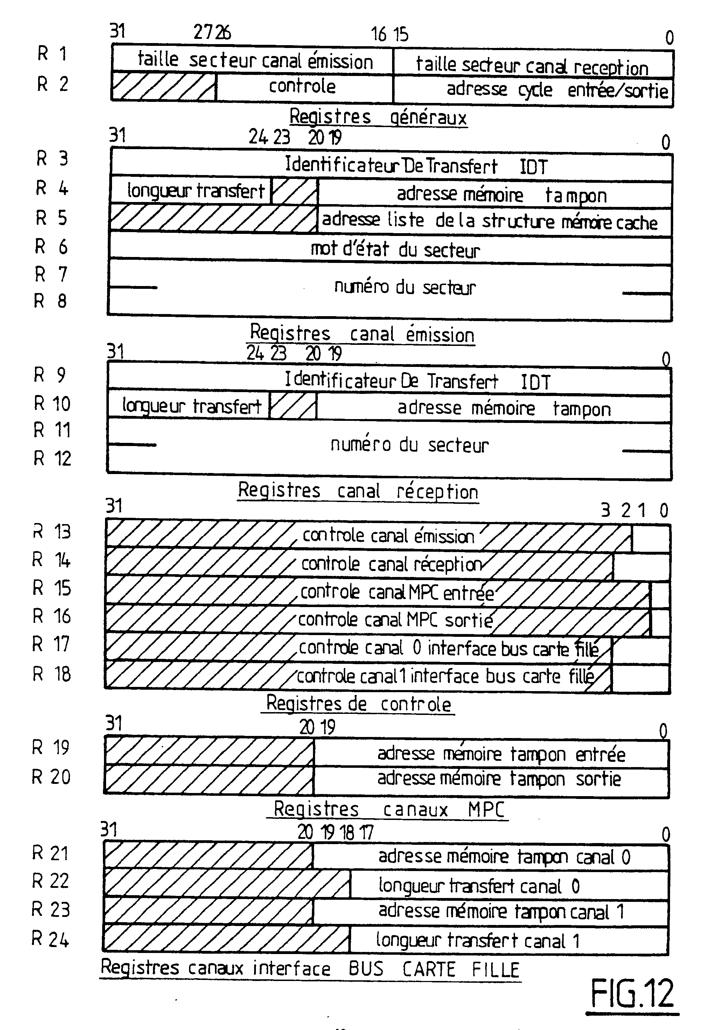

Le circuit intégré DBC de transfert des données selon l'invention comporte 24 registres. Ces registres sont utilisés en lecture comme indiqué sur la figure 11 et en écriture comme indiqué sur la figure 12. Ces figures 11 et 12 illustrent de haut en bas les différents registres R1 à R24. Chaque registre est constitué d'un mot de 32 bits 031.

L'accès aux registres des canaux MPC entrée et sortie et des canaux de l'interface du bus 39 de la carte fille n'est pas protégé et il peut modifier le comportement du canal par modification de l'adresse mémoire tampon 13 ou de la longueur de transfert. Par contre, l'accès aux registres des canaux réception et émission pourrait se traduire par un fonctionnement imprévisible du circuit intégré DBC, et il est donc protégé. Pour ce faire, lors d'un accès au registre du canal émission ou du canal réception alors que le canal est actif, l'écriture ou la lecture du registre n'est pas effectuée et le circuit intégré DBC positionne le signal DBCERR. Pour ce qui est du registre des tailles secteur n° 1, en écriture la modification est indépendante pour chaque canal et elle n'est prise en compte que si le canal est inactif. En lecture on accède aux deux tailles secteur quel que soit l'état des canaux.

Pour tous les canaux, à l'exception des canaux MPC 85 entrée et sortie la fin du transfert est signalée par le circuit intégré DBC qui positionne le signal DINT* si l'interruption est validée pour le canal. A ce moment là, le canal est redevenu inactif et ses registres sont accessibles par le processeur principal 10. Les canaux MPC entrée et sortie ne possédant pas de compteur de transfert, ils ne détectent pas la fin du transfert. Celle-ci est signalée par le circuit intégré MPC au processeur principal 10. Lorsque les signaux de requête du circuit intégré MPC (IDREQ et ODREQ) sont inactifs, les canaux entrée et sortie du circuit intégré MPC sont également inactifs et leurs registres sont accessibles.

Tous les registres d'adresses contiennent des adresses octets cadrées en mots de 32 bits, les 2 bits de poids faibles 0 et 1 étant donc toujours à 0. Les registres d'adresses de la mémoire tampon 13 sont spécifiés sur 20 bits, les 2 bits de poids faible étant toujours à 0. Les registres et compteurs internes du circuit intégré DBC sont sur 18 bits (2 à 19), les bits 0 et 1 étant non significatifs en écriture et étant forcés à 0 lors de la lecture des registres.

Les bits non significatifs des registres accessibles en lecture peuvent avoir une valeur quelconque lors de la lecture du registre, à l'exception des bits de poids faible des adresses mémoires tampon 13 qui doivent être lus à 0.

Le registre R1 contient la taille des secteurs transférés par le canal. Cette taille correspond au nombre de mots de 32 bits de données du secteur, non compris l'entête 75 et le CHECKSUM 76. Pour le canal émission, le registre sur 16 bits correspond à un décompteur qui est chargé avec la valeur du registre au début du transfert de chaque secteur. En écriture en mémoire cache DEM, le décompteur est décrémenté à chaque donnée lue sur le bus local. En lecture en mémoire cache, il est décrémenté à chaque donnée lue sur le bus central 9. Lorsqu'il arrive à 0, le transfert de la partie de données du secteur est terminé.

Pour le canal réception, le registre R1 correspond à un compteur qui est remis à zéro au début du transfert de chaque secteur. Ce compteur est incrémenté à chaque donnée reçue sur le bus central 9. Il est comparé avec la valeur du registre la fin du transfert de la partie de données du secteur.

Le registre R2 contient l'adresse 90 du cycle entrée/sortie qui est émis par le canal émission 83 lors du cycle entrée/sortie 79 précédent chaque secteur. Cette adresse 90 est utilisée par le canal réception 82 pour reconnaître le cycle entrée/sortie 79 précédent chaque secteur et pour valider le décodage de l'identificateur de transfert IDT.

Lorsque l'émission ou la réception de l'en-tête 75 ou du CHECKSUM 76 n'est pas validée, les données correspondantes dans le secteur sur le bus central 9 sont supprimées. La partie "status" du registre R2 en lecture indique une erreur de parité sur le bus local, une erreur de contrôle d'adresses et de lecture/écriture sur le bus local, un transfert terminé. Les bits de ce registre de "status" sont désactivés par la lecture de ce registre.

Le registre R3 contient l'identificateur de transfert IDT du canal émission.

L'adresse mémoire tampon dans le registre R4 correspond à l'adresse des données à transférer. Lorsque le canal effectue une écriture sur le bus central 9, cette adresse est incrémentée après chaque cycle de lecture effectué sur le bus local. Lorsque le canal effectue une lecture avec incrément sur le bus central 9, l'adresse est incrémentée après chaque donnée lue sur le bus central 9. Lorsque le canal effectue une lecture sans incrément sur le bus central 9, l'adresse n'est pas incrémentée.

La longueur d'un transfert de secteur par un circuit DBC de transfert de données correspond à celle du bloc, c'est-à-dire au nombre de secteurs à transférer. Elle est décrémentée après chaque secteur transféré sauf pour une lecture sans incrément. Lorsqu'elle est nulle, le transfert est terminé.

Le registre R5 contient sur les 20 bits de poids faible un pointeur dans la table "mapping" de la structure de la mémoire cache DEM générée par le processeur de gestion permettant d'accéder à l'adresse 91 mémoire cache (voir figure 6) du secteur à émettre, et sur les 12 bits de poids fort le "status" du canal. L'adresse 91 mémoire cache est l'adresse à laquelle le secteur se trouve en mémoire cache DEM. Cette adresse 91 se trouve dans la table "mapping" de la mémoire tampon 13 associée au circuit DBC qui pilote le transfert. Cette adresse 91 est générée au début de chaque cycle espace mémoire 80. L'adresse 91 de la mémoire cache est incrémentée entre chaque secteur. Le registre de "status" du registre R5 indique les différentes erreurs possibles sur le canal émission 89. Lorsque ce registre est nul et que le registre de "status" général indique que le transfert est terminé sans erreur, le transfert des données s'est déroulé correctement. Les bits du registre de "status" du registre R5 sont désactivés par la lecture de ce registre.

Le mot d'état du secteur du registre R6 est identique d'un secteur à l'autre.

Le numéro du secteur des registres R7 et R8 consiste en un compteur sur 64 bits chargés en deux fois qui est incrémenté entre chaque secteur sauf lorsque le canal effectue une lecture sans incrément. En écriture, les 16 bits de poids faible du registre R9 initialisent un comparateur de décodage du cycle entrée/sortie 79. En lecture, les 32 bits représentent le dernier identificateur de transfert IDT reconnu.

Les registres R11 et R12 constituent un compteur sur 64 bits chargés en deux fois qui calcule le numéro du secteur et le compare avec le numéro du secteur reçu mémorisé en lecture dans les registres simples R14 et R15. Le compteur réalisé par les registres R11 et R12 est incrémenté entre chaque secteur.

Le registre R17 contient en lecture sur les 16 bits de poids faible le nombre de mots du dernier secteur reçu, et sur les 10 bits de poids fort un "status" du canal signalant les erreurs éventuelles.

Les registres R13, R14, R15, R16, R17 et R18 sont utilisés en écriture en tant que registres de contrôle. Ils permettent alors au circuit intégré DBC de piloter le transfert sur le bus central 9.

Dans un dispositif contrôleur 1 selon l'invention, la mémoire cache DEM est utilisée au moins pour partie comme mémoire de travail affectée à la demande par le processeur de gestion de la carte électronique DMC de gestion pour les transferts de données sur le bus central 9. Ainsi, un transfert de données sur le bus central 9 implique au moins un circuit intégré DBC de transfert des données et une partie de la mémoire cache DEM. Le circuit intégré DBC de transfert des données est l'initiateur du transfert de données et génère l'adresse 91 mémoire cache. La mémoire cache DEM répond au circuit intégré DBC en fournissant les données demandées ou en stockant les données transmises.

L'adresse 91 mémoire cache émise par le circuit intégré DBC de transfert des données lors du premier cycle du secteur est spécifique à chaque secteur, et elle fait partie d'une liste d'adresses et de signaux de contrôle dénommée "mapping" organisant la structure de la mémoire cache DEM et qui se trouve dans la mémoire tampon 13 du circuit intégré DBC de transfert des données pilotant le transfert. Ce "mapping" permet d'associer à une suite continue de secteurs logiques, une suite discontinue de secteurs en mémoire cache DEM.

Chaque secteur est précédé d'un cycle 79 dans l'espace entrée/sortie du bus iPSB. L'adresse 90 dans l'espace entrée/sortie est émise par le circuit intégré DBC et décodée par le processeur d'administration de la carte électronique DMM d'administration qui émet les signaux du protocole de communication connus sous le nom de signaux "hand-shake". La donnée du cycle entrée/sortie 79 est émise par le circuit intégré DBC sur 32 bits, et correspond à l'identificateur de transfert IDT du transfert en cours. Cet identificateur de transfert IDT sert à sélectionner le canal réception 89 sur la (ou les) carte(s) destinée(s) à recevoir des données. Le cycle entrée/sortie 79 et le secteur proprement dit et ses contrôles, c'est-à-dire le cycle espace mémoire 80 (figure 6) sont rendus indivisibles par le positionnement de signaux spécifiques sur le bus iPSB 9 par le CSM ("Central Service Module"). Ces signaux rendent le cycle espace mémoire 80 prioritaire sur le bus 9 après chaque cycle entrée/sortie 79.

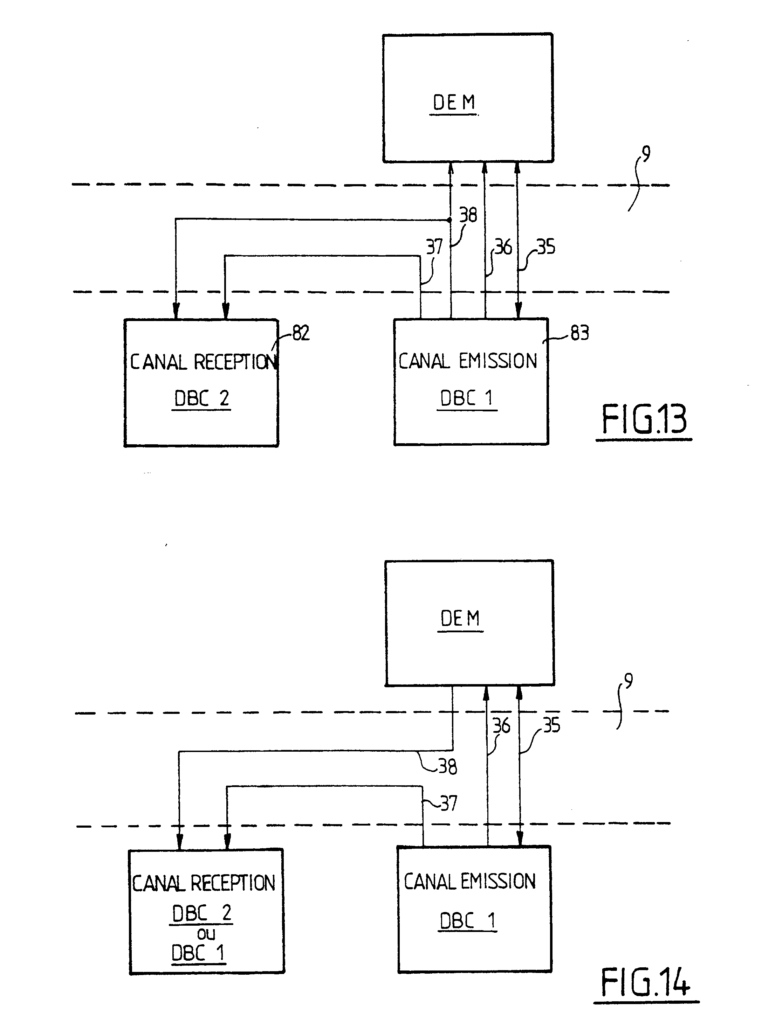

Un cycle d'écriture mémoire est représenté à la figure 13. Le canal émission 83 du circuit intégré DBC émetteur des données génère le cycle entrée/sortie 79 permettant de sélectionner les canaux de réception 82 sur les différents circuits intégrés DBC destinataires. Puis, le circuit intégré DBC émetteur émet l'adresse 91 mémoire cache ainsi que les données qu'il lit dans la mémoire tampon 13 qui lui est associée, en effectuant le "hand-shake" avec la mémoire cache DEM via le bus central 9. Les données émises traversent le canal émission 83 du circuit intégré DBC émetteur qui leur ajoute l'en-tête 75 et le CHECKSUM 76.

Un cycle de lecture en mémoire DEM est représenté en figure 14. Le canal émission 83 du circuit intégré DBC initiateur du transfert génère le cycle entrée/sortie 79, puis émet l'adresse 91 mémoire cache et effectue le "hand-shake" avec la mémoire cache DEM pour réaliser des cycles de lecture mémoire. Les données sont alors émises par la mémoire cache DEM sur le bus central 9 à destination du canal (ou des canaux) de réception 82 sélectionné(s) par le cycle entrée/sortie 79. La lecture peut s'effectuer avec ou sans incrémentation de l'adresse mémoire tampon 13 du canal émission 83 selon les cas. Le canal réception 82 associé au canal émission 83 gérant le transfert dans le même circuit intégré DBC peut avoir été sélectionné et recevoir les données pendant que le canal émission 83 gère les signaux de "hand-shake" avec la mémoire cache DEM.

Sur la figure 13, le circuit intégré DBC émetteur est référencé DBC1 et le circuit intégré récepteur des données simultanément à la mémoire DEM est référencé DBC2. La flèche 35 représente les signaux de "hand-shake", la flèche 36 représente la fourniture de l'adresse 91 mémoire cache , la flèche 37 représente la fourniture de l'identificateur de transfert IDT lors du cycle entrée/sortie 79 et la flèche 38 représente l'écriture des données.

Sur la figure 14 les flèches 35, 36, 37, 38 ont la même signification. Le circuit intégré DBC initiateur du transfert est référencé DBC1 et un circuit intégré DBC récepteur des données est référencé DBC2.

Dans certains cas, le circuit intégré DBC doit réécrire à une adresse différente un secteur qu'il vient de lire dans la mémoire cache DEM. Il effectue alors les opérations suivantes :

– lecture sans incrément du secteur : le canal émission 83 émet l'adresse mémoire cache du secteur à partir du "mapping" et effectue une lecture sans incrémenter son pointeur sur le début du secteur en mémoire tampon 13 et sans incrémenter le numéro de secteur. Le canal réception 82 reçoit les données du bus iPSB 9 et les stocke dans la mémoire tampon 13 en incrémentant son pointeur sur le début du secteur en mémoire tampon 13.

– écriture masquée du secteur : le canal émission 83 émet la nouvelle adresse 91 mémoire cache du secteur à partir du "mapping" et effectue une écriture en transférant les données de la mémoire tampon 13 vers le bus iPSB 9 en utilisant un identificateur de transfert IDT modifié. Le canal réception 82 ne reconnait pas l'identificateur de transfert modifié et reste inactif.

Les canaux émission et réception sont programmés pour le même transfert et utilisent le même identificateur de transfert IDT. Le "mapping" indique au canal émission 83 les actions à effectuer. Lors de l'écriture du secteur l'identificateur de transfert IDT émis pendant le cycle entrée/sortie 79 est différent de celui utilisé pour la lecture du secteur afin que le secteur réémis ne soit pas pris en compte par les circuit intégré DBC participant au transfert : le bit SS ("Shadow Sector") de l'identificateur de transfert IDT est positionné à 1 par le circuit intégré DBC alors qu'il est dans tous les autres cas positionné à 0.

Les adresses de la liste des adresses de "mapping" de la structure de la mémoire cache DEM sont cadrées à 32 bits, les deux bits de poids faible n'étant pas significatifs. Ils sont utilisés pour indiquer au circuit intégré DBC la nature du cycle associé à l'adresse. En écriture, les données proviennent de la mémoire tampon 13 du circuit intégré DBC qui effectue un cycle d'écriture en mémoire cache sur le bus central 9. Sur le canal émission 83, l'adresse mémoire tampon 13 est incrémentée, la longueur de transfert est décrémentée, et le numéro de secteur est incrémenté. En écriture masquée, les données proviennent de la mémoire tampon 13 du circuit intégré DBC qui effectue un cycle d'écriture mémoire cache DEM sur le bus central 9 avec un identificateur de transfert IDT modifié. Sur le canal émission 83, l'adresse mémoire tampon 13 est incrémentée, la longueur de transfert est décrémentée, le numéro de secteur est incrémenté. En lecture sans incrément, les données proviennent de la mémoire cache DEM, et le circuit intégré DBC effectue un cycle de lecture de la mémoire cache sur le bus central 9. Sur le canal émission, l'adresse mémoire tampon 13 n'est pas incrémentée, la longueur de transfert n'est pas décrémentée, le numéro de secteur n'est pas incrémenté. En lecture avec incrément, les données proviennent de la mémoire cache DEM, le circuit intégré DBC effectuant un cycle de lecture mémoire cache sur le bus central 9. Sur le canal émission 83, l'adresse mémoire tampon 13 est incrémentée, la longueur de transfert est décrémentée et le numéro de secteur est incrémenté. Les deux bits de poids faible de l'adresse mémoire cache correspondent aux cycles suivants : 00 cycle d'écriture ; 01 cycle de lecture sans incrément ; 10 cycle d'écriture masquée ; 11 cycle de lecture avec incrément.

Le circuit intégré DBC contrôle les signaux d'adresses et de données et de contrôle sur le bus iPSB9. Lorsqu'il détecte une erreur de parité ou de transfert, le circuit intégré DBC positionne le signal DINT* et le bit correspondant à l'erreur dans le registre de "status" du canal.

Les trois mots de 32 bits composant l'en-tête 75 du secteur sont la copie des registres du canal émission R6, R7 et R8 initialisés par le processeur principal 10 émetteur des données. Ces trois mots sont stockés avec le secteur dans la mémoire cache DEM et par le circuit intégré DBC recevant les données dans les registres du canal réception R13, R14 et R15.

Pour chaque cycle de transfert sur le bus local, lorsque plusieurs canaux demandent l'accès, l'un d'entre eux est sélectionné en fonction d'un ordre de priorité préétabli selon un arbitrage qui s'effectue en parallèle avec les cycles effectués sur le bus local et qui concerne le cycle suivant le cycle courant.

Les transferts de données entre le circuit intégré DBC et sa mémoire tampon 13 s'effectuent cycle par cycle selon les besoins du circuit intégré DBC et sont prioritaires,sur tous les autres transferts, la gestion des conflits d'accès au bus local étant effectuée par le circuit intégré DBC. Le circuit intégré DBC effectue les transferts de données sur le bus local lorsqu'il initie une lecture du "mapping" dans la mémoire tampon 13, lorsqu'il émet un identificateur de transfert IDT vers le circuit intégré MPC, lorsqu'il initie une lecture par le canal émission 83 ou une écriture par le canal réception 82 dans la mémoire tampon 13.

Le transfert des données entre l'interface du bus 39 de la carte fille et la mémoire tampon 13 s'effectue cycle par cycle à la demande de cette interface qui positionne les signaux EDREQ0 ou EDREQ1 pour demander le transfert d'un mot de 32 bits. Le circuit intégré DBC prend en compte cette demande en fonction de sa charge et effectue le cycle demandé en émettant l'adresse mémoire tampon 13 ainsi que les signaux EDACK0* ou EDACK1*, R/W et CYCLE*. En cas de conflit entre les deux canaux, l'arbitrage donne le contrôle du bus local alternativement à l'un et à l'autre. La nature du cycle est déterminée à partir du registre de contrôle du canal interface externe concerné. Le circuit intégré DBC peut entrelacer sur le bus local des cycles correspondant à un transfert sur l'interface du bus 39 de la carte fille , et des cycles correspondant à un transfert avec le bus central 9.

Lors d'un cycle d'écriture en mémoire cache DEM, le canal émission 83 du circuit intégré DBC effectue donc les opérations suivantes : lecture de l'adresse 91 mémoire cache du secteur dans le "mapping", les deux bits de poids faible indiquant la nature du cycle ; arbitrage et génération d'un cycle entrée/sortie 79 sur le bus iPSB9 en émettant l'identificateur de transfert IDT ; transfert du secteur formaté par le circuit intégré DBC ; fin du transfert ; vérification de la parité sur toutes les données lues sur le bus local et sur les signaux de contrôle reçus. Lors d'une lecture en mémoire cache DEM, le canal émission 83 du circuit intégré DBC effectue les opérations suivantes : lecture de l'adresse 91 mémoire cache du secteur dans le "mapping" ; arbitrage et génération d'un cycle entrée/sortie 79 sur le bus iPSB9 en émettant l'identificateur de transfert IDT ; transfert du secteur dans l'espace de données du bus 9 à l'adresse fournie par le "mapping" ; fin du transfert de secteur ; vérification de la parité sur toutes les données lues sur le bus local et sur le bus central 9 et sur les signaux de contrôle reçus.

Avant chaque secteur, le canal émission 83 effectue un accès en mémoire tampon 13 pour lire l'adresse 91 mémoire cache du secteur qu'il va émettre. Cette adresse est émise sur le bus central 9 au début du cycle espace mémoire 80 (figure 6) avec les deux bits de poids faible positionnés à 0. Entre deux secteurs, le registre R5 contenant le pointeur du "mapping" en mémoire tampon 13 est incrémenté pour permettre l'accès à l'adresse suivante.

Le cycle entrée/sortie 79 est effectué par le circuit intégré MPC de transfert des messages sur la demande du circuit intégré DBC de transfert des données ce qui permet de bénéficier de la gestion de l'arbitrage du circuit intégré MPC pour accéder au bus central 9. Le circuit intégré DBC de transfert des données positionne le signal IOSEL* ainsi que l'identificateur de transfert IDT sur le bus de données local. Lorsque le circuit intégré MPC de transfert des messages a obtenu le bus il demande au circuit intégré DBC de transfert des données d'émettre l'adresse 90 du cycle entrée/sortie sur le bus central 9 en positionnant un signal REFADR*. Ce signal est un signal asynchrone commandant directement l'émission de l'adresse 90 du cycle entrée/sortie sur le bus iPSB9. Lors de l'émission de l'adresse 90 du cycle entrée/sortie par le circuit intégré DBC, les parités sont calculées et émises par le circuit intégré MPC à partir de la valeur émise par le circuit intégré DBC sur les signaux d'adresses et de données du bus central 9. Dans ce cas là, le circuit intégré DBC n'émet pas lui-même les signaux de parités. Dans tous les autres cas d'émission d'adresses ou de données sur les signaux d'adresses et de données du bus iPSB9, le circuit intégré DBC émet également les signaux de parités correspondants. Ensuite, le circuit intégré MPC termine le cycle en émettant l'identificateur de transfert IDT positionné sur son bus par des registres de verrouillage "latche" externes au circuit intégré DBC. Au cours du cycle entrée/sortie 79, le bus iPSB9 est pris de manière prioritaire par le CSM au bénéfice du circuit intégré DBC permettant aux deux cycles entrée/sortie 79 et espace mémoire 80 d'être consécutifs et indivisibles.

L'identificateur de transfert IDT et le champ réservé sont initialisés dans le registre R3 par le processeur principal 10 avant le transfert. Le bit 31 de ce registre est remplacé par le bit SS ("Shadow Sector") lors de l'émission de l'identificateur de transfert IDT et n'a pas de signification particulière. L'identificateur de transfert IDT est valide pour tous les secteurs transférés.

Lorsque le circuit intégré DBC détecte la fin du cycle entrée/sortie 79 ayant émis l'identificateur de transfert IDT, il prend le contrôle du bus iPSB9 en pilotant les signaux de contrôle. Comme déjà dit, l'adresse 91 mémoire cache du secteur dans le "mapping" lue par le circuit intégré DBC indique dans ses bits de poids faible 0 et 1 la nature du cycle. Le circuit DBC force ces bits de poids faible à zéro lorsqu'il ajoute l'adresse mémoire cache au secteur.

Pendant le transfert des données en écriture en mémoire cache, le circuit intégré DBC effectue des cycles de lecture dans la mémoire tampon 13. Les données transitent dans le circuit intégré DBC où elles permettent de calculer le CHECKSUM, et elles sont émises sur le bus central 9.

Le canal réception 82 du circuit intégré DBC ne participe pas au protocole de "hand-shake" du transfert et peut donc recevoir les données au débit maximum (40 Mo/s). Le canal réception 82 est constamment à l'écoute du bus 9 et est sélectionné par l'identificateur de transfert IDT véhiculé par le cycle entrée/sortie 79 précédent le transfert des données.

Lors du transfert d'un secteur, le canal réception 82 du circuit intégré DBC récepteur effectue donc les opérations suivantes : décodage de l'identificateur de transfert IDT sur le cycle entrée/sortie 79; réception des données émises dans l'espace de données du bus iPSB9 (réception du mot d'état de secteur et sauvegarde, réception du numéro du secteur, sauvegarde et comparaison avec son registre interne, réception des données sur le bus central 9 et écriture dans la mémoire tampon 13) ; calcul du CHECKSUM sur l'ensemble des données reçues ; réception du CHECKSUM calculé par l'émetteur, sauvegarde et comparaison avec celui calculé ; vérification de la parité sur toutes les données lues et sur les signaux de contrôle reçus.

En cas d'erreur sur le CHECKSUM, le circuit intégré DBC émet le signal DINT* et positionne le bit correspondant du "status" du registre n° 17 indiquant une erreur de CHECKSUM. Le signal DINT* et ce bit d'erreur de CHECKSUM sont désactivés par la lecture du registre de "status" du canal.

Les canaux MPC 85 ont pour fonction de piloter les transferts sur le bus local entre le circuit intégré MPC et la mémoire tampon 13. Le circuit intégré DBC comporte deux canaux MPC 85, chacun ayant un compteur d'adresses. Le canal MPC entrée correspond à l'écriture des données provenant du circuit intégré MPC en mémoire tampon 13 et est activé par le signal IDREQ. Le canal MPC sortie correspond à l'écriture des données provenant de la mémoire tampon 13 dans le circuit intégré MPC et est activé par le signal ODREQ.

Lors d'un transfert entre le circuit intégré MPC et la mémoire tampon 13, le canal MPC 85 entrée (sortie) effectue les opérations suivantes : détection du signal IDREQ (ODREQ) indiquant une demande de transfert ; obtention du bus du circuit intégré MPC ; arbitrage interne pour l'obtention du bus local ; cycle de transfert d'un mot de 32 bits tant que le signal IDREQ (ODREQ) est positionné ; fin du transfert à la disparition du signal IDREQ (ODREQ).

Le circuit intégré DBC garde le contrôle du bus du circuit intégré MPC en laissant le signal de requête de bus MBR* positionné tant qu'un des signaux IDREQ ou ODREQ est activé.

Lors d'un transfert entre la mémoire tampon 13 et le circuit intégré MPC, le circuit intégré DBC positionne l'adresse de la donnée en mémoire tampon 13, le signal IDACK* (ODACK*) validant le transfert pour le circuit intégré MPC. Le signal R/W valide l'écriture ou la lecture dans la mémoire tampon 13. Entre deux cycles, l'adresse mémoire tampon 13 est incrémentée pour accéder au mot suivant. Le circuit intégré DBC ne contrôle pas les données échangées entre le circuit intégré MPC et la mémoire tampon 13.

La fin du transfert intervient lorsque le compteur de données du circuit intégré MPC devient nul. Ce circuit intégré MPC positionne alors un signal d'interruption vers le processeur principal 10 de la carte mère DMX correspondant. Ce processeur principal 10 reprogramme le canal lorsqu'un nouveau transfert est nécessaire.

Les canaux 84 d'interface avec le bus 39 de la carte fille ont pour fonction de piloter les transferts entre la mémoire tampon 13 et le bus 39 de la carte fille . Chaque canal 84 d'interface avec le bus 39 de la carte fille possède un compteur d'adresses et un compteur de données, ainsi que deux signaux de contrôle : EDREQ0 et EDACK0* pour le canal 0, EDREQ1 et EDACK1* pour le canal 1.

Le compteur d'adresses mémoire tampon 13 des canaux 84 d'interface avec le bus 39 de la carte fille fonctionne par incrémentation ou décrémentation selon la valeur d'un bit dans le registre de contrôle R17 ou R18 du canal.

Lors d'un transfert entre la mémoire tampon 13 et l'interface du bus 39 de la carte fille, un canal 84 d'interface avec le bus 39 de la carte fille effectue les opérations suivantes : détection du signal EDREQ qui lui est associé ; arbitrage interne pour l'obtention du bus local ; cycle de transfert d'un mot de 32 bits, tant que EDREQ est positionné ; fin du transfert.

Le circuit intégré DBC ne contrôle pas les données échangées entre l'interface du bus 39 de la carte fille et la mémoire tampon 13. A la fin du transfert le compteur de données du canal 84 devient nul et le circuit intégré DBC positionne le signal d'interruption DINT* vers le processeur principal 10 qui reprogramme le canal pour un nouveau transfert éventuel.

Le circuit intégré DBC est programmé pour gérer différents signaux et cas d'erreur rencontrés.

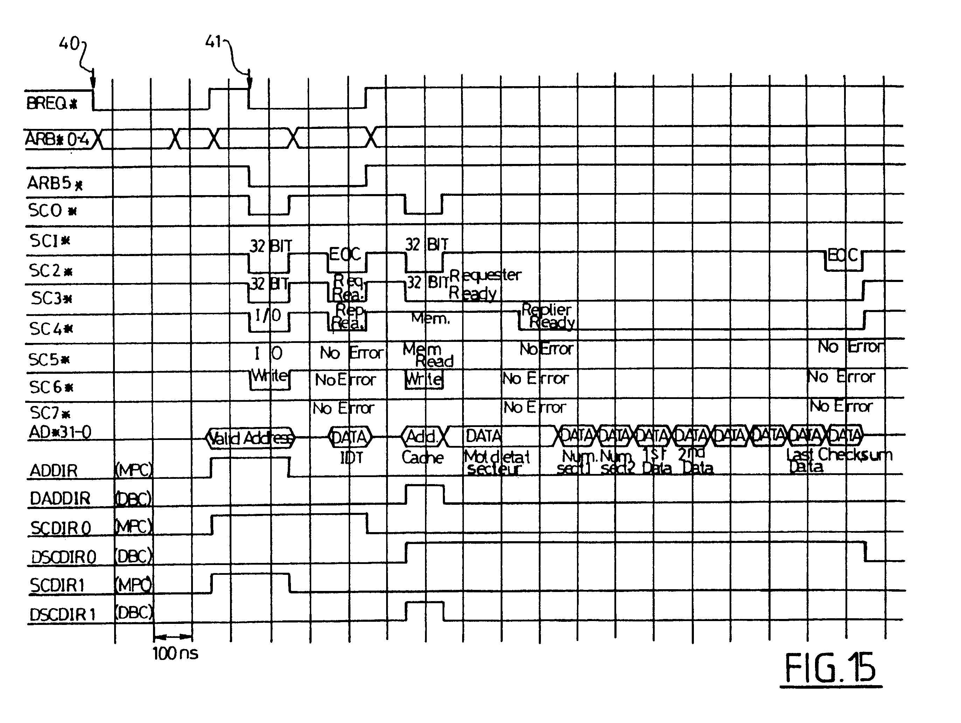

La figure 15 illustre le séquencement du transfert d'un secteur sur le bus iPSB. La flèche 40 indique une demande de bus par le circuit intégré MPC. La flèche 41 indique une requête de bus et le positionnement par le CSM d'un signal ARB* 5-0 sur reconnaissance d'un cycle entrée/sortie 79. Les différents signaux non explicites précédemment illustrés sur cette figure sont les signaux du bus iPSB9 du MULTIBUS II connus en eux-mêmes. Les différentes abréviations et expressions françaises et anglaises utilisées sur cette figure 15 sont usuelles et connues de l'homme du métier.

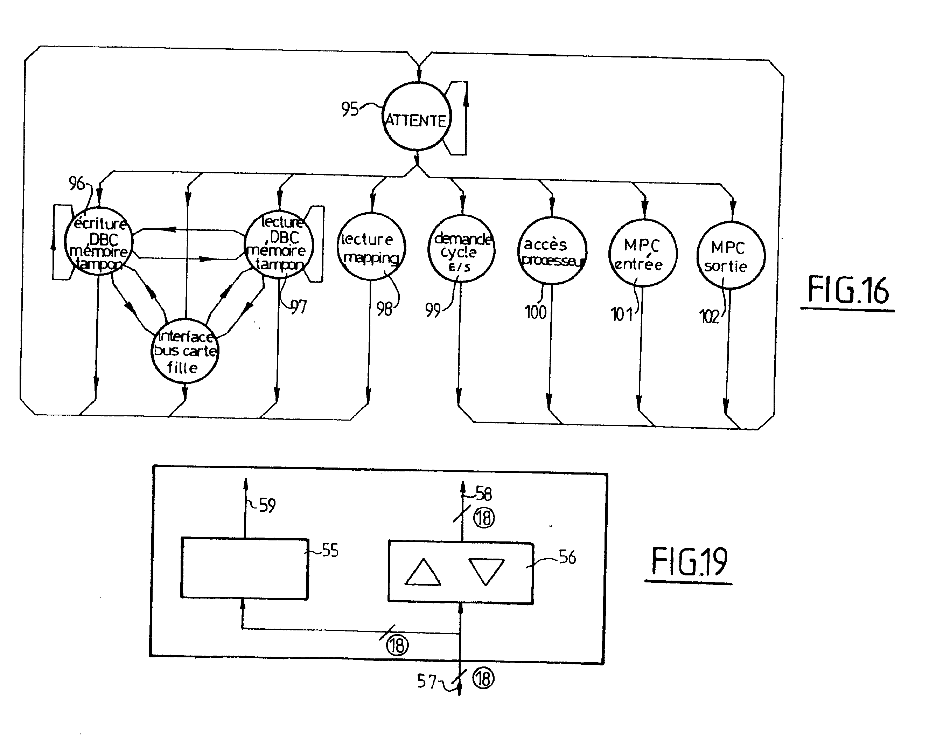

La figure 16 illustre l'enchaînement des cycles du circuit intégré DBC de transfert des données et vus du coté de la mémoire tampon 13. On y voit qu'une lecture ou une écriture en mémoire tampon et un transfert entre la mémoire tampon 13 et l'interface externe dans l'un ou l'autre sens ne nécessitent pas de cycle d'attente 95.

Les différents cycles sont les suivants : cycle d'attente 95; cycle 96 d'écriture en mémoire tampon 13; cycle 97 de lecture en mémoire tampon 13; cycle 98 de lecture de la liste d'adresses en "mapping"; cycle 99 de demande de cycle d'entrée/sortie 79; cycle 100 d'accès au processeur 10; cycle 101 sur le canal MPC entrée; cycle 102 sur le canal MPC sortie; cycle 103 sur l'interface du bus 39 de la carte fille (connecteur P3).

Le circuit intégré DBC décrit précédemment peut être réalisé grâce à l'utilisation d'un circuit intégré spécifique précaractérisé du type ASIC en technologie VLSI en "cell based" du type 1 micron double couche de métal à 25000 portes logées dans un boîtier PGA ("Pin Grid Array") 180 broches.

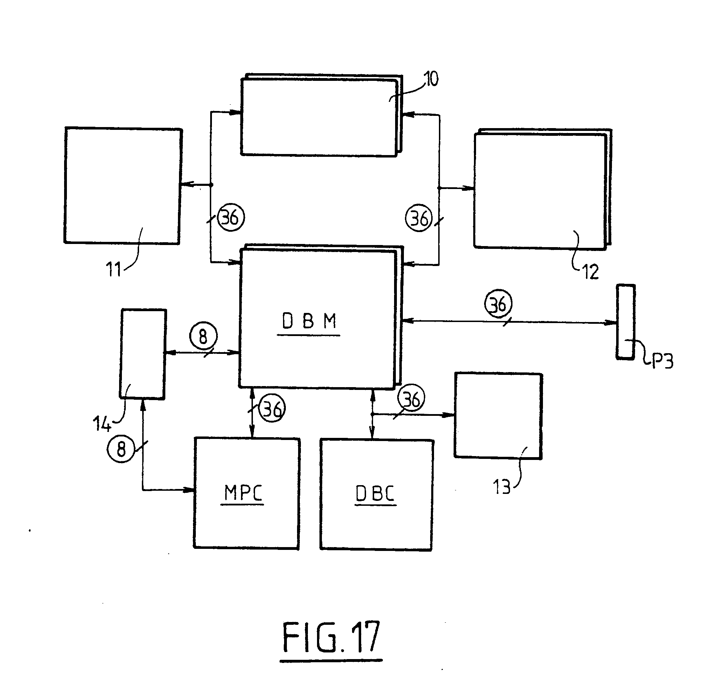

La figure 17 illustre les liaisons des circuit intégrés DBM de gestion des données avec les autres composants de la carte mère DMX. Les nombres encerclés sur cette figure correspondent aux nombres de points des bus correspondants. Cette figure est compréhensible en elle-même, compte tenu de la description précedente.

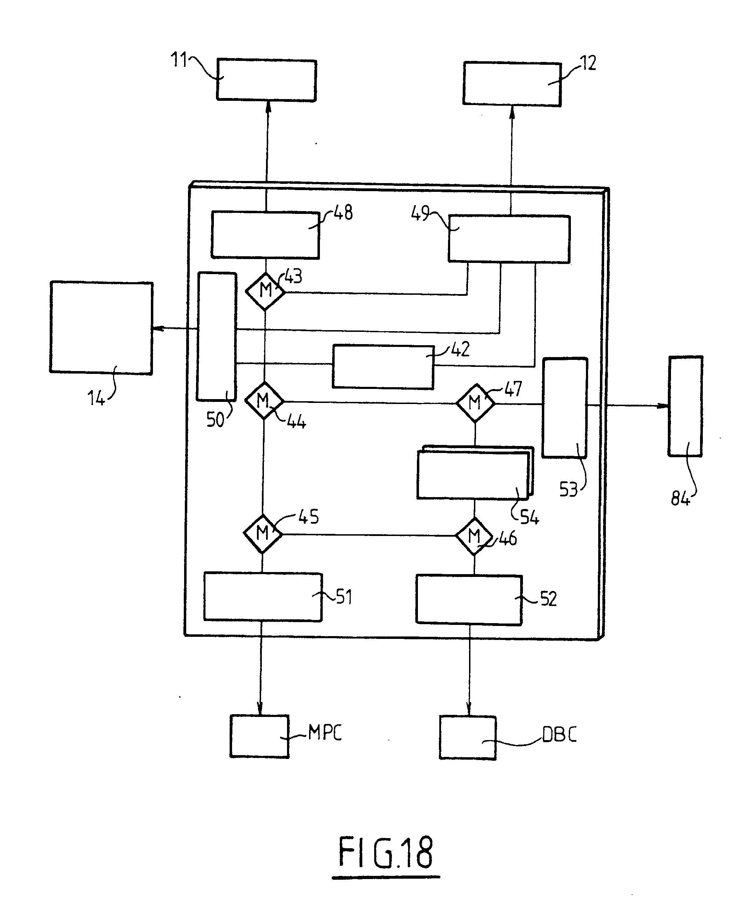

La figure 18 illustre les différentes fonctions réalisées par les circuits intégrés DBM. Sur cette figure, les références 43, 44, 45, 46 et 47 désignent des circuits multiplexeurs de bus. En effet, la fonction principale des circuits intégrés DBM de gestion des données est le multiplexage des bus de données de la carte mère DMX. Cette fonction est réalisée sous forme intégrée dans deux boîtiers DBM fonctionnellement identiques. Chaque boîtier à une largeur de bus de 16 bits + 2 bits de parité et transfert les bits de poids fort ou les bits de poids faible des bus de données. Les deux boîtiers DBM comportent des interfaces 48, 49 avec la mémoire donnée 11 respectivement la mémoire instruction 12 du processeur principal 10. Le circuit intégré DBM comporte également une interface 50 avec le microcontrôleur 14, une interface 51 avec le circuit intégré MPC de transfert de messages, une interface 52 avec le circuit intégré DBC de transfert des données et une interface 53 avec l'interface 84 du bus 39 de la carte fille . Le lien entre l'interface 84 du bus 39 de la carte fille et le circuit intégré DBC de transfert des données est constitué de deux canaux DMA indépendants. Chaque canal contient un registre de transfert chargé de l'adaptation à l'interface 84 du bus 39 de la carte fille , et quatre mémoires 54 FIFO ("First Ine First Out") de 9 bits, à savoir deux FIFO pour chaque sens de transfert. La gestion des prises de bus, la synchronisation et le pilotage des interfaces 48, 49, 50, 51, 52 et 53 sont externes au circuit intégré DBM. En effet, ce circuit intégré DBM est asservi aux différentes logiques responsables de l'administration des bus internes.

De plus, le circuit intégré DBM a pour fonction le contrôle de cohérence des différents bus internes de données. Ce contrôle de cohérence est basé sur la génération et le contrôle d'une parité octet pour les données en entrée et sur la comparaison des données émises avec leur valeur interne pour les données en sortie. Le circuit intégré DBM utilise la parité paire sur toutes les interfaces sauf sur l'interface 53 de liaison avec l'interface 84 du bus 39 de la carte fille pour laquelle la phase de la parité est programmable paire ou impaire. Le circuit intégré DBM comporte une fonction 42 de gestion des cadrages des mots entre le bus du microcontroleur 14 à 8 bits et le bus de la mémoire d'instruction à 36 bits.

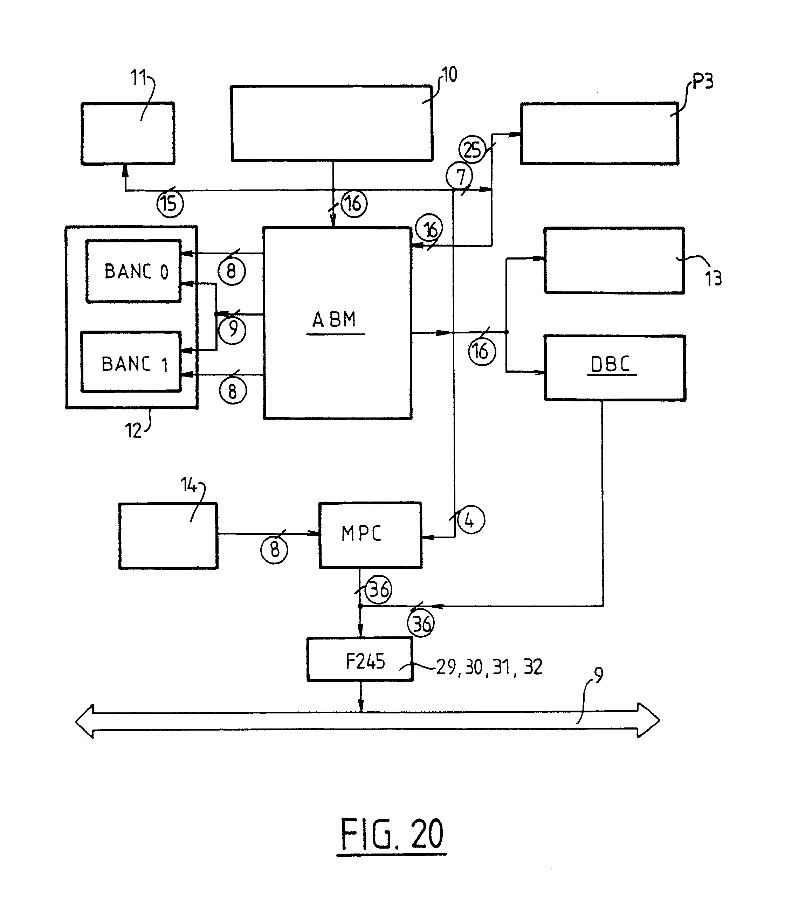

Chaque interface 48, 49, 50, 51, 52 et 53 est constituée de moyens d'adaptation électriques de bus, d'un générateur contrôleur de parité et d'un module de comparaison. La figure 19 donne l'exemple de l'interface 52 du circuit intégré DBM avec le circuit intégré DBC. L'interface comporte un contrôleur de parité 55 et un comparateur 56. La sortie 57 est reliée au bus du circuit intégré DBC et la sortie 58 est reliée à un multiplexeur 46. Le contrôleur de parité 55 émet un signal indicateur d'erreur en 59.

Un tel circuit intégré DBM peut être réalisé par un circuit intégré spécifique précaractérisé du type ASIC en technologie VLSI en "cell based" 1 micron double couche de métal 15000 portes avec un boîtier PGA 180 broches.

La figure 20 illustre les différentes liaisons du circuit intégré ABM de gestion des adresses avec les autres composants de la carte mère DMX. Sur cette figure, les nombres encerclés représentent le nombre de points des différents bus de liaison.

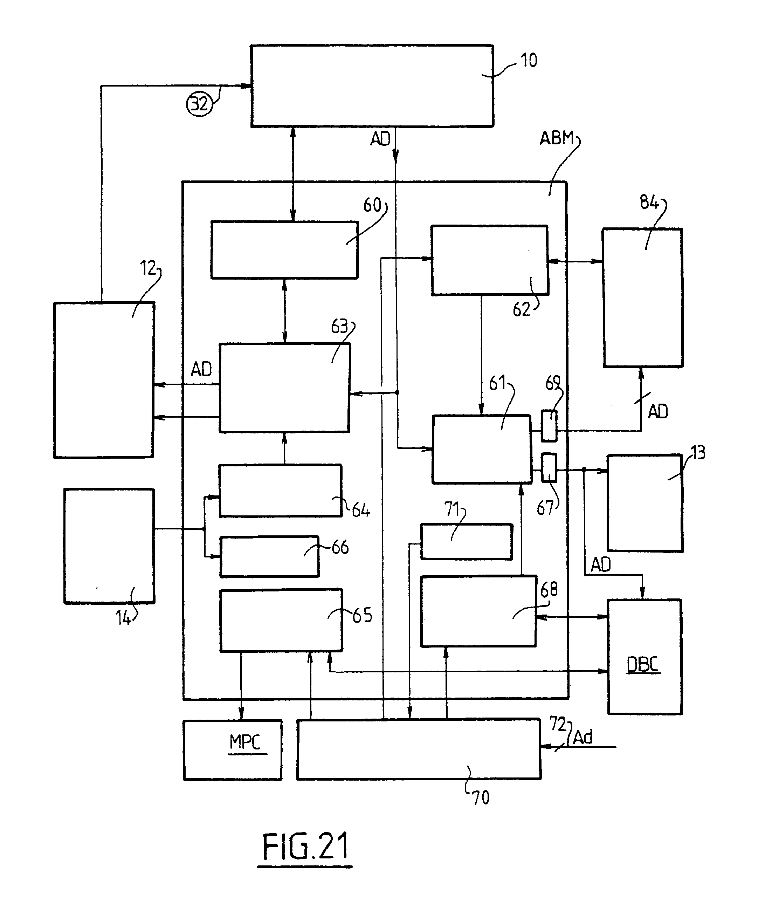

La figure 21 illustre la structure générale du circuit intégré ABM de gestion d'adresses.

Ce circuit intégré ABM de gestion d'adresses effectue la gestion des adresses dans l'environnement du processeur principal 10 sur les cartes mères DMX, le multiplexage des chemins d'adresses entre le bus d'adresses du processeur principal 10, le bus d'adresse de la mémoire tampon 13, le bus d'adresses de l'interface 84 du bus 39 de la carte fille (connecteur P3), et le bus d'adresses de la mémoire d'instructions 12 double banc du processeur principal 10. Ce circuit intégré ABM de gestion d'adresses gère également l'accès par le microcontrôleur 14 à la mémoire d'instructions 12 du processeur principal 10. Il gère également l'accès en mode "burst" du processeur principal 10 sur la mémoire d'instructions 12, et réalise la protection des adresses émises en signalant les erreurs.

Le circuit intégré ABM de gestion d'adresses comporte une interface 60 de connexion avec le bus de contrôle du processeur principal 10, et est relié avec une partie (de poids faible) du bus d'adresses du processeur principal 10. Il permet l'accès à la mémoire d'instructions 12 par le bus de données du processeur principal 10 pour l'initialisation et la lecture, et le chargement de cette mémoire 12 par le microcontrôleur 14 au démarrage. De plus, le circuit intégré ABM gère l'arbitrage pour l'accès au bus du circuit intégré MPC de transfert des messages, partagé entre le processeur principal 10 et le circuit intégré DBC de transfert des données. Egalement, il gère l'arbitrage pour l'accès à l'interface 84 du bus 39 de la carte fille , interface 84 partagée entre le processeur principal 10 et la carte fille. Le circuit intégré ABM de gestion d'adresses comporte donc un multiplexeur d'adresses 61, un circuit d'arbitrage de l'accès de l'interface 84 du bus 39 de la carte fille , la logique 63 nécessaire au fonctionnement en mode "burst" du processeur principal 10 sur la mémoire d'instructions 12, une interface 64 avec le microcontrôleur 14, des registres 66 incluant des paramètres de fonctionnement du circuit intégré ABM chargés par le microcontrôleur 14, la logique d'arbitrage 65 pour l'accès du bus du circuit intégré MPC de transfert de messages, ce bus étant partagé entre le processeur principal 10 (pour les accès aux registres internes) et le circuit intégré DBC de transfert des données (pour les transferts de données DMA en mode message et les cycles entrée/sortie), l'interface 67 avec le bus local commun au circuit intégré DBC de transfert des données et à la mémoire tampon 13, la logique 68 d'acquittement des demandes d'accès du processeur principal 10 au circuit intégré DBC de transfert des données (lecture ou écriture de registres), l'interface 69 avec le bus 39 externe destiné à la liaison avec la carte fille.

Le décodage des adresses du processeur principal 10 est effectué à l'extérieur du circuit intégré ABM par une logique programmable externe 70. Cette logique programmable externe 70 décode les poids forts d'adresses du processeur principal 10 et positionne en entrée du circuit intégré ABM un code sur 4 bits PACC3-0 indiquant le type d'accès demandé par le processeur principal 10. Ce code est utilisé par le circuit intégré ABM pour les demandes du bus du circuit intégré DBC, l'arbitrage du bus du circuit intégré MPC ou l'interface 84 du bus 39 de la carte fille . Ce code est également utilisé par les circuit intégré DBM de gestion des données pour effectuer le routage des différents bus avec le bus du processeur principal 10. La logique programmable externe 70 gère également le nombre de cycles d'attente introduit pour chaque accès.

Un compteur interne 71 du circuit intégré ABM de gestion d'adresses est utilisé pour générer un signal de dépassement de temps en cas d'absence de génération du signal DRDY* qui indique le nombre suffisant de cycles d'attente. Ce compteur 71 émet le signal d'erreur DERR* durant une période d'horloge si un code PACC3-0 d'accès à une ressource de données n'est pas suivi du signal DRDY* avant l'écoulement du temps de base de ce compteur 71 (par exemple de l'ordre de 100 ms). La logique programmable externe 70 gère également les accès erronés du processeur principal 10 (par exemple à des ressources inexistantes) en positionnant le signal d'erreur DERR*. La logique programmable externe 70 reçoit en 72 le bus d'adresses du processeur principal 10.

Un tel circuit intégré ABM correspondant aux fonctions indiquées précédemment peut être aisément réalisé par un circuit intégré spécifique précaractérisé du type ASIC en technologie VLSI en "cell based" 1 Micro double couche de métal 3500 portes sur un boîtier PGA 180 broches.

Les figures 22 à 27 illustrent des modes de réalisation de cartes filles pour un dispositif contrôleur 1 selon l'invention.

La figure 22 est un diagramme représentant un mode de réalisation d'une carte fille XMC permettant de réaliser, associée à une carte mère DMX, une carte électronique fonctionnelle DMM/DMC de gestion et d'administration. Une telle carte fille peut être réalisée d'une mémoire dynamique 105 permettant notamment la gestion de la mémoire cache par le processeur principal 10 de la carte mère DMX associée. Dans cette mémoire dynamique les listes d'adresses et de signaux de contrôles ou "mapping" représentant l'état de la mémoire cache DEM sont stockées. Le processeur principal 10 de la carte mère DMX associée à la carte fille XMC envoie ces "mapping" lors de chaque transfert de données au circuit intégré DBC de transfert des données de la carte électronique fonctionnelle qui pilote le transfert. La mémoire dynamique est donc reliée au connecteur P3 de connexion de la carte fille avec la carte mère DMX. Par ailleurs, la mémoire dynamique 105 comporte un circuit logique de contrôle de mémoire dynamique et de gestion de codes autocorrecteurs. Cette mémoire dynamique RAM 105 est accédée mot à mot sans continuité dans les accès. Sa séparation de la mémoire cache DEM permet de conserver à cette mémoire cache DEM un accès très rapide en mode "rafale".

La carte fille XMC comporte également un bloc 106 de mémoire morte EPROM de 64 Ko et EEPROM relié au connecteur P3.

Par ailleurs, la carte fille XMC comporte un circuit 107 contrôleur d'unités de mémoire de masse, par exemple un circuit contrôleur SCSI, pour la connexion directe de cette unité de mémoire de masse sur la carte DMM/DMC via le connecteur P4. Une telle unité de mémoire de masse constitue un disque interne ou disque système sur lequel les différents programmes de chargement et d'exploitation sont chargés.

La carte fille XMC comporte également des ports série 108 constitués de lignes série et de leur mémoire RAM associée. Ces ports série 108 permettent la connexion d'un terminal utilisateur pour la maintenance, le test, ...

Enfin, la carte fille XMC comporte un bloc 109 de contrôle de l'alimentation électrique du dispositif contrôleur 1 et un bloc 110 de contrôle de fonctionnement de la face avant du dispositif contrôleur 1 (voyant, interrupteur...).

Le processeur principal 10 de la carte mère DMX relié à la carte fille XMC effectue donc à la fois les fonctions de gestion DMM et les fonctions d'administration DMC. On pourrait néanmoins séparer ces deux fonctions. En pratique, la réalisation de ces fonctions se fait par programmation adéquate du processeur principal 10. L'homme du métier pourra aisément réaliser par programmation les fonctions de gestion et d'administration décrites ci-dessus, et toutes celles supplémentaires qui s'avèreraient nécessaires.

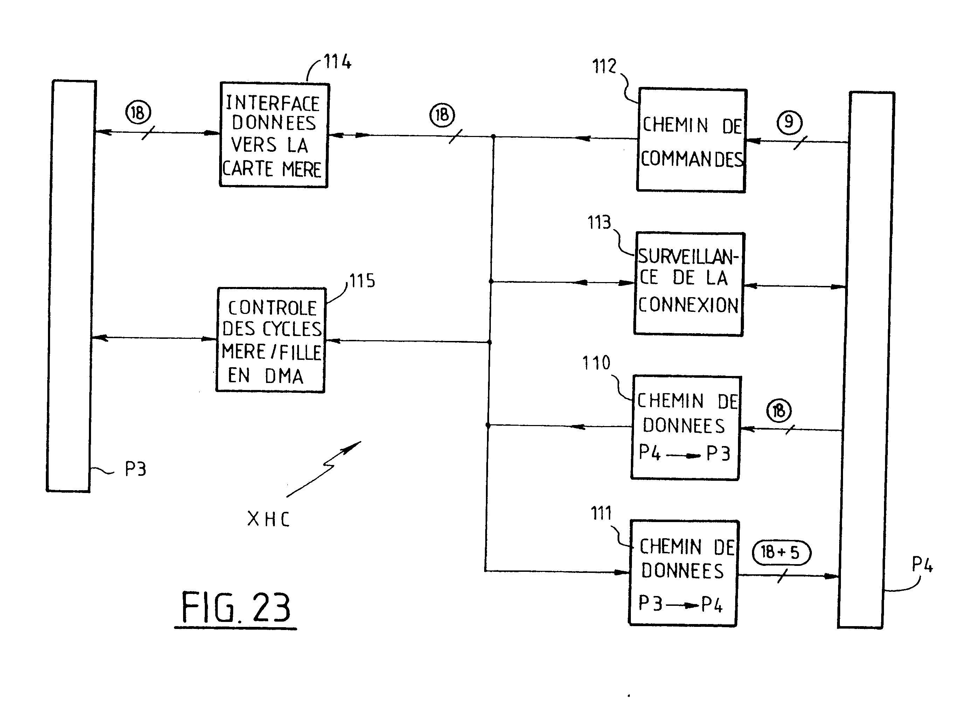

La figure 23 représente un diagramme fonctionnel d'un mode de réalisation d'une carte fille XHC qui, par connexion avec une carte mère DMX, permet de réaliser une carte électronique de couplage de l'interface générée par un dispositif contrôleur DIRAM 32 (marque déposée) de l'art antérieur. La carte fille XHC comporte essentiellement des blocs de cadrage des signaux aux formats de chaque interface. Ainsi, la carte fille XHC comporte un bloc 110 de cadrage des chemins de données circulant de l'élément périphérique connecté au connecteur P4 (via le connecteur P2 de la carte mère DMX) vers le dispositif contrôleur 1 selon l'invention, et un bloc 111 de cadrage des chemins de données circulant à partir du dispositif contrôleur 1 selon l'invention vers l'élément périphérique connecté au connecteur P4 (via le connecteur P2 de la carte mère DMX). Sur la figure 23, les nombres encerclés représentent le nombre de points des bus concernés. La carte fille XHC comporte également un bloc 112 de cadrage des chemins de commandes entre le connecteur P4 et le connecteur P3, et un bloc 113 de surveillance de la connexion. Les quatre blocs 110, 111, 112 et 113 sont reliés directement en parallèle sur le connecteur P4 et, d'autre part, au connecteur P3 via un circuit 114 d'adaptation d'interface des données vers la carte mère DMX et un circuit 115 de contrôle des cycles d'échanges entre la carte mère DMX et la carte fille XHC en mode DMA.

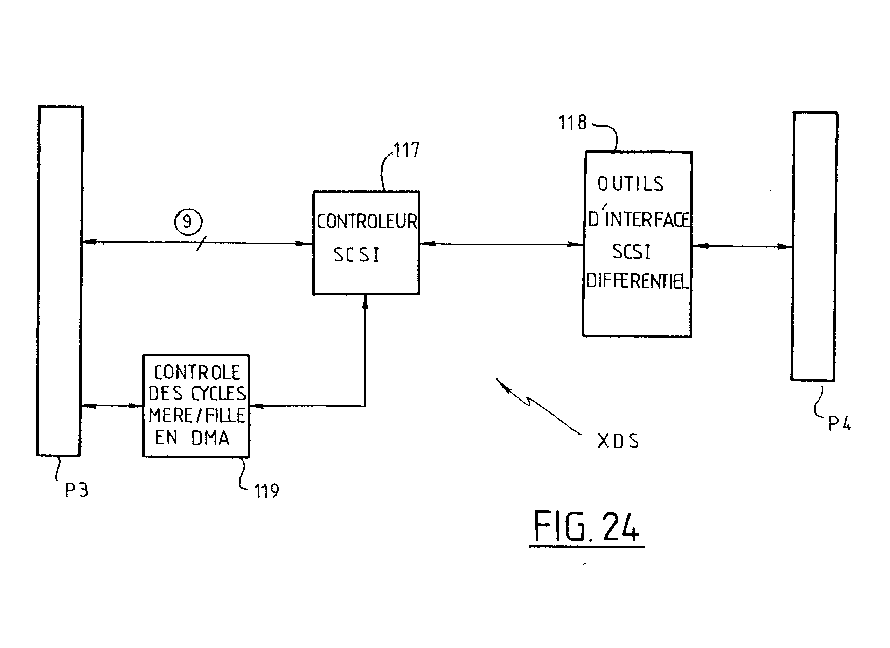

La figure 24 représente un diagramme fonctionnel illustrant un mode de réalisation d'une carte fille XDS permettant, par connexion à une carte mère DMX, la réalisation d'une carte électronique de couplage d'une unité de mémoire 4 ou d'un calculateur hôte externe 5 via une interface du type SCSI. Ainsi, une carte mère DMX et une carte fille XDS permettent la réalisation d'une carte électronique fonctionnelle de couplage DAS ou DHS réalisant l'interface SCSI. La carte fille XDS comporte un contrôleur d'interface SCSI 117 et les outils d'interface SCSI différentiels 118 entre le connecteur P3 et le connecteur P4. Par ailleurs, un bloc 119 de contrôle des cycles d'échanges entre la carte mère et la carte fille XDS en mode DMA est prévu entre le connecteur P3 et le contrôleur SCSI 117.

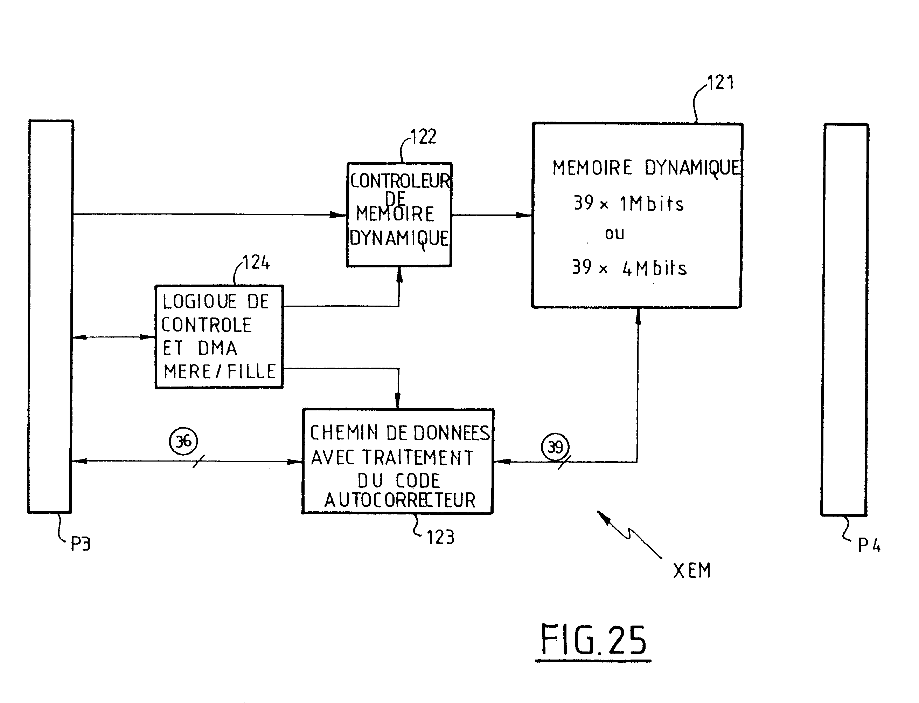

La figure 25 représente un diagramme fonctionnel d'un mode de réalisation d'une carte fille XEM permettant par connexion à une carte mère DMX la réalisation d'une carte électronique fonctionnelle DPM de traitement. Comme on le voit, cette carte fille XEM ne comporte aucune liaison vers le connecteur P4, puisqu'une telle carte électronique fonctionnelle DPM de traitement ne sert pas au couplage d'un élément périphérique et est uniquement accédée via le bus central 9. La carte fille XEM comporte une mémoire dynamique RAM 121 comportant trente neuf boîtiers mémoire de 1 mégabit ou trente neuf boîtiers mémoires de 4 mégabits accédée via un contrôleur de mémoire dynamique 122 par le connecteur P3. Entre la mémoire dynamique RAM 121 et le connecteur P3, la carte fille XEM comporte également un circuit de cadrage du chemin de données 123. Ce circuit 123 effectue également le traitement du code autocorrecteur.

Enfin, un circuit 124 logique de contrôle est relié au connecteur P3 et au bloc contrôleur de mémoire dynamique 122 et au circuit 123 de cadrage du chemin de données pour respectivement contrôler la logique d'accès à la mémoire dynamique et contrôler les cycles d'échanges entre la carte mère DMX et la carte fille XEM en mode DMA.

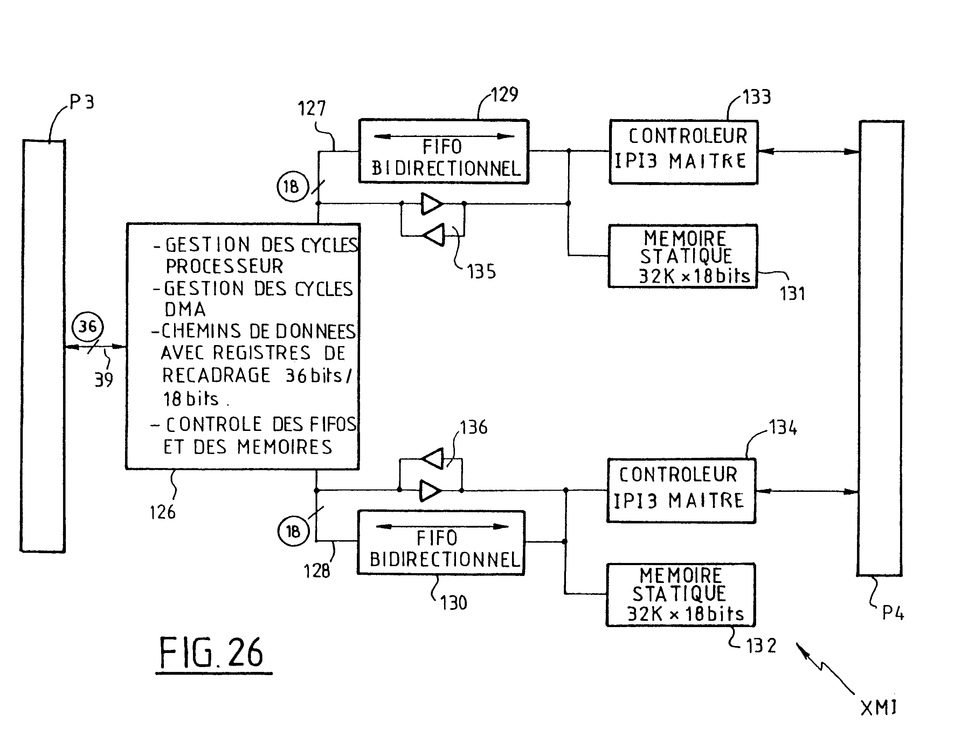

La figure 26 est un diagramme fonctionnel d'un mode de réalisation d'une carte fille XMI permettant par connexion à une carte mère DMX la réalisation d'une carte électronique fonctionnelle de couplage DAI d'une unité 3 de mémoire de masse selon l'interface IPI3. La carte fille XMI comporte essentiellement un circuit 126 d'adaptation du bus 39 à 36 bits du connecteur P3 en deux bus 127, 128 ayant chacun 18 bits et qui sont tout deux reliés au connecteur P4 de façon identique. Le circuit 126 d'adaptation inclut les fonctions de gestion des cycles du processeur principal 10 de la carte mère DMX ; de gestion des cycles d'échanges entre la carte mère DMX et la carte fille XMI en mode DMA ; de cadrage des chemins de données 36 bits/18 bits par des registres intermédiaires ; et de contrôle des FIFOs 129, 130 et des mémoires 131, 132 des bus 127 et 128 de liaison au connecteur P4. Chaque bus 127, 128 est relié au connecteur P4 à la sortie du circuit 126 d'adaptation via un contrôleur d'interface IPI3 maître 133, 134 et une mémoire FIFO bidirectionnelle 129, 130. Un circuit de comparaison 135, 136 est relié en parallèle aux FIFOs 129, 130 et une mémoire statique 131, 132 est associée au contrôleur 133, 134 entre d'une part la mémoire FIFO bidirectionnelle 129, 130 et le circuit de comparaison 135, 136, et d'autre part le contrôleur 133, 134. La mémoire statique 131, 132 est constituée par exemple de 32 Ko sur 18 bits.

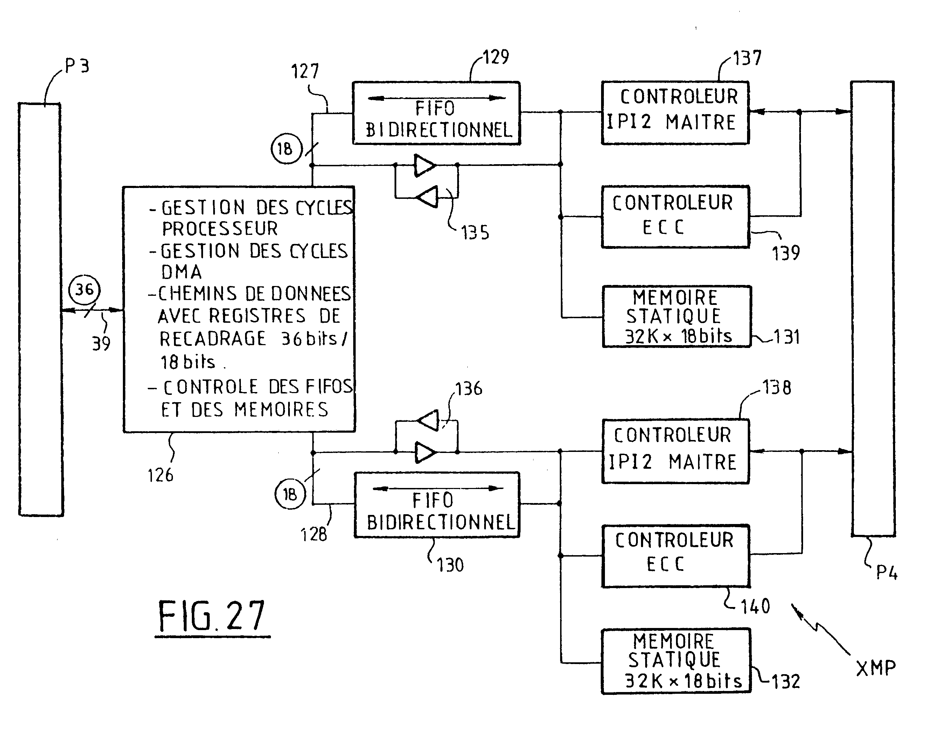

La figure 27 est un diagramme fonctionnel d'un mode de réalisation d'une carte fille XMP qui, par connexion avec une carte mère DMX, permet la réalisation d'une carte électronique fonctionnelle de couplage DAP d'unités de mémoire de masse 2 selon l'interface IPI2. Une telle carte fille XMP est similaire à la carte fille XMI décrite à la figure 26, les éléments similaires ayant les mêmes références. Ainsi, la carte fille XMP comporte un circuit d'adaptation 126 du bus 39 en deux bus 127, 128, une mémoire FIFO bidirectionnelle 129, 130 avec un circuit de comparaison 135, 136 en parallèle sur chacun des bus 127, 128 à 18 bits. Chaque bus 127, 128 est relié au connecteur P4 via un contrôleur 137, 138 d'interface IPI2 maître et une mémoire statique de 32 Ko sur 18 bits et connectée en parallèle entre la mémoire FIFO bidirectionnelle 129, 130 et le contrôleur 137, 138. La carte fille XMP comporte en outre un contrôleur ECC de gestion de code autocorrecteur 139, 140 connecté en parallèle au contrôleur IPI2 137, 138.

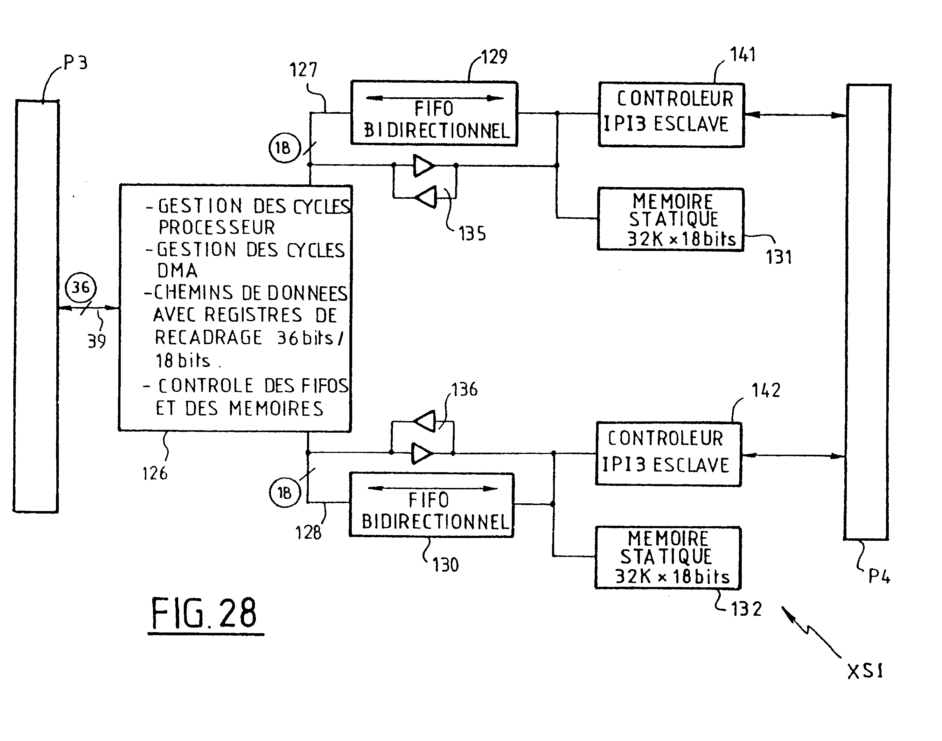

La figure 28 est un diagramme fonctionnel d'un mode de réalisation d'une carte fille XSI qui, en connexion avec une carte mère DMX, permet la réalisation d'une carte électronique fonctionnelle de couplage DHI d'un calculateur hôte externe 5 selon l'interface IPI3. Cette figure est identique à la figure 26, hormis le fait les contrôleurs IPI3 141, 142 sont des contrôleurs IPI3 esclaves, alors que sur la figure 26 les contrôleurs IPI3 133, 134 sont des contrôleurs IPI3 maîtres.

Les différentes fonctions illustrées sur les figures 22 à 28 sont connues en elles-mêmes de l'homme du métier qui sait les réaliser avec des composants connus.

Le dispositif contrôleur 1 selon l'invention comporte nécessairement une carte électronique fonctionnelle DMM de gestion et une carte électronique fonctionnelle DMC d'administration ou une carte électronique fonctionnelle DMM/DMC de gestion et d'administration. Par contre, toutes les autres cartes électroniques fonctionnelles réalisées par exemple par des cartes filles décrites aux figures 23 à 28 sont optionnelles et peuvent être remplacées et/ou complétées par d'autres cartes électroniques en fonction de la configuration souhaitée.

En pratique, il s'avère que les cartes filles décrites aux figures 22 à 28 permettant la réalisation d'un dispositif contrôleur 1 selon l'invention sont de réalisation simple et peu coûteuse, et n'ont pas à supporter par exemple de processeur indépendant.

Par ailleurs, le circuit intégré DBC de transfert des données utilisé sur chaque carte mère DMX permet d'optimiser et d'augmenter la sureté du transfert des données sur le bus 9. En particulier, le circuit intégré DBC selon l'invention rend la carte électronique fonctionnelle qui émet le transfert et la carte électronique fonctionnelle qui le reçoit indépendante de la mémoire cache DEM du point de vue logiciel. En effet, la carte électronique fonctionnelle émettrice émet les données avec la liste d'adresses et de signaux de contrôle "mapping" fournie par le processeur de gestion de la carte DMM de gestion indépendamment de la destination des données. Egalement, la carte électronique fonctionnelle qui reçoit les données transférées sur le bus central 9, les reçoit de manière séquentielle en mode "rafale" sans que leur provenance influe sur le mode de réception. par exemple, le fait que les données proviennent de la mémoire cache DEM ou de l'une des cartes électroniques fonctionnelles est ignoré à la réception. Egalement, à l'émission, la carte électronique fonctionnelle qui émet les données sur le bus ne prend pas en compte la destination finale de ces données qui peuvent par exemple être stockées en mémoire cache DEM, éventuellement dans deux parties distinctes de cette mémoire cache DEM, et/ou réceptionnées par une ou plusieurs cartes électroniques fonctionnelles. Dans tous ces transferts, le circuit intégré DBC de transfert des données qui pilote le transfert effectue un chaînage automatique, notamment entre les données stockées dans la mémoire cache DEM et les données mémorisées sur les unités 2, 3, 4 de mémoire de masse. Cela est particulièrement avantageux lorsque les secteurs que le calculateur hôte 5 demande en lecture sont pour partie dans la mémoire cache DEM et plus récents que ceux qui sont mémorisées sur l'unité de mémoire de masse correspondante, et pour partie sur une telle unité de mémoire de masse. En effet, dans un tel cas, le circuit intégré DBC de transfert de données de la carte de couplage de l'unité de mémoire de masse correspondante assure automatiquement la lecture à partir de la mémoire cache DEM et à partir de l'unité de mémoire de masse qui lui est couplée alternativement. De cette façon, on gère le chaînage des différents secteurs d'un même bloc uniquement à partir du circuit intégré DBC de transfert des données, sans aucune interférence vis-à-vis de la programmation. En l'absence d'un tel circuit intégré DBC, il faudrait en effet lire tous les secteurs mémorisés sur l'unité de mémoire de masse, tous les secteurs plus récents mémorisés dans la mémoire cache DEM et effectuer une fusion par voie de logiciel.

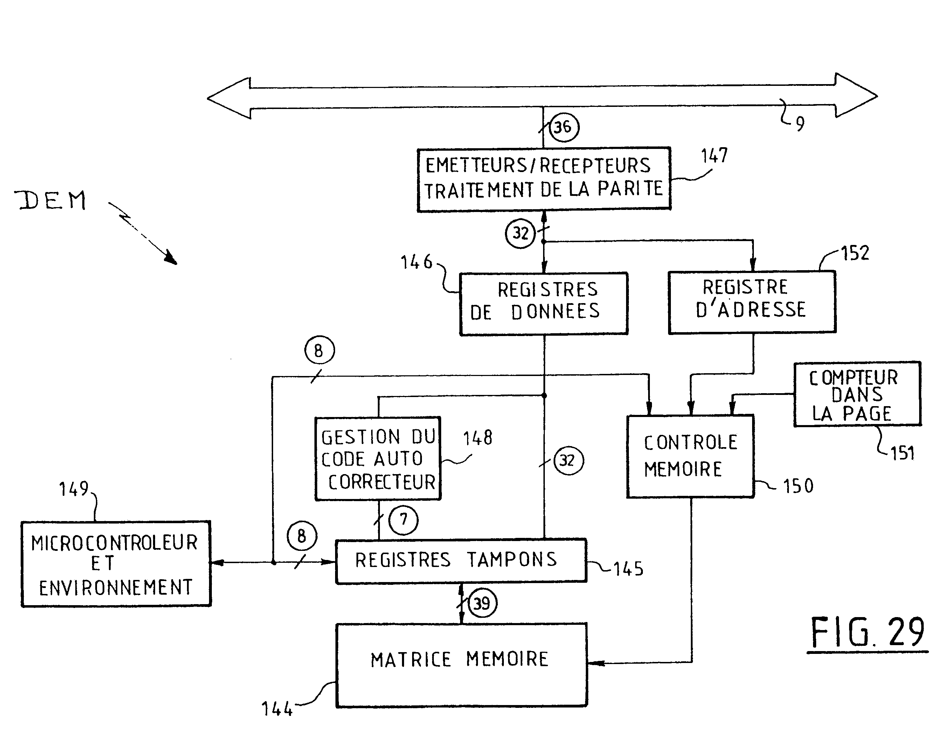

La figure 29 est un diagramme fonctionnel illustrant un mode de réalisation d'une carte électronique de mémoire cache DEM d'un dispositif contrôleur 1 selon l'invention. Une telle carte de mémoire cache est essentiellement constituée d'une matrice de mémoire RAM dynamique 144 d'une capacité pouvant varier par exemple entre 16 Mo et 256 Mo. Sur cette figure, les différents bus ont leur nombre de points représenté par des références encerclées. Entre la mémoire dynamique 144 et le bus central 9, la carte de mémoire cache DEM comprend des registres tampon 145, des registres de données 146 et des émetteur/récepteur de bus 147 incluant la fonction de traitement de la parité sur les données. Un bloc 148 de gestion du code autocorrecteur est placé entre les registres tampon 145 et les registres de données 146. Par ailleurs, la carte de mémoire cache DEM comprend un microcontrôleur 149 du type INTEL 8032 avec ses composants annexes permettant son fonctionnement (mémoire...). Le microcontrôleur 149 contrôle les registres tampon 145 et une logique de contrôle 150 de la mémoire 144, un compteur 151 est associé à la logique 150 de contrôle pour couvrir toute la mémoire RAM 144. Un registre d'adresses 152 est prévu entre la logique de contrôle 150 et les émetteur/récepteur 147 pour fournir les adresses correspondant à cette logique de contrôle 150.

## Revendications

1. Dispositif informatique de transfert de données comprenant un bus (9) et des cartes électroniques (DEM, DAx, DHx, DPM, DMM/DMC) connectées à ce bus (9) et échangeant des données sur un espace parallèle de ce bus (9), caractérisé en ce que au moins chaque carte électronique (DAx, DHx, DPM, DMM/DMC) fonctionnelle qui n'est pas une carte électronique (DEM) uniquement composée de mémoires électroniques comporte des moyens (10, 13, DBC) susceptibles de piloter un transfert de données en mode rafale sur l'espace parallèle du bus (9), et en ce que ces moyens (10, 13, DBC) susceptibles de piloter un transfert de données ont pour fonction :

   a) de formater chaque transfert de données en au moins un bloc de données de dimension constante et prédéterminée, comprenant au moins un secteur de données de dimension constante et prédéterminée, chaque secteur de données étant transféré intégralement sans interruption ni division sur le bus (9) au débit maximum admissible par le bus

   b) de vérifier l'intégrité des données de chaque secteur en rajoutant et en contrôlant des données de vérification d'intégrité à chaque secteur

   c) de piloter chaque transfert de données intégralement à partir d'une carte électronique qui effectue le chaînage des données, plusieurs cartes électroniques connectées au bus pouvant recevoir passivement et simultanément les secteurs de données du bloc transférés sur le bus (9) à partir d'au moins une carte électronique.

2. Dispositif selon la revendication 1, caractérisé en ce que les moyens (10, 13, DBC) susceptibles de piloter un transfert de données comprennent un circuit intégré (DBC) de transfert des données accédant directement à l'espace parallèle du bus (9) et dédié au formatage de chaque bloc de données en au moins un secteur et un processeur (10) qui est distinct du circuit intégré (DBC) de transfert des données et qui formate chaque transfert en au moins un bloc.

3. Dispositif selon l'une quelconque des revendications 1 et 2, caractérisé en ce que les moyens (10, 13, DBC) susceptibles de piloter un transfert de données comprennent un processeur principal (10), un circuit intégré (DBC) de transfert des données et une mémoire tampon (13) associée au circuit intégré (DBC) de transfert des données, en ce que le processeur principal (10) contrôle le circuit intégré (DBC) de transfert des données entre chaque bloc de données, en ce que le dispositif comporte des moyens (DMM) pour charger en mémoire tampon (13) une liste d'adresses et de signaux de contrôle identifiant la nature du transfert et chaque secteur du bloc par une adresse, et en ce que le circuit intégré (DBC) de transfert des données pilote le transfert de chaque bloc de données sans intervention du processeur principal, secteur par secteur par lecture successive des adresses et signaux de contrôle dans la mémoire tampon (13), de telle sorte que plusieurs cartes électroniques connectées au bus peuvent recevoir passivement les secteurs de données du bloc transférés sur le bus (9) à partir d'une carte électronique fonctionnelle ou d'une carte électronique de mémoire cache (DEM).

4. Dispositif selon la revendication 3, caractérisé en ce que la mémoire tampon (13) associée au circuit intégré (DBC) de transfert des données de chaque carte électronique fonctionnelle est utilisée pour stocker :
   – les secteurs d'un bloc à transférer,
   – la liste d'adresses et de signaux de contrôle identifiant la nature du transfert et chaque secteur du bloc par une adresse.

5. Dispositif selon l'une quelconque des revendications 3 et 4, caractérisé en ce que la liste d'adresses et de signaux de contrôle est générée par une carte électronique fonctionnelle (DMM) de gestion, et est transmise, avant le transfert de chaque bloc dans la mémoire tampon (13) via le circuit intégré (DBC) de transfert des données de la carte électronique fonctionnelle qui pilote le transfert sous le contrôle de son processeur principal (10), et en ce que la carte électronique fonctionnelle qui pilote le transfert varie selon la nature du transfert et est déterminée avant le transfert par la carte électronique fonctionnelle (DMM) de gestion.

6. Dispositif selon l'une quelconque des revendications 1 à 5, caractérisé en ce que chaque carte électronique qui effectue des transferts (en émission ou en réception) de données sur le bus (9) est soit une carte électronique de mémoire dynamique (DEM) directement reliée au bus (9) et formant une mémoire cache à accès direct, soit une carte électronique fonctionnelle (DAx, DHx, DPM, DMM/DMC) comprenant un circuit intégré (DBC) de transfert des données qui émet ou reçoit toutes les données échangées entre la carte électronique fonctionnelle et le bus (9) en les formatant.

7. Dispositif selon la revendication 6, caractérisé en ce que chaque transfert de données sur le bus (9) est écrit ou lu sur une mémoire cache (DEM) associée au bus (9).

8. Dispositif selon la revendication 5, caractérisé en ce que la carte électronique fonctionnelle qui pilote le transfert est celle qui émet les données sur le bus (9) ou, si les données sont émises à partir d'une carte électronique de mémoire dynamique (DEM) formant une mémoire cache à accès direct, une carte électronique fonctionnelle qui reçoit les données s'il en existe une, ou une carte électronique fonctionnelle quelconque dans les autres cas.

9. Dispositif selon l'une quelconque des revendications 3 à 8, caractérisé en ce que l'adresse identifiant chaque secteur est une adresse mémoire cache localisant le secteur dans une mémoire cache (DEM) associée au bus (9).

10. Dispositif selon la revendication 9, caractérisé en ce que les deux bits de poids faible de cette adresse mémoire cache lorsqu'elle est chargée en mémoire tampon (13) identifient la nature du transfert.

11. Dispositif selon la revendication 10, caractérisé en ce que les deux bits de poids faible de l'adresse mémoire cache identifient un transfert du type écriture ou lecture sans incrément ou écriture masquée ou lecture avec incrément.

12. Dispositif selon l'une quelconque des revendications 1 à 11, caractérisé en ce que les moyens (10, 13, DBC) susceptibles de piloter un transfert de données formatent chaque secteur de données en deux cycles de transfert : un cycle entrée/sortie (79) comprenant un mot identificateur de transfert (IDT) qui reste constant pour tous les secteurs d'un même bloc et qui permet l'identification de la carte électronique qui émet les données et de la(des) carte(s) électronique(s) qui reçoi(ven)t les données ; et un cycle espace mémoire (80) comprenant les données du secteur a transférer, et en ce qu'il comporte des moyens (CSM) pour rendre les deux cycles de transfert indivisibles et effectuer intégralement ces deux cycles sans interruption ni division à la suite l'un de l'autre sur le bus (9).

**13.** Dispositif selon la revendication 12, caractérisé en ce que le circuit intégré (DBC) de transfert des données comporte un canal émission et un canal réception indépendants l'un de l'autre, et un registre pour le mot identificateur de transfert (IDT) dans chacun de ses canaux émission ou réception.

**14.** Dispositif selon l'une quelconque des revendications 12 et 13, caractérisé en ce que le cycle entrée/sortie comporte une adresse utilisée pendant le cycle entrée/sortie (90).

**15.** Dispositif selon l'une quelconque des revendications 1 à 14, caractérisé en ce que les moyens (10, 13, DBC) susceptibles de piloter un transfert de données rajoutent à la fin de chaque secteur un mot de vérification CHECKSUM (75) qui est le résultat d'un algorithme de calcul effectué par ces moyens (10, 13, DBC) lors de l'émission du secteur sur le bus (9).

**16.** Dispositif selon les revendications 12 et 15, caractérisé en ce que les moyens (10, 13, DBC) susceptibles de piloter un transfert de données placent le mot de vérification CHECKSUM (76) à la fin du cycle espace mémoire (80) après les données (81).

**17.** Dispositif selon les revendications 6, 15 et 16, caractérisé en ce que le circuit intégré (DBC) de transfert des données d'une carte électronique fonctionnelle recevant un secteur calcule le mot de vérification CHECKSUM (75) lors de la réception du secteur et, en fin de réception, le compare à celui émis en fin de secteur à l'émission, et le retire du secteur.

**18.** Dispositif selon l'une quelconque des revendications 1 à 17, caractérisé en ce que les moyens (10, 13, DBC) susceptibles de piloter un transfert de données rajoutent à chaque secteur un en-tête (76) comportant le numéro du secteur à transférer.

**19.** Dispositif selon la revendication 18, caractérisé en ce que l'en-tête (75) est émis à la suite d'une adresse mémoire cache (91) localisant le secteur dans une mémoire dynamique cache (DEM) reliée au bus (9).

**20.** Dispositif selon l'une quelconque des revendications 18 et 19, caractérisé en ce que l'en-tête (75) comporte un mot d'état du secteur (77) comportant des informations de contrôle relatives au transfert du secteur (date et heure du transfert, ...).

**21.** Dispositif selon les revendications 6 et 18 à 20, caractérisé en ce que le circuit intégré (DBC) de transfert des données d'une carte électronique fonctionnelle recevant un secteur compare lors de la réception le numéro du secteur émis à l'émission avec celui qui est présent dans ou calculé par un processeur (10) de la carte électronique fonctionnelle recevant le secteur, et supprime l'en-tête du secteur.

**22.** Dispositif selon la revendication 12 et l'une quelconque des revendications 18 à 21, caractérisé en ce que les moyens (10, 13, DBC) susceptibles de piloter un transfert de données placent l'en-tête (75) au début du cycle espace mémoire (80) avant les données (81).

**23.** Dispositif selon les revendications 6 ou 7, et 15 et 18, caractérisé en ce que les secteurs mémorisés en mémoire cache incluent 1' en-tête (75) et le mot de vérification CHECKSUM (76).

**24.** Dispositif, selon l'une quelconque des revendications 3 à 23, contrôleur d'unités de mémoire de masse (2, 3, 4) comprenant des cartes électroniques fonctionnelles qui sont des cartes électroniques de couplage (DAx, DHx) d'au moins un élément périphérique (2, 3, 4, 5), à savoir au moins une carte électronique de couplage (DHx) d'au moins un calculateur hôte externe (5) et au moins une carte électronique de couplage (DAx, DHx) d'au moins une unité de mémoire de masse ( 2, 4 ) ou d'au moins un ensemble d'unités de mémoire de masse, ces cartes électroniques de couplage (DAx, DHx) étant connectées à un bus (9) et permettant la connexion dudit élément périphérique (2, 3, 4, 5) au dispositif contrôleur (1), caractérisé en ce qu'au moins chaque carte électronique de couplage d'au moins un élément périphérique est constituée d'une carte mère (DMX) directement connectée au bus (9) et gérant les transferts sur le bus (9), et d'une carte fille définie en fonction des tâches spécifiques propres à la carte électronique de couplage et qui est connectée à la carte mère (DMX), en ce que les cartes mères (DMX) d'au moins toutes les cartes électroniques de couplage (9) sont toutes identiques, et en ce que chaque carte mère (DMX) comporte le processeur principal (10) qui formate chaque transfert de données en au moins un bloc et gère le fonctionnement des différents composants de la carte électronique de couplage (DAx, DHx), le circuit intégré (DBC) de transfert des données, et la mémoire tampon (13) associée au circuit intégré (DBC) de transfert de données.

**25.** Dispositif selon la revendication 24, caractérisé en ce qu'il est constitué d'un bus central unique (9) auquel au moins une carte électronique de mémoire cache (DMX) et des cartes électroniques fonctionnelles sont directement connectées, chaque carte électronique fonctionnellle étant constituée d'une carte mère (DMX) commune à toutes les cartes électroniques fonctionnelles et d'une carte fille qui est propre à chacune d'entre elles, et en ce que les cartes mères (DMX) de toutes les cartes électroniques fonctionnelles effectuant des transferts de données sur le bus (9) sont toutes identiques.

**26.** Dispositif selon la revendication 25, caractérisé en ce que le bus (9) est un bus standard synchrone acceptant des données sous 32 bits à haut débit, et dont l'interface est gérée par un circuit intégré standard d'interface (MPC) supporté par chaque carte mère (DMX).

**27.** Dispositif selon l'une quelconque des revendications 25 et 26, caractérisé en ce que chaque carte mère (DMX) d'une carte électronique fonctionnelle comporte au moins un circuit intégré (ABM) de gestion d'adresses ayant pour fonction :
– la gestion des adresses et chemins d'adresses internes de cette carte,
– la gestion de l'initialisation et les microdiagnostics du processeur principal (10),
– La gestion et la vérification des adresses émises par le processeur principal (10) et la signalisation d'erreurs éventuelles,
– et au moins un circuit intégré (DBM) de gestion de données ayant pour fonctions :
– la gestion des bus de données internes de cette carte,
– la protection des chemins de données de cette carte par parité octet.

**28.** Dispositif selon l'une quelconque des revendications 25 à 27, caractérisé en ce qu'il comporte au moins une carte électronique (DMC) d'administration comprenant au moins un processeur principal d'administration du dispositif contrôleur (1) ayant notamment pour fonction de réaliser les opérations de démarrage et d'arrêt du dispositif contrôleur (1), d'effectuer les opérations nécessaires en cas d'anomalie, de détecter les anomalies et de permettre la définition de la configuration, d'adresser régulièrement une requête à tous les processeurs pour demander leur état et de considèrer en faute et éliminer de la configuration tout processeur quine répond pas à la requête dans un temps donné et au moins une carte électronique fonctionnelle (DMM) de gestion comprenant au moins un processeur principal (10) de gestion du dispositif contrôleur (1) ayant notamment pour fonction de superviser les transferts de données sur le bus (9) en établissant la liste d'adresses et de signaux de contrôle nécessaires au transfert et en chargeant cette liste dans la mémoire tampon (13) de la carte qui pilote le transfert, et de gérer l'organisation d'une mémoire cache (DEM).

**29.** Dispositif selon la revendication 28, caractérisé en ce que la carte électronique (DMC) d'administration et la carte électronique de gestion (DMM) sont confondues en une seule et même carte électronique (DMM/DMC) d'administration/gestion dont le processeur principal (10) effectue les fonctions d'administration et de gestion.

**30.** Dispositif selon l'une quelconque des revendications 25 à 29, caractérisé en ce qu'il comporte au moins une carte électronique (DPM) comprenant au moins un processeur principal (10) de traitement effectuant des traitements sur des données -notamment sur des données stockées dans des unités de mémoire de masse (2, 3, 4) ou dans une mémoire cache (DEM) - pour le compte d'au moins un calculateur hôte externe (5).

FIG.1

FIG.2

FIG.3

FIG. 4

XMC,
X HC, XDS
XEM, XMi
XSi

P 3

P 4

DMX

P2

P1

## FIG.5

bit 31                                    bit 0

| Adresse cycle E/S | 90 |

| IDT | 91 |

79

| Adresse mémoire cache | 77 |

| Mot d'Etat Secteur |

ENTETE 75

| Numéro du secteur | poids forts |

| | poids faibles | 78 |

D A T A

81

80

| CHECKSUM | CHECKSUM |

76

## FIG.6

FIG.7

FIG.8

FIG.10

Registres généraux

Registres canal émission

Registres canal réception

Registres canaux MPC

Registres canaux interface BUS CARTE FILLE

FIG.11

FIG.12

FIG.13

FIG.14

FIG.15

BREQ*

ARB*0-4

ARB5*

SCO*

SC1*    32 BIT    EOC    32 BIT    EOC

SC2*    32 BIT    Req    32 BIT    Requester
                  Ready           Ready

SC3*    I/O    Rep    Mem.    Replier
                Ready          Ready

SC4*

SC5*    I O    No Error    I    Mem    No Error    No Error
                                Read

SC6*    Write    NoError    Write    Write    No Error    No Error

SC7*    No Error    No Error    No Error

AD*31-0    Valid Address    DATA    Add    DATA    DATA DATA DATA DATA DATA DATA
                            IDT     Cache   Mot data    Num Num 1st 2nd    Last Checksum
                                            sector      sec1 sec2 Data Data    Data

ADDIR (MPC)

DADDIR (DBC)

SCDIR0 (MPC)

DSCDIR0 (DBC)

SCDIR1 (MPC)

DSCDIR1 (DBC)

100 ns

40    41

EP 0 459 877 A1

95 — ATTENTE

96 — écriture DBC mémoire tampon

lecture DBC mémoire tampon — 97

Interface bus carte fille

lecture mapping — 98

demande cycle E/S — 99

accès processeur — 100

MPC entrée — 101

MPC sortie — 102

FIG.16

59

58
⑱

55

56

⑱

57 — ⑱

FIG.19

FIG.17

FIG.18

FIG. 20

FIG.21

EP 0 459 877 A1

MEMOIRE DYNAMIQUE RAM

ZONE DE GESTION DE MEMOIRE CACHE

LOGIQUE DE CONTROLE :
 -DE MEMOIRE DYNAMIQUE
 -DE CODE AUTOCORRECTEUR

105

106

107

108

109

110

MEMOIRE
MORTE
64 Ko

CONTROLEUR
SCSI
DISQUE
INTERNE

—RAM
-LIGNES
SERIE

CONTROLE
ALIMENTATION

CONTROLE
FACE
AVANT

P3

XMC

P4

FIG. 22

**114**

INTERFACE DONNEES VERS LA CARTE MERE

**112**

CHEMIN DE COMMANDES

**113**

SURVEILLANCE DE LA CONNEXION

**115**

CONTROLE DES CYCLES MERE / FILLE EN DMA

**110**

CHEMIN DE DONNEES P4 → P3

**111**

CHEMIN DE DONNEES P3 → P4

P3

P4

XHC

18 + 5

FIG. 23

EP 0 459 877 A1

EP 0 459 877 A1

CONTROLEUR SCSI — 117

OUTILS D'INTERFACE SCSI DIFFERENTIEL — 118

9

CONTROLE DES CYCLES MERE/FILLE EN DMA — 119

P3

P4

XDS

FIG. 24

FIG.25

FIG.26

FIG.27

EP 0 459 877 A1

FIG.28

EP 0 459 877 A1

DEM

EMETTEURS/RECEPTEURS TRAITEMENT DE LA PARITE — 147

REGISTRE D'ADRESSE — 152

COMPTEUR DANS LA PAGE — 151

REGISTRES DE DONNEES — 146

CONTROLE MEMOIRE — 150

GESTION DU CODE AUTO CORRECTEUR — 148

REGISTRES TAMPONS — 145

MATRICE MEMOIRE — 144

MICROCONTROLEUR ET ENVIRONNEMENT — 149

FIG. 29

Office européen
des brevets

**RAPPORT DE RECHERCHE EUROPEENNE**

Numero de la demande

EP    91 40 1336

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.5 ) |
| X | EP-A-0 364 849 (SIEMENS) <br> * le document en entier * <br> --- | 1 | G06F13/42 <br> G06F3/06 |
| D,A | US-A-4 570 220 (INTEL) <br> * le document en entier * <br> --- | 1-3 | |
| A | EP-A-0 094 177 (DEC) <br> * le document en entier * <br> --- | 1-3 | |
| A | ELECTRONIQUE INDUSTRIELLES. <br> no. 168, 11 Décembre 1989, PARIS FR <br> pages 34 - 37; <br> E. BOST: 'Formats et protocoles de passage de message sur le Multibus II ' <br> * le document en entier * <br> --- | 1,2 | |
| A | EP-A-0 272 834 (AT & T) <br> * le document en entier * <br> ----- | 1 | |
| | | | **DOMAINES TECHNIQUES RECHERCHES (Int. Cl.5 )** |
| | | | G06F |

Le présent rapport a été établi pour toutes les revendications

| Lieu de la recherche | Date d'achèvement de la recherche | Examinateur |
|---|---|---|
| LA HAYE | 11 SEPTEMBRE 1991 | S.M. Gill |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)